(19) Europäisches Patentamt
European Patent Office
Office européen des brevets

(11) **EP 4 118 492 B1**

(12) **EUROPEAN PATENT SPECIFICATION**

(45) Date of publication and mention
of the grant of the patent:
**06.08.2025 Bulletin 2025/32**

(21) Application number: **20923987.0**

(22) Date of filing: **17.12.2020**

(51) International Patent Classification (IPC):
$H02M\ 7/483^{(2007.01)}$   $H02M\ 7/487^{(2007.01)}$
$H02M\ 7/5387^{(2007.01)}$   $H02M\ 1/00^{(2006.01)}$

(52) Cooperative Patent Classification (CPC):
**H02M 7/53876; H02M 1/0012; H02M 7/483;
H02M 7/4835; H02M 7/487;** H02M 7/4837

(86) International application number:
**PCT/TR2020/051318**

(87) International publication number:
**WO 2021/183077 (16.09.2021 Gazette 2021/37)**

(54) **A NEW SPACE VECTOR MODULATION METHOD FOR MULTI-LEVEL CONVERTERS**

NEUES RAUMVEKTORMODULATIONSVERFAHREN FÜR MEHRPEGELWANDLER

NOUVEAU PROCÉDÉ DE MODULATION VECTORIELLE SPATIALE POUR CONVERTISSEURS MULTINIVEAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.03.2020 TR 202003888**

(43) Date of publication of application:
**18.01.2023 Bulletin 2023/03**

(73) Proprietor: **Yildiz Teknik Universitesi
34220 Istanbul (TR)**

(72) Inventors:
• **OZKILIC, Mustafa Cem
  34220 Esenler/Istanbul (TR)**
• **OBDAN, Atiye Hulya
  34220 Esenler/Istanbul (TR)**
• **OZCIRA OZKILIC, Selin
  34220 Esenler/Istanbul (TR)**

(74) Representative: **Kaya, Erdem
Erdem Kaya Patent Inc.
Konak Mahallesi Kudret Sk.
Elitpark Park Sit. Ofisler Apt.
No: 12/27
16110 Nilüfer/Bursa (TR)**

(56) References cited:
CN-A- 102 355 137     CN-B- 101 291 118
ES-A1- 2 733 738     US-A1- 2014 016 382
US-A1- 2014 050 000

• **CHAMARTHI PHANIKUMAR ET AL: "Simplified
Implementation Scheme for Space Vector Pulse
Width Modulation of n-Level Inverter With Online
Computation of Optimal Switching Pulse
Durations", IEEE TRANSACTIONS ON
INDUSTRIAL ELECTRONICS, IEEE SERVICE
CENTER, PISCATAWAY, NJ, USA, vol. 63, no. 11,
1 November 2016 (2016-11-01), pages 6695 -
6704, XP011625206, ISSN: 0278-0046, [retrieved
on 20161007], DOI: 10.1109/TIE.2016.2586438**
• **MASSOUD A M ET AL: "Systematic analytical-
based generalised algorithm for multilevel space
vector modulation with a fixed execution time",
THE INSTITUTION OF ENGINEERING AND
TECHNOLOGY. JOURNAL,, vol. 1, no. 2, 5 June
2008 (2008-06-05), pages 175 - 193, XP006031138,
ISSN: 1755-4543, DOI: 10.1049/IET-PEL:20060445**
• **KARTICK CHANDRA JANA ET AL: "A Simple and
Generalized Space Vector PWM Control of
Cascaded H-Bridge Multilevel Inverters",
INDUSTRIAL TECHNOLOGY, 2006. ICIT 2006.
IEEE INTERNATIONAL CONFERENCE ON, IEEE,
PI, 1 December 2006 (2006-12-01), pages 1281 -
1286, XP031177948, ISBN: 978-1-4244-0725-5**

• OVALLE ANDRES ET AL: "A Flexible Nonorthogonal-Reference-Frame-Based SVPWM Framework for Multilevel Inverters", IEEE TRANSACTIONS ON POWER ELECTRONICS, INSTITUTE OF ELECTRICAL AND ELECTRONICS ENGINEERS, USA, vol. 32, no. 6, 1 June 2017 (2017-06-01), pages 4925 - 4938, XP011640896, ISSN: 0885-8993, [retrieved on 20170210], DOI: 10.1109/TPEL.2016.2602324

## Description

### TECHNICAL FIELD

The invention relates to multi-level power converters used in power electronics applications and a multi-level space vector modulation method used in the control of these multi-level power converters.

### PRIOR ART

Two-level converters for power electronics applications are the most basic and generally the first preferred converter type encountered in power electronics circuits thanks to their easy control. Total harmonic distortion (THD) formed by this type of converters causes decreasing of the operating quality of peripheral systems in network connected systems and increasing of harmonic losses in loads such as motors. Therefore, system design with a low THD value is important.

In order to decrease the THD value, it is necessary to increase the switching frequency of the two-level converters. In this case, the system efficiency decreases. However, in order to increase the efficiency without increasing the THD value of a load such as a network connected system or motor is possible by using a multi-level converter. Increasing number of the power electronic elements that need to be controlled against this advantage provided by multi-level converters increases the system complexity.

Methods such as multi-level carrier-based SPWM (sinusoidal PWM), selective harmonic elimination (SHE), and multi-level space vector modulation are used for the control of multi-level converters. Compared to other methods, the advantage of multi-level space vector modulation is that it increases the system security because the state variables required for the applicability of the method become interchangeable (voltage spectrum improvement, switching frequency optimization, capacitor voltage balance, etc.). As the converter level increases, the mathematical operations required for the application of space vector modulation increase and the selection of suitable state components based on increasing number of backup state vectors and calculation of vector periods become more complicated, and thus multi-level space vector modulation becomes hard to apply.

In the multi-level space vector diagram, in which sector the end point of the reference voltage vector is first in and then which lower triangle is in the sector should be found. This lower triangle is used for two purposes. The first purpose is to use the periods of the vectors corresponding to the lower triangle corners to calculate the residence time of the switching elements required to form the reference voltage vector.

The second purpose is to use capacitor voltage balance depending on the selection of the order of the state components corresponding to these corners. By providing the capacitor voltage balance in multi-level converters, it is important to prevent the multi-level converters to rise such that they endanger the breakdown voltages of the switches to which they are connected.

Considering the above-mentioned information, increase in the amount of mathematical calculation causes overuse of the microprocessor, digital signal processor etc. resources depending on the increase in the number of converter levels during the application of space vector modulation to multi-level converters. This situation causes the use of high-performance microprocessors with higher processing speeds and thus to an increase in costs. In order to avoid this, methods to facilitate the application of space vector modulation to multi-level converters are known in the art.

In the documents Seo, J.H., Choi, C.H., and Hyun, D.S., (2001). "A New Simplified Space-Vector PWM Method for Three-level Inverters", IEEE Transactions on Power Electronics, (16)4, 545-550 and Han, Y., Fan, X., and Zhao, Z., (2011). "A New Flux Observer Based on Voltage Reconstruction for Three-Level DTC Inverter", Power Electronics and Drive Systems (PEDS), Singapore, 5-8 December 2011, 72-76, they developed the method of reforming the three-level converter phase voltages over the two-level phase voltage reformation method. In the study, six two-level converter state diagrams are placed at the corners of one two-level converter state diagram. By adding compensation voltage values to the centers of each hexagon, the transition from two-level converter vector plane to three-level converter vector plane was provided. In this method, the location of the reference voltage vector and the period of the space vectors new calculated. Information was given on how the developed neutral point potential balance was provided and information was given about the application of this method to multi-level converters. It has been noted that it can be applied to high-level converters by using lower level converter space vector diagrams, but the mathematical calculation load increases as the converter level increases.

With document Hu, L., Wang, H., Deng Y., & He, X.N., (2004). With the document "A Simple SVPWM Algorithm for Multilevel Inverters", IEEE 35th Annual Power Electronics Specialists Conference (PESC 04), 20-25 June 2004, Aachen, 3476 - 3480, they defined a new two-axis coordinate system from the perpendicular coordinate system with an angle of 60° between them. In this coordinate system, the voltage vectors are defined on the basis of coordinates. The reference voltage was calculated in terms of axis voltages with the help of the law of cosine, and the dependent vector periods new obtained. The developed algorithm was experimentally performed on the three-level converter, and information was given on how the neutral point potential balance was performed and about the application of this method to multi-level converters. It has not been noted how to determine the state variables corresponding to the lower triangle corners in multi-level converters.

For the two-level space vector modulation application that can be applied to multi-level converters, they divided the reference voltage vector into two parts as offset and two-level reference vector with the document Song, Q., Liu, W., Yan, G., and Chen, Y., (2003). "DSP-Based Universal Space Vector Modulator for Multilevel Voltage-source Inverters", The 29th Annual Conference of the IEEE Industrial Electronics Society (IECON'03), Roanoke, 2-6 November 2003, 1727 - 1732. Offset voltage vectors were obtained by taking the integer component of the three phase voltage vectors. The remaining two-level reference vector was used to calculate the vector time periods and related two-level space vectors with the help of standard two-level space vector modulation formulas. Finally, the multilevel converter reference vector synthesis was obtained by collecting the offset voltage vectors and the two-level space vectors. The developed algorithm was experimentally performed on the five-level converter. It has been noted that the study related to providing the neutral point potential balance was carried out, but the method does not include the selection of reserve vectors required for the neutral point balance.

With the document Wan, Y., and Jiang J., (2009). "The Study of FPGA-based Three-Level SVM NPC Inverter", IEEE 6th International Power Electronics and Motion Control Conference IPEMC '09, 17-20 May 2009, Wuhan, 1470 - 1474, they used the inequalities obtained by lines drawn to coincide with the edges of the equilateral triangle in a sector in order to find the reference vector end point in the three-level space vector diagram. According to the triangle number, the voltage vectors were determined and their periods were calculated. The results were given by simulating the three-level converter of the developed algorithm. There has been no mention of a study to provide neutral point balance. The study was carried out for the three-level inverters, but applying it to multi-level inverters will increase the complexity.

With the document Shu, Z., Tang, J., and Lian, J., (2007). "An Efficient SVPWM Algorithm with Low Computational Overhead for Three-Phase Inverters", IEEE Transactions on Power Electronics, 22(5), 1797-1805, they defined new intermediate values instead of using $\alpha$-$\beta$ axis voltages directly due to the irregular coefficients in the standard sector finding and vector time calculation formulas used for SVPWM. These intermediate values were used in the process of finding a sector from a ready table. It has been also noted that these values can be used in the application of space vector modulation to the multi-level converter in calculating vector periods depending on the type of triangle within any sector. The developed algorithm has been experimentally performed on the two-level converter. It has been said that it can also be used for the multi-level converter application. Information was given about the application of the proposed method to the multi-level converters. However, in the case of multi-level converter application, no information was given to provide the neutral point potential balance.

With the document Yang, R., Wang, G., and Yu, Y. (2010). "A Fast Generalized Multilevel Voltage SVPWM Algorithm Based on Voltage Decomposition", 5th IEEE Conference on Industrial Electronics and Applications (ICIEA), 15-17 June 2010, Taichung, 1220 - 1224 they proposed a generalizable, fast SVPWM control method based on phase voltage projection in order to speed up the SVPWM algorithm, facilitate its analysis and form a general switching sequence. As well as the reference voltage projection, they made calculations of space vector periods. The reference voltage was formed with two phase voltages, the voltage of the other phase was assumed to be zero and simplification was provided by repeating the space vector diagram for an angle of 120°. The switching sequence and the selection of the backup vectors related to it were performed. The simulation results of the developed algorithm were given, but the study was not transferred to the application.

With the document Shu, Z., Ding, N., Chen, J., Zhu, H., and He, X., (2013). "Multilevel SVPWM with DC-Link Capacitor voltage Balancing Control for Diode-Clamped Multilevel Converter Based STATCOM", IEEE Transactions on Industrial Electronics, (60)5, 1884 - 1896., instead of switching to circular axis coordinates where $\alpha$-$\beta$ axis voltages are formed, it was switched to an elliptical coordinate system where $\alpha'$-$\beta'$ axis voltages are formed. In elliptic coordinates, it has been shown that the hypotenuses of the obtained triangle structures are two common types of isosceles right triangles. By using the integer parts of the values obtained during the transition to the new coordinate system, in which the type of triangle there is the reference vector end point was found and the vector periods were calculated according to this triangle type. The developed algorithm was experimentally performed on the five-level converter, and a study related to providing the neutral point potential balance was carried out.

With the document Trabelsi, M., Ben-Brahmin, L., Yokoyama, T., Kawamura, A., Kurosawa, R., and Yoshino T., (2012). "An Improved SVPWM Method for Multilevel Inverters", 15th International Power Electronics and Motion Control Conference (EPE/PEMC), 4-6 September 2012, Novi Sad, LS5c.1-1 - LS5c.1-7, the two-level space vector modulation based multi-level space vector modulation method that can be applied to the multi-level converters was proposed. In this method, sector finding process was performed by using $\alpha$-$\beta$ axis voltages and the angle $\theta$ made by the reference voltage with the $\alpha$-axis was found. Triangles in a sector were divided into two types by using $\alpha$-$\beta$ axis voltages. By using angle and trigonometric magnitudes, two variables were defined so that the space vector plane is cut by nested hexagons and horizontal planes depending on the number of levels. By using $\theta$ angle and trigonometric magnitudes with these variables, vector periods were calculated for each triangle type mentioned above. The results were given by simulating the developed algorithm with the multi-level cascade connected full bridge converter.

With the document Gupta, A.K., and Khambadkone, A.M., (2006). "A Space Vector PWM Scheme for Multilevel Inverters Based on Two-Level Vector PWM", IEEE Transactions on Industrial Applications, 53(5), 1631-1639, they determined in which sector and which triangle in that sector the end point of the reference voltage vector is located by the parameters defined using $\alpha$-$\beta$ axis voltages and algebraic formulas formed with the help of quadratic formulas. Vector periods were obtained depending on the triangle type. The developed algorithm was experimentally performed on the three-level converter. Information was given about the application of the proposed method to the multi-level converters. The method suggested by [1-2] to provide neutral point potential balance was taken as reference.

With the document Zhu, R., Wu, X., and Tang, Y., (2015). "Duty Cycle-Based Three-Level Space-Vector Pulse-Width-Modulation with Over modulation and Neutral-Point Balancing Capabilities for Three-Phase Neutral-Point Clamped Inverters", IET Power Electronics, (8)10, 1931-1940 they indicated that they made the three-level transformer space vector modulation with reference to the two-level space vector modulation. Comparison depending on the size of the phase voltages relative to each other was performed. With the results, space vector modulation duty cycle calculation was performed by using phase voltage values. The developed algorithm was shown by applying it to the three levels converter. A study was carried out for the neutral point voltage balance.

With the document Holtz, J., Holtgen, M., and Krah, J.O., (2013). "A Space Vector Modulator for the High-Switching Frequency Control of Three-Level SiC Inverters", IEEE Transactions on Power Electronics, 29(5), 2618-2626, they performed a conversion from the two-level space vector diagram consisting of equilateral triangles to the flat two-level space vector diagram consisting of isosceles right triangles. With the new flattened hexagonal plane components obtained after conversion, sector finding and calculation of vector periods were provided. During the application to the three-level converter, the three-level space vector diagram was grouped as two hexagons with their centers at the center of the inner hexagon and six hexagons at their corners. The hexagons coming to the corners were defined as being shifted by pivot vectors according to the center. Depending on the magnitude of the reference voltage, one of the inner two hexagons or one of the hexagons shifted by pivot vector was chosen. The selection of the hexagon shifted according to the pivot vector was performed by comparing the conversion result values obtained initially according to specific criteria. Performing the developed algorithm was provided by applying it to the three-level converter. A study was carried out for the neutral point voltage balance.

With the document Shiny, G., and Baiju,M.R., (2010). "A fractal based space vector PWM scheme for general n-level inverters", The 2010 International Power Electronics Conference - ECCE ASIA -, 21-24 June 2010, Sapporo, Japan, 847-854, it was aimed to find the reference vector end point by using the triangulation principle. In the triangularization method, the number of levels is increased by dividing the basic sector into equilateral triangles. Three levels determined for the multi-level topology do not include all levels, but levels such as 3,5,9,17 etc. and includes intermediate level, since during this division process, each divided triangle would have an equal length of sides. In the related study, the proportionality formula was added to cover the intermediate levels proportionally. With the triangularization formula, after finding the triangle in which the vector end point is found, the lower hexagon that this triangle is included in is found. Calculation of vector periods is performed so that these hexagonal two-level switching vectors are found.

With the document Hou,X., Li,Y., and Liu,L., (2003). "A novel general space vector modulation algorithm for multilevel inverter based on imaginary coordination", The Fifth International Conference on Power Electronics and Drive Systems, 2003. PEDS 2003, 17-20 November 2003, 392-396 space vector modulation algorithm was formed by using imaginary coordinate system and peak vector process. First, it was passed to the imaginary coordinate system from the phase coordinate system. With this process, triangle peaks are reduced to only one type value. After finding the triangle corners in the reference vector, the transition to the state components in the phase coordinate system is performed with the formulas used in the first step by using the values obtained. Since the formulas used in the first stage are not independent from each other, the results correspond to more than one different state component. Which state variable will be chosen is chosen depending on the operating conditions. Finally, the calculation of the periods of the reference vector components is performed.

With the document Mohamed,A.S.A., Gopinath, A, and Baiju,M.R., (2009), "A Simple Space Vector PWM Formation Scheme for Any General n-Level Inverter", IEEE Transactions on Industrial Electronics, 56(5), 1649-1656, finding the center of the lower hexagon where the reference vector endpoint will be located is performed in the first step. For this purpose, sector selection is performed in the multi-level space vector diagram. Then, a new axis set is defined and the level (layer) that the vector end point is in is determined with the help of this axis set. Depending on the found layer, state variables are calculated with the suggested formulas considering that the center of the innermost layer is the zero vector. In the calculated values, the closest one desired to be found to the reference vector is the center of the desired lower hexagon. After finding the lower hexagonal center, the closest state components required to form the reference vector and the relevant vector periods are calculated.

With the document Lalili,D., Lourci,N., Berkouk,E.M., Boudjema,F., Petzoldt,J., and Dali,M.Y., (2006), "A simplified space vector pulse width modulation algorithm for five level diode clamping inverter", International Symposium on Power Electronics, Electrical Drives, Automation and Motion, 2006. SPEEDAM 2006, 23-26 May 2006, Taormina, S13-21 - S13-26 pace vector modulation application has been developed for the five-level inverter. Development started with the process of dividing the five-level space vector diagram into 6 three-level space vector diagrams. Each three-level space vector diagram was subsequently divided into the two-level space vector diagrams.

With the document Sabah,V.S., Baby,T.C., Lall,K.P., Balamurungan,M., Sahoo,S.K., Chitra,A., Karthikeyan,P., and Raglend,I.J., (2015), "A simplified space vector pulse width modulation technique for multilevel inverter fed induction motor drive", 2015 International Conference on Circuits, Power and Computing Technologies, 19-20 March 2015, Nagercoil in the multi-level space vector modulation application, the space vector diagram was not used, and the $\alpha\beta$ axis voltages were directly compared with the triangular wave. This comparison was performed according to the capacitor voltages depending on the number of levels and the time offset values required for the multi-level application were added.

With the document Alonso, O., Marroyo, L., Sanchis, P., (2001), "A Generalized Methodology to Calculate Switching Periods and Regions in SVPWM Modulation of Multilevel Converters", European Power Electron. and Drives Assoc., August 2001, 1-8, transition was performed from the $\alpha\beta$ axis to 60 degree axes. By defining two types of adjacent lower triangles, the lower triangles in which the reference vector will be found were provided. After the lower triangle selection was completed, starting from these lower triangles from the vertices that are not adjacent to each other (after the lower triangle selection was completed), the vector periods that the reference vector can be defined by the neighbouring vectors were calculated. The quadratic polynomial and the lower triangular number are calculated so that the parameters used for the calculation are the polynomial coefficient.

With the documents Celanovic, N., and Boroyevich, D., (2001). "A Fast Space-Vector Modulation Algorithm for Multilevel Three Phase Converters", IEEE Transactions on Industry Applications, 37(2), 637-641; Lauttamus,P., and Tuusa,H., (2007), "Unified Space-Vector Modulation Scheme for Multilevel Inverters", 2007 Power Conversion Conference - Nagoya, 2-5 April 2007, Nagoya, 1464-1471; Yao,W., Hu,H., and Lu,Z., (2008), "Comparisons of Space-Vector Modulation and Carrier-Based Modulation of Multilevel Inverter", IEEE Transactions on Power Electronics, 23(1), 45-51; Wei,S., Wu,B., Li, F.,Liu,C., (2003)," A general space vector PWM control algorithm for multilevel inverters", Eighteenth Annual IEEE Applied Power Electronics Conference and Exposition, 9-13 February 2003, Miami Beach, 562-568 and Wei,S., Wu,B., and Cheung,R., (2003), "A novel SVM algorithm for reducing oscillations in cascaded H-bridge multilevel inverters", IECON'03. 29th Annual Conference of the IEEE Industrial Electronics Society (IEEE Cat. No.03CH37468), 2-6 November 2003, Roanoke, they showed the switching states with the three-dimensional axis considering the phase-phase voltages and reduced this representation to the two-dimensional hexagonal coordinate system. Integer values of the values obtained during reduction were used to find the location of the reference vector end point. After determining the vectors, their periods were calculated. The inverse transformation matrix was used for the transition from the two-dimensional vector diagram to the three-dimensional vector diagram and the appropriate switching state was selected. The application of the developed algorithm to three, four and five level converter was given with simulation results. There has been no mention of a study for the neutral point balance.

In the application No US7558089, the method of space vector modulation of the multi-level converter is described with reference to the method given by [19].

In the application No US8976556, in the multi-level inverter space vector diagram, the two-level space vector diagram in which the residual vectors remain, and a method performing calculation of vector periods and selection of the order of state components by finding the level of the end point of the reference vector in the multi-level inverter was described.

In the application No US9559610, parameters dependent to the reference vector were defined in the Cartesian coordinate system to calculate the coordinates of the triangle in which the reference vector is located in order to find the three closest vectors to the reference vector. By using these parameters, the borders of the lower triangle, required to be found, were determined. Starting from this, a method based on calculation of average voltage value equal to the closest vectors and the pulse periods to be applied to the desired output voltage was described.

Chamarthi Phanikumar, Chhetri Pawan, Agarwal Vivek "Simplified Implementation Scheme for Space Vector Pulse Width Modulation of n-Level Inverter With Online Computation of Optimal Switching Pulse Durations" discloses a scheme which makes use of a unique I-factor approach, which directly identifies the location of the various subtriangles in the space vector hexagon and leads to direct online computations of the control pulses. The scheme is validated by simulations and experimental results for three- and five-level diode clamped MLI.

A.M. Massoud; S.J. Finney; B.W. Williams "Systematic analytical-based generalised algorithm for multilevel space vector modulation with a fixed execution time" discloses a generalised algorithm is proposed for multilevel space vector modulation (SVM), which is applicable to any number of levels. The algorithm is based on numerical analysis and gives a fixed execution time when implemented in a digital signal processor, irrespective of the number of levels. In addition, the algorithm procedures eliminate the difficulty in determining the reference vector location, the on-time calculations and switching state selection.

Kartick Chandra Jana; Sujit Kumar Biswas; Parasuram Thakura "A Simple and Generalized Space Vector PWM Control of Cascaded H-Bridge Multilevel Inverters" discloses an automatic switching pattern generation for multilevel cascaded H-Bridge inverters with equal dc voltage sources, based on the space-vector pulse width modulation (SVPWM) techniques.

Ovalle Andres; Hernandez Miguel E; Ramos Gustavo A "A Flexible Nonorthogonal-Reference-Frame-Based SVPWM Framework for Multilevel Inverters" discloses a generalized SVPWM framework is proposed based on the convenient definition of three nonorthogonal static reference frames, alternative to the $\alpha\beta$-frame. The definition of these reference frames is exploited in order to get appropriate switching sequences and duty cycles taking into account the redundancy property of constructive vectors. The redundancy property is transparent to the algorithm, given that the proposed method takes advantage of it by following a straightforward algebraic procedure, without postprocessing stages or lookup tables.

CN101291118 discloses a method for positioning multi-level voltage space vector. A space vector plane is divided into six sectors at an included angle of sixty degrees. The sector which has a counterclockwise included angle of sixty degrees with the horizontal line is the first sector and the second sector till the sixth sector follows in sequence in a counterclockwise direction; the plane on which an alpha-beta coordinate system is positioned is divided into a plurality of triangles by a basic space vector, alpha-axis of the alpha-beta coordinate system coincides with x-axis of a Cartesian coordinate and beta-axis is pi/3 ahead of alpha-axis; the triangles are numbered increasingly from the left to the right at alpha-axis and from the bottom to the top at beta-axis; an reference space vector of input voltage is transferred to the first sector; an reference space vector in the first sector corresponding to output voltage is transferred to the alpha-beta coordinate system; the reference space vector in the alpha-beta coordinate system corresponding to the output voltage obtains the serial number of the triangle where the reference space vector of the input voltage is positioned, and positions the multi-level basic voltage space vector corresponding to the reference space vector of the input voltage according to the serial number of the triangle.

Prior art does not disclose determining specific switching times in order to reduce system resources used.

As a result, all the problems mentioned above made it necessary to make an innovation in the related technical field.

## BRIEF DESCRIPTION OF THE INVENTION

The object of the present invention is to provide a method providing space vector modulation applied in the control of multi-level converters used in power electronics applications by making less use of system resources compared to the methods in the present art.

Another object of the invention is to provide a method providing the detection that whether the multilevel converter is operating in the linear modulation region or the over modulation region.

The invention is defined by the features of the independent method claims 1 and 4. The dependent claims define further advantageous embodiments of the invention.

In order to perform all the objects that are mentioned above and will be clear from the detailed description below, the present invention is a method performed by said multi-level space vector modulation controller of a system comprising one multi-level space vector modulation controller in connection with the multi-level converter controlling said multi-level converter to perform space vector modulation according to its position in a space vector diagram comprising six sectors in the form of an equilateral hexagon whose center is the center of $\alpha$-$\beta$ space vector space center in the two-axis $\alpha$-$\beta$ (alpha-beta) coincident with the origin of said coordinate system and in the form of equilateral triangle and lower triangles in equilateral triangle structure provided within said sectors of a multi-level converter with level number "s" provided between an AC end and a DC end, a rotating reference voltage vector in the three-axial A,B,C three-phase coordinate system. Accordingly, the innovation comprises the following steps: wherein, each sector of the space vector diagram is assigned a reference pointer and a sector guide recorded in a memory unit is assigned the number 1 for each sector to a first lower triangle whose corner is directly connected to the origin and each lower triangle is given numbers so that the other lower triangles are assigned successive values following the number 1 in a first direction parallel to a first edge directly connected with the first lower triangle, and increasing consecutive values and a lower triangle guide recorded in said memory unit is accessed, wherein, $V\alpha$ and $V\beta$ are the components of said reference voltage vector and $V_{dc}$ is the total DC voltage value applied to the multi-level converter,

$$II_{sign} = \left(3V_{\alpha} - \sqrt{3}V_{\beta}\right)\left(s-1\right)\frac{1}{2}\frac{1}{V_{dc}},$$

$$III_{sign} = \left(3V_{\alpha} + \sqrt{3}V_{\beta}\right)\left(s-1\right)\frac{1}{2}\frac{1}{V_{dc}},$$

$$II' = \left| II_{sign} \right|,$$

$$III' = \left| III_{sign} \right|$$

a II' and a III' values are calculated from the above equations and it is determined in which sector the reference voltage vector is located in the space vector diagram, considering that the Vβ component value and the II' and III' values are positive or negative,

the value I' is determined by the following formula

$$I' = \left| (\sqrt{3}V_{\beta})(s-1)\frac{1}{V_{dc}} \right|$$

or if the sector is known, the value I' is determined by the following formula,

for sector I-III-IV-VI $\left| 3V_{\alpha} \right| > \left| \sqrt{3}V_{\beta} \right| \Rightarrow I' = \left| III_{sign} - II_{sign} \right|$ ,

for sector II − V $\left| 3V_{\alpha} \right| < \left| \sqrt{3}V_{\beta} \right| \Rightarrow I' = \left| III_{sign} \right| + \left| II_{sign} \right|$

a I' value is calculated from the above equations, integer components of I', II' and III' values are determined as $I_{int}$, $II_{int}$, $III_{int}$, each line of the first_triangular [x] in the sector refers to the sequence in which the first triangles that directly contacts with said first edge are ordered according to the increasing numbers,

the number assigned to the lower triangle where the end of the reference voltage vector is located is determined by using the equations triangle number= first_triangle [$I_{int}$]+ $III_{int}$ + $II_{int}$ - $I_{int}$ for sector 1 and 4, triangle number = first_triangle [$II_{int}$]+ $III_{int}$ + $I_{int}$ - $II_{int}$ for sector 2 and 5, triangle number = first_triangle [$III_{int}$]+ $II_{int}$ + $I_{int}$ $III_{int}$ for sector 3 and 6. Therefore, the end location of the reference voltage vector in the triangles previously numbered is detected by performing empiric processes and it enables the multi-level space vector modulation controller performing these processes to use less source.

A characteristic of a possible embodiment of the invention is that it comprises determining whether $I_{int}$ value for sector 1 and sector 4, $II_{int}$ for sector 2 and 5, $III_{int}$ for sector 3 and sector 6 are equal to (s-2) value to determine whether the converter operates in the linear modulation region or the over modulation region, if equal, determining a deviation value different from first_triangle[$I_{int}$] number for sector 1 and 4, first_triangle[$II_{int}$] number for sector 2 and 5, first_triangle[$III_{int}$] number for sector 3 and 6 of a number assigned to the determined lower triangle, if not equal, determining a deviation value different from first_triangle[$I_{int}$+1]-1)] number for sector 1 and 4, first_triangle[$II_{int}$+1]-1)] number for sector 2 and 5, first_triangle[$III_{int}$+1]-1)] number for sector 3 and 6 of the number assigned to the determined lower triangle, determining over modulation if the deviation number is a positive integer and the state of the linear modulation if it is zero or negative integer.

A characteristic of a possible embodiment of the invention comprises the following steps: the lower triangle type is determined as type 1 or type 2 depending on whether the offset values $III_{int}$ + $II_{int}$ - $I_{int}$ added to the first_triangle [$I_{int}$], $III_{int}$ + $I_{int}$ - $II_{int}$ added to the first_triangle [$II_{int}$] and $II_{int}$ + $I_{int}$ - $III_{int}$ added to the first_triangle [$III_{int}$] are double or single or not according to the sector where the reference voltage vector is located if there is an operation in the linear modulation region, $T_s$ is the total period considering the sector where the reference voltage value is located in case of the lower triangle type is determined as type 1,

$$t_x = \left( II' - II_{int} \right) T_s ,$$

for sector 1

$$t_y = \left( I' - I_{int} \right) T_s$$

$$t_x = \left( III' - III_{int} \right) T_s$$

for sector 2

$$t_y = \left( II' - II_{int} \right) T_s$$

$$t_x = \left( I' - I_{int} \right) T_s$$

for sector 3

$$t_y = \left( III' - III_{int} \right) T_s$$

$$t_x = \left( II' - II_{int} \right) T_s$$

for sector 4

$$t_y = \left( I' - I_{int} \right) T_s$$

$$t_x = \left( III' - III_{int} \right) T_s$$

for sector 5

$$t_y = \left( II' - II_{int} \right) T_s$$

$$t_x = \left( I' - I_{int} \right) T_s$$

for sector 6

$$t_y = \left( III' - III_{int} \right) T_s$$

According to the formulas above, the period of transmission of key elements is determined, the $t_x$ and $t_y$ vector periods of the vectors $V_x$ and $V_y$, which are the closest vectors to the lower triangle where the reference voltage vector is located, are calculated, a characteristic of a possible embodiment of the invention is that in case "type 2" triangle is selected, "type 2" triangle is selected as "2.type.a" or "2.type.b", if the type of the lower triangle is determined as the 2.type.a, considering the sector in which the reference voltage vector is in, $T_s$ is the total period,

$$t_x = \left( III' - III_{int} \right) T_s$$

for sector 1

$$t_y = \left( II_{int} + 1 - II' \right) T_s$$

$$t_x = \left( I' - I_{int} \right) T_s$$

for sector 2

$$t_y = \left( III_{int} + 1 - III' \right) T_s$$

$$t_x = \left( II' - II_{int} \right) T_s$$

for sector 3

$$t_y = \left( I_{int} + 1 - I' \right) T_s$$

$$t_x = \left( III' - III_{int} \right) T_s$$

for sector 4

$$t_y = \left( II_{int} + 1 - II' \right) T_s$$

$$t_x = \left( I' - I_{int} \right) T_s$$

for sector 5

$$t_y = \left( III_{int} + 1 - III' \right) T_s$$

$$t_x = \left( II' - II_{int} \right) T_s$$

for sector 6

$$t_y = \left( I_{int} + 1 - I' \right) T_s$$

According to the formulas above, to determine the period of transmission of key elements, the $t_x$ and $t_y$ vector periods of the vectors $V_x$ and $V_y$, which are the closest vectors to the lower triangle where the reference voltage vector is located, are calculated, if the type of the lower triangle is determined as the 2.type.b, considering the sector in which the reference voltage vector is in, $T_s$ is the total period,

$$t_x = \left( I_{int} + 1 - I' \right) T_s$$

for sector 1

$$t_y = \left( III' - III_{int} \right) T_s$$

$$t_x = \left( II_{int} + 1 - II' \right) T_s$$

for sector 2

$$t_y = \left( I' - I_{int} \right) T_s$$

$$t_x = \left( III_{int} + 1 - III' \right) T_s$$

for sector 3

$$t_y = \left( II' - II_{int} \right) T_s$$

$$t_x = \left( I_{int} + 1 - I' \right) T_s$$

for sector 4

$$t_y = \left( III' - III_{int} \right) T_s$$

$$t_x = \left( II_{int} + 1 - II' \right) T_s$$

for sector 5

$$t_y = \left( I' - I_{int} \right) T_s$$

$$t_x = \left( III_{int} + 1 - III' \right) T_s$$

for sector 6

$$t_y = \left( II' - II_{int} \right) T_s$$

According to the formulas above, to determine the period of transmission of key elements, the $t_x$ and $t_y$ vector periods of the vectors $V_x$ and $V_y$, which are the closest vectors to the lower triangle where the reference voltage vector is located, are calculated, for the linear modulation state, it is calculated as $t_z = T_s - t_x - t_y$.

A characteristic of a possible embodiment of the invention comprises the following steps: when an operation in the over modulation region is determined, the reference vector is replaced in the vector diagram so that the end of the reference vector is within the space vector diagram boundaries of the orbit rotating around the origin, if the deviation value determined is odd, the state 1 triangle is determined, if it is double, the state 2 triangle is determined, depending on the initial position of the reference vector, it is determined which type of "type 1" lower triangle will be selected to place the end of the reference voltage vector in the new orbit, in case of determining the state 1 triangle, the $t_x'$ and $t_y'$ periods of the $V_x'$ and $V_y'$ vectors are calculated using the following equations,

$$t_y' = \frac{T_s \left[ (s-1) t_y - \left( t_x + t_y - T_s \right) I_{int} \right]}{t_x + t_y + (s-2) T_s}$$

*or* for sector 1

$$t_y' = \frac{T_s \left[ \left( (s-1) - I_{int} \right) \left( I' - I_{int} \right) - \left( \left( II' - II_{int} \right) - 1 \right) I_{int} \right]}{\left( II' - II_{int} \right) + \left( I' - I_{int} \right) + (s-2)}$$

$$t_x' = T_s - t_y'$$

$$t_y' = \frac{T_s \left[ (s-1) t_y - \left( t_x + t_y - T_s \right) II_{int} \right]}{t_x + t_y + (s-2) T_s}$$

*or* for sector 2

$$t_y' = \frac{T_s\left[\left((s-1)-II_{int}\right)\left(II'-II_{int}\right)-\left(\left(III'-III_{int}\right)-1\right)II_{int}\right]}{\left(III'-III_{int}\right)+\left(II'-II_{int}\right)+(s-2)}$$

$$t_x' = T_s - t_y'$$

$$t_y' = \frac{T_s\left[(s-1)t_y-\left(t_x+t_y-T_s\right)III_{int}\right]}{t_x+t_y+(s-2)T_s}$$

*or* for sector 3

$$t_y' = \frac{T_s\left[\left((s-1)-III_{int}\right)\left(III'-III_{int}\right)-\left(\left(I'-I_{int}\right)-1\right)III_{int}\right]}{\left(I'-I_{int}\right)+\left(III'-III_{int}\right)+(s-2)}$$

$$t_x' = T_s - t_y'$$

$$t_y' = \frac{T_s\left[(s-1)t_y-\left(t_x+t_y-T_s\right)I_{int}\right]}{t_x+t_y+(s-2)T_s}$$

*or* for sector 4

$$t_y' = \frac{T_s\left[\left((s-1)-I_{int}\right)\left(I'-I_{int}\right)-\left(\left(II'-II_{int}\right)-1\right)I_{int}\right]}{\left(II'-II_{int}\right)+\left(I'-I_{int}\right)+(s-2)}$$

$$t_x' = T_s - t_y'$$

$$t_y' = \frac{T_s\left[(s-1)t_y-\left(t_x+t_y-T_s\right)II_{int}\right]}{t_x+t_y+(s-2)T_s}$$

*or* for sector 5

$$t_y' = \frac{T_s\left[\left((s-1)-II_{int}\right)\left(II'-II_{int}\right)-\left(\left(III'-III_{int}\right)-1\right)II_{int}\right]}{\left(III'-III_{int}\right)+\left(II'-II_{int}\right)+(s-2)}$$

$$t_x' = T_s - t_y'$$

$$t_y' = \frac{T_s\left[(s-1)t_y-\left(t_x+t_y-T_s\right)III_{int}\right]}{t_x+t_y+(s-2)T_s}$$

*or* for sector 6

$$t_y' = \frac{T_s\left[\left((s-1)-III_{int}\right)\left(III'-III_{int}\right)-\left(\left(I'-I_{int}\right)-1\right)III_{int}\right]}{\left(I'-I_{int}\right)+\left(III'-III_{int}\right)+(s-2)}$$

$$t_x' = T_s - t_y'$$

in case of determining the state 2 triangle, $t_x$ and $t_y$ periods are compared and if $t_y'$ is greater than $t_x'$, the 2.state.a triangle is selected, in case of determining the triangle 2.state.a, $t_x'$ and $t_y'$ periods of $V_x'$ and $V_y'$ vectors are calculated by using the following equations:

$$t_y' = \frac{T_s\left[(s-1)t_y-\left(t_x+t_y\right)I_{int}\right]}{t_x+t_y+(s-1)T_s}$$

*or* for sector 1

$$t_y' = \frac{T_s\left[\left((s-1)-I_{int}\right)\left(I'-I_{int}\right)-\left(II'-II_{int}\right)I_{int}\right]}{\left(II'-II_{int}\right)+\left(I'-I_{int}\right)+(s-1)}$$

$$t_x' = T_s - t_y'$$

$$t_y' = \frac{T_s\left[(s-1)t_y-\left(t_x+t_y\right)II_{int}\right]}{t_x+t_y+(s-1)T_s}$$

*or* for sector 2

$$t_y' = \frac{T_s\left[\left((s-1)-II_{int}\right)\left(II'-II_{int}\right)-\left(III'-III_{int}\right)II_{int}\right]}{\left(III'-III_{int}\right)+\left(II'-II_{int}\right)+(s-1)}$$

$$t_x' = T_s - t_y'$$

$$t_y' = \frac{T_s\left[(s-1)t_y-\left(t_x+t_y\right)III_{int}\right]}{t_x+t_y+(s-1)T_s}$$

*or* for sector 3

$$t_y' = \frac{T_s\left[\left((s-1)-III_{int}\right)\left(III'-III_{int}\right)-\left(I'-I_{int}\right)III_{int}\right]}{\left(I'-I_{int}\right)+\left(III'-III_{int}\right)+(s-1)}$$

$$t_x' = T_s - t_y'$$

$$t_y' = \frac{T_s\left[(s-1)t_y-\left(t_x+t_y\right)I_{int}\right]}{t_x+t_y+(s-1)T_s}$$

*or* for sector 4

$$t_y' = \frac{T_s\left[\left((s-1)-I_{int}\right)\left(I'-I_{int}\right)-\left(II'-II_{int}\right)I_{int}\right]}{\left(II'-II_{int}\right)+\left(I'-I_{int}\right)+(s-1)}$$

$$t_x' = T_s - t_y'$$

$$t_y' = \frac{T_s\left[(s-1)t_y-\left(t_x+t_y\right)II_{int}\right]}{t_x+t_y+(s-1)T_s}$$

*or* **for** sector 5

$$t_y' = \frac{T_s\left[\left((s-1)-II_{int}\right)\left(II'-II_{int}\right)-\left(III'-III_{int}\right)II_{int}\right]}{\left(III'-III_{int}\right)+\left(II'-II_{int}\right)+(s-1)}$$

$$t_x' = T_s - t_y'$$

$$t_y' = \frac{T_s\left[(s-1)t_y-\left(t_x+t_y\right)III_{int}\right]}{t_x+t_y+(s-1)T_s}$$

*or* for sector 6

$$t_y' = \frac{T_s\left[\left((s-1)-III_{int}\right)\left(III'-III_{int}\right)-\left(I'-I_{int}\right)III_{int}\right]}{\left(I'-I_{int}\right)+\left(III'-III_{int}\right)+(s-1)}$$

$$t_x' = T_s - t_y'$$

in the case of determining the state 2 triangle, $t_y$ and $t_x$ periods are compared, and if $t_x$ is greater than $t_y$ and if the triangle 2.state.b is determined, $t_x'$ and $t_y'$ periods of the $V_x'$ and $V_y'$ vectors are calculated by using the following equations:

$$t_y' = \frac{T_s\left[(s-1)\left(T_s+t_y\right)-\left(t_x+t_y\right)\left(I_{int}-1\right)\right]}{t_x+t_y+(s-1)T_s}$$

*or* for sector 1

$$t_y' = \frac{T_s\left[(s-1)+\left(s-I_{int}\right)\left(I'-I_{int}\right)-\left(II'-II_{int}\right)\left(I_{int}-1\right)\right]}{\left(II'-II_{int}\right)+\left(I'-I_{int}\right)+(s-1)}$$

$$t_x' = T_s - t_y'$$

18

$$t_y' = \frac{T_s\left[(s-1)\left(T_s+t_y\right)-\left(t_x+t_y\right)\left(II_{int}-1\right)\right]}{t_x+t_y+(s-1)T_s}$$

*or* for sector 2

$$t_y' = \frac{T_s\left[(s-1) + (s - II_{int})(II' - II_{int}) - (III' - III_{int})(II_{int} - 1)\right]}{(III' - III_{int}) + (II' - II_{int}) + (s-1)}$$

$$t_x' = T_s - t_y'$$

$$t_y' = \frac{T_s\left[(s-1)(T_s + t_y) - (t_x + t_y)(III_{int} - 1)\right]}{t_x + t_y + (s-1)T_s}$$

*or* for sector 3

$$t_y' = \frac{T_s\left[(s-1) + (s - III_{int})(III' - III_{int}) - (I' - I_{int})(III_{int} - 1)\right]}{(I' - I_{int}) + (III' - III_{int}) + (s-1)}$$

$$t_x' = T_s - t_y'$$

$$t_y' = \frac{T_s\left[(s-1)(T_s + t_y) - (t_x + t_y)(I_{tam} - 1)\right]}{t_x + t_y + (s-1)T_s}$$

*or* **for** sector 4

$$t_y' = \frac{T_s\left[(s-1) + (s - I_{int})(I' - I_{int}) - (II' - II_{int})(I_{int} - 1)\right]}{(II' - II_{int}) + (I' - I_{int}) + (s-1)}$$

$$t_x' = T_s - t_y'$$

$$t_y' = \frac{T_s\left[(s-1)(T_s + t_y) - (t_x + t_y)(II_{int} - 1)\right]}{t_x + t_y + (s-1)T_s}$$

*or* for sector 5

$$t_y' = \frac{T_s\left[(s-1) + (s - II_{int})(II' - II_{int}) - (III' - III_{int})(II_{int} - 1)\right]}{(III' - III_{int}) + (II' - II_{int}) + (s-1)}$$

$$t_x' = T_s - t_y'$$

$$t_y' = \frac{T_s\left[(s-1)(T_s + t_y) - (t_x + t_y)(III_{int} - 1)\right]}{t_x + t_y + (s-1)T_s}$$

*or* for sector 6

$$t_y' = \frac{T_s\left[(s-1)+(s-III_{int})(III'-III_{int})-(I'-I_{int})(III_{int}-1)\right]}{(I'-I_{int})+(III'-III_{int})+(s-1)}$$

$$t_x' = T_s - t_y'$$

for the over modulation state, $t_z$ equals zero due to the absence of zero vectors, depending on the sector in which the reference vector is located in the space vector diagram and depending on the lower triangle type in which the reference vector end point is located, the key element periods required for the formation of phase voltages are calculated and applied to the multi-level converter.

With the method used, the process power falling to the controller is reduced compared to the systems and methods in the present technique, and the multi-level converter is easily controlled by using less system resources.

**BRIEF DESCRIPTION OF DRAWINGS**

In Figure 1, the representative view of a system to which the invention is applied is given.

In Figure 2, the representative view of the single phase arm of the three-phase diode clamped multi-level converter is given.

In Figure 3, the representative view of the single phase arm of the three-phase capacitor/condenser clamped multi-level converter is given.

In Figure 4, the representative view of single phase arm of the multi-level converter in a three-phase cascade connected full bridge type is given.

In Figure 5, a representative view of the multi-level space vector diagram is given. A, B, C three-phase coordinate system and the common $\alpha$-$\beta$ coordinate system of origin are shown. State variables corresponding to the corners of the lower triangles are shown. Various circular directions of the reference voltage vector are presented in a representative view, including both the linear modulation region and the over modulation region. Six sectors are shown separately. The lower triangles for the first sector and the first and last triangles in the line within each sector are shown.

In Figure 5.2, the first lines in 6 sectors are given for the basic embodiment depending on the selection of the first line structure.

In Figure 5.3, the first lines in 6 sectors are given for the second embodiment depending on the selection of the first line structure.

In Figure 6, a representative view of the multi-level space vector diagram is given. A, B, C three-phase coordinate system and the common $\alpha$-$\beta$ coordinate system of origin are shown. State variables corresponding to the corners of the lower triangles are shown.

In Figure 7, the representation of the lower triangles in the sector 1 as "$m_2$" type 1, "$m_2$ + 1" type 2 (2.type.a and 2.type.b) is given. The selection order of the state variables is shown for the formation of A, B and C output phase voltages. In Sectors 1, 3 and 5, the selection order of state variables is the same. Only state variables change. In Sectors 2, 4 and 6, the selection order of state variables is performed in the opposite direction of the selection in Sectors 1, 3 and 5.

In Figure 8, for the "$m_2$" type 1 lower triangle shown in Figure 7, an example is given to obtain the switching order of A phase, B phase and C phase outputs by using the state variables 110 - 210-220-221-221-220-210-110, which are a group from present state variables.

In Figure 9, in case "$m_2$ + 1" 2.type.a triangle is selected as shown in Figure 7, an example is given to obtain the switching order of A phase, B phase and C phase outputs by using the state variables 220 - 320 - 321 - 321 - 320 - 220 - 210, which are a group from present state variables.

In Figure 10, in case "$m_2$+1" 2.type.a triangle is selected as shown in Figure 7, an example is given to obtain the switching order of A phase, B phase and C phase outputs by using the state variables 220 - 320 - 321 - 321 - 320 - 220, which are a group from present state variables.

In Figure 11, sector 1 of the space vector diagram of the 4-level converter is given in order to crosscheck the formulas given in Table 1.

In Figure 12, in case the end point of the reference vector is in "1.type" triangles, the representative view of the $V_x$ and $V_y$ vectors to be selected for the calculation of the vector periods and the formation of the reference voltage vector is given.

In Figure 13, in case the end point of the reference vector is in the "2.type" triangles, for the calculation of the vector periods, the representative view of the formation of $V_x$ and $V_y$ vector and reference voltage vector is given to select the "2.tip.a" triangle.

In Figure 14, in case the end point of the reference vector is in the "2.type" triangles, for the calculation of the vector periods, the representative view of the formation of $V_x$ and $V_y$ vector and reference voltage vector is given to select the "2.tip.b" triangle.

In Figure 15, the reference voltage vector and circular orbit rotating in the space vector diagram of the five-level converter operating in the linear modulation region are given. The triangle numbers through which the circular direction passes are also shown.

In Figure 16, the sector finding and lower triangle finding results obtained by the application of the steps of finding the lower triangle during the operation in the linear modulation region in the invention are shown.

In Figure 17, the five-level phase voltages obtained as a result of applying the method given in the invention to the five-level converter in the linear modulation region are given.

In Figure 18, the orbit of the reference voltage vector that will cause operation in case of over-modulation and the representative view of the orbit that needs to follow the reference voltage vector to be reformed in order to apply it to the space vector modulation are given.

In Figure 19, Figure 20 and Figure 21, the representation of three different states that may occur during the reformation of the reference voltage vector in case of over modulation is given.

In Figure 22, the switching order of the A phase, B phase and C phase outputs in Sector I is shown for the reference vectors shown in Figure 19, Figure 20 and Figure 21.

In Figure 23, reference voltage vector extending beyond the space vector diagram of the five-level converter operating in the over modulation region and its circular orbit are given. The reformed reference voltage vector and the triangle numbers through which the orbit passes are also shown.

In Figure 24, the sector finding and finding lower triangle results obtained by applying the steps of finding the lower triangle of the five-level converter operating in the over modulation region in the invention are shown.

In Figure 25, the five-level phase voltages obtained as a result of applying the method given in the invention to the five-level converter operating in the over modulation region are given.

In Figure 26, the flow diagram used to find the sector in which the reference vector is in the space vector diagram is given.

In Figure 27, the flow diagram determining whether the reference vector rotates in an orbit (linear modulation region) or outside of the space vector diagram (over modulation region) is given.

## DETAILED DESCRIPTION OF THE INVENTION

In this detailed description, the subject of the invention is described only with examples that do not have any limiting effect for a better understanding of the subject.

The invention is a method performed by the multi-level space vector modulation control (101) controlling by performing the space vector modulation to provide energy transfer properly from an AC end (105) to a DC end (107) or from a DC end (107) to an AC end (105) by changing the state of transmission of the switching elements of a multi-level converter circuit (100) provided between the AC end (105) and the DC end (107). By means of the method described in detail with the examples below, the system enables performing the space vector modulation by using the resources in a reduced manner.

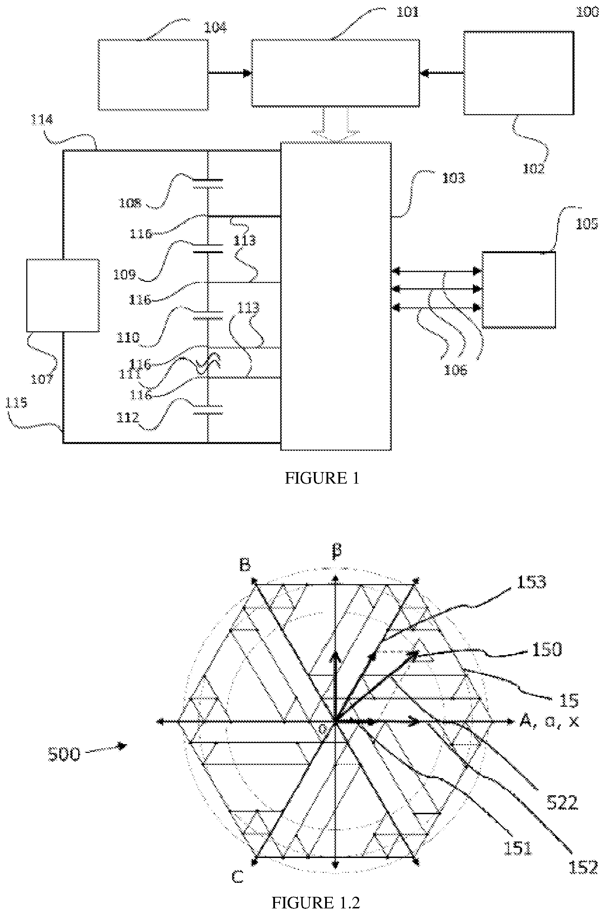

Referring to Figure 1, when the DC end (107) is DC source and the AC end (105) is a load, the multi-level converter (103) with the level number "s" is used as inverter for energy transfer from the DC end (107) to the AC end (105). In case the DC end (107) is the load and the AC terminal (105) is the AC source, the multi-level converter (103) with the level number "s" is used as a rectifier for energy transfer from the AC end (105) to the DC end (107). The control of the multi-level converter used for both modes of operation is performed by the multi-level space vector modulation. DC line capacitors (108, 109, 110, 111, 112) are capacitors parallel to the DC end (107) and the number of these capacitors is "s-1" when the multi-level converter with the level number "s" is considered.

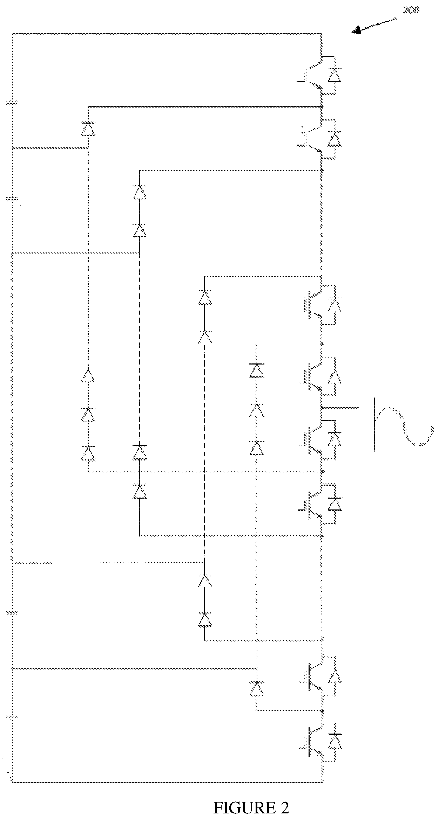

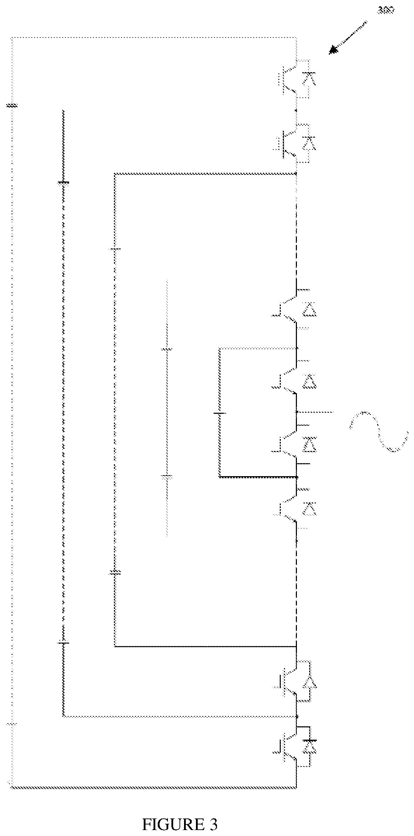

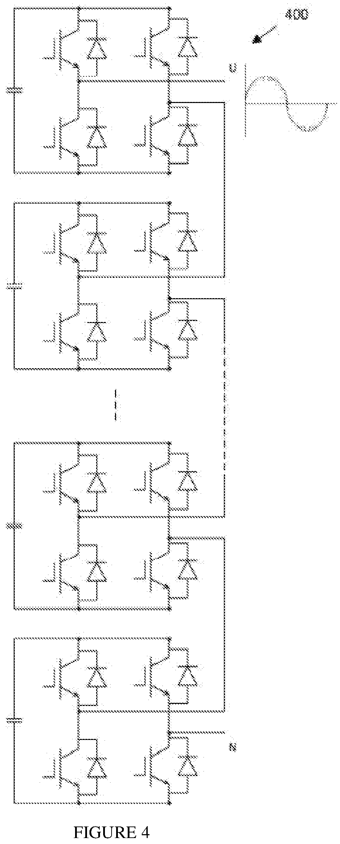

In Figure 2, diode clamped, in Figure 3, capacitor clamped, and in Figure 4, cascade connected full-bridge type, multi-level converter topologies with level number "s" are given. Figure 2, Figure 3 and Figure 4 are given for only one phase, therefore, whichever type of converter will be used, three phases are obtained by using three of the structure forming that topology. Multilevel space vector modulation is applied to the multilevel converter topologies shown in Figure 2, Figure 3, and Figure 4.

Referring to Figure 1, if the multi-level converter is diode clamped, "s-1" capacitor is connected to each other in series from the end to end points (116). The capacitor is connected with intermediate points (113) to the multi-level converter with the level number "s" separately (as in Figure-2).

Referring to Figure 1, if the multi-level converter is capacitor clamped, "s-1" capacitor is connected to each other in series from the end to end points (116). The capacitor is not connected with intermediate points (113) to the multi-level converter with the level number "s" separately. In order to obtain the voltages of the intermediate levels at the output of the converter, the number of capacitors is reduced by one while reaching the lower levels, until there is only one capacitor required for the innermost level (as in Figure-3).

Referring to Figure 1, in case of multi-level converter cascade connected full bridge or cascade connected half bridge, "s-1" capacitors are not connected to each other from end to end points (116) in series with each other, whereas each capacitor (113) and the multi-level converter with a separate level number "s" are attached to the cells in either full-bridge type or half-bridge type. Each cell is connected to each other as cascade (as in Figure-4).

It is preferred that the voltage levels of the capacitors used in all multi-level converters of the diode clamped, capacitor clamped, and cascade connected full-bridge (or half-bridge) type are equal. In case that the total voltage of the DC end (107) is Vdc, the voltage falling on the capacitors is Vdc/(s-1) when the voltage on each capacitor is equal.

Depending on the multi-level converter (103) switching states, the capacitor voltages are applied to the AC end (105) according to the voltage levels 0, Vdc/(s-1), 2Vdc/(s-1),..., Vdc, with an output line (106). When the AC end (105) is AC source, the DC end (107) is the load and the multi-level converter (103) operates as the rectifier, the DC line capacitors (108,109,110,112 and 111) are charged and these capacitors feed the DC end (107), that is, the load.

In both modes of operation, the multi-level space vector modulation controller (101) decides which voltage level will be applied by the multi-level converter (103) to the DC line capacitors or from the DC line capacitors (108, 109, 110, 111, 112) based on a voltage balance information of a reference voltage vector (102). The reference voltage vector (102) can be used directly as $V_\alpha$ and $V_\beta$ components without the need for the angle made by the reference vector with the $\alpha$ axis in the space vector diagram, in other words, without requiring trigonometric operation since it is obtained directly with the $V_\alpha$ and $V_\beta$ components of the alpha-beta space vector space in motor control systems such as direct moment control or field-oriented control methods and net-connected systems such as renewable energy converters and active filters.

Referring to Figure 1.2, a space vector diagram (500) comprising six sectors (15) in the form of an equilateral hexagon whose center is the center of $\alpha$-$\beta$ space vector space center in the two-axis $\alpha$-$\beta$ (alpha-beta) coincident with the origin of the coordinate system and in the form of equilateral triangle and lower triangles provided in said sectors (15) of a rotating reference voltage vector (522) in the three-axial A,B,C three-phase coordinate system is given. The method according to the invention performs the space vector modulation according to the position of the end point (522) of the reference voltage vector in said space vector diagram (500), that is, it determines the residence time of the key elements forming the multi-level converter. The innovative aspect of the invention is that even if the number of levels of the converter increases, the position of the reference vector endpoint is reduced according to the present art in terms of the number of operations and length of the process, that is, by significantly reducing the resources used of the processor performing the operations, and subsequently finding the residence time of transmission.

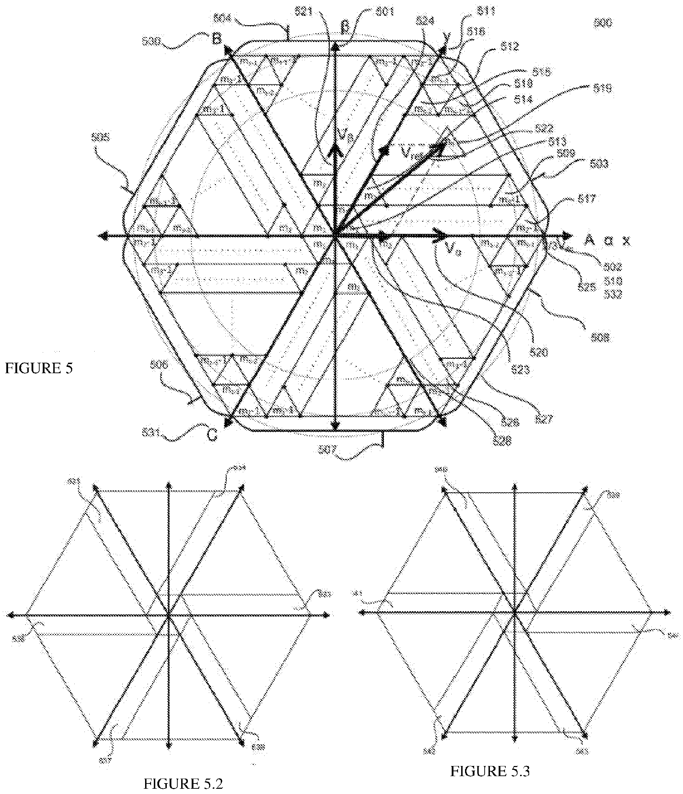

The multi-level space vector diagram (500) formed for the multi-level converters with level number "s" is shown in Figure 5 in the $\alpha$-$\beta$ coordinate system including the $\alpha$ axis (501) and the $\beta$ axis (502). This space vector diagram is derived from a two-level space vector diagram and divided into 6 main sectors, 1 (503), sector 2 (504), sector 3 (505), sector 4 (506), sector 5 (507) and sector 6 (508) including equilateral triangles. The numbers of the sectors are stored as a sector guide in a memory unit to be accessed while performing the method steps of the invention. For equilateral triangles forming these six sectors, the side length is given as 2/3Vdc (525). Vdc is shown as the total DC line voltage applied to the multilevel converter. Each sector is divided into $(s-1)^2$ equilateral lower triangles. The points at the corner of each lower triangle represent the space vector diagram state variables (512).

By performing the space vector modulation, the location of end point of a reference voltage vector (522) is determined in the multi-level vector diagram (500) to control the multi-level converter circuit (100) and the switching periods are determined according to this location. The innovative aspect of the invention is that the location finding process and then the calculation of the switching periods processes are performed by the empirical mathematical processes and the system resources are provided to be used in a significantly reduced way. The calculation of the switching periods by determining the multi-level space vector diagram (500) and the location of the reference vector (522) end point are described in detail below.

As shown in Figure 5, if we identify a first triangle whose one corner is on the origin (for example, the first lower triangle (513) in the first line in Sector 1) as number 1, it is calculated with the sequence number (Formula 1) of the triangle first encountered starting from the origin to the top levels.

$$\text{Formula 1: } m_k = m_{k-1} + \left(2\left(s-k\right)+1\right)$$

Here, "k" represents the number of lines and takes values in the form of k=2,3,....,(s-2),(s-1). The value "s" also indicates the level of the converter, as stated above. The value "s" also indicates the level of the converter as stated above. In $m_1$ Sector 1, the first lower triangle (513) in line 1 is always triangle number 1. The first lower triangle (513) in $m_1$ line 1, the first lower triangle (514),... in line 2 in $m_2$ sector 1, the first lower triangle (515) in (s-2) line in $m_{s-2}$ sector 1, the first lower triangle (516) in (s-1) line in $m_{s-1}$ sector 1 represent the first triangles in the six sectors. By the last lower triangle (517) in line 1 in $m_{2-1}$ sector 1, the last lower triangle (509),... in line 2 in $m_{3-1}$ sector 1, the last lower triangle (518) in (s-2) line in $m_{s-1}$-1 sector, the last lower equilateral triangles in the six sectors are shown. The first triangle numbers are written on a sequence shown with (Formula 2).

$$\text{Formula 2: First\_Triangle}\left[\text{s}\right] = \left\{\text{m}_1, \text{m}_2, ..., \text{m}_{s-1}\right\}$$

Crosschecking the above formula is given below for the seven level converter. A seven-level converter also has six lines in total, and the triangle number in each line is calculated as follows. First, the "k" values are assigned. In this case, it takes k = 2,3,4,5,6 values. (Formula 3) shows the first triangle number in each line.

$$\text{Formula 3: } \left.\begin{array}{l} m_1 = 1 \\ m_2 = m_1 + \left(2\left(7-2\right)+1\right) = 12 \\ m_3 = m_2 + \left(2\left(7-3\right)+1\right) = 21 \\ m_4 = m_3 + \left(2\left(7-4\right)+1\right) = 28 \\ m_5 = m_4 + \left(2\left(7-5\right)+1\right) = 33 \\ m_6 = m_5 + \left(2\left(7-6\right)+1\right) = 36 \end{array}\right\}$$

These values are recorded in a sequence such as (Formula 4), respectively, depending on the lines they are located.

$$\text{Formula 4: First\_Triangle}\left[6\right] = \left\{1, 12, 21, 28, 33, 36\right\}$$

By using the indices (0, 1, 2, 3, 4, 5) during the drawing of the first triangle number connected to the relevant line from this sequence, a way is followed as follows: the first_triangle[0] element for $m_1$, the first_triangular[1] element for $m_2$, the first_triangle[2] element for $m_3$, the first_triangle[3] element for $m_4$, the first_triangle[4] element for $m_5$, the first_triangle

[5] element for $m_6$ will be selected.

The triangle number at the beginning of each line varies according to the level number of the $m_1$, $m_2$,..., $m_{s-2}$, $m_{s-1}$ converter, accordingly, since the level number of a converter to be designed is determined at the very beginning of the design, the number of the first triangle in each line will be stable for that design. Therefore, these values are recorded initially in a memory unit to be called when required in the respective control cycle as elements of a sequence. After the level number of the multi-level converter has been determined, there is no need to be recalculated unless the level number of the converter is changed.

Triangle numbers (singulars), matched with the triangles, are stored in the memory unit as triangle guides.

In the multi-level space vector diagram shown in Figure 5, a reference voltage vector (522) rotates in a circular orbit (528) located in the hexagon forming the space vector diagram. The center of this circular orbit (528) and the centers of the hexagon forming the space vector diagram are common. The length of the reference vector (522) (the radius of the circular orbit (528)) can be variable. In the case of operation in the linear modulation region, the radius of the circular orbit is less than or equal to $\text{Vdc}/\sqrt{3}$. A second circular orbit (526) of radius $\text{Vdc}/\sqrt{3}$ is also shown in the figure. When the radius of the circular orbit is greater than $\text{Vdc}/\sqrt{3}$, an operating condition occurs in the over modulation region. The third circular orbit (527) showing the over modulation condition is also shown in the figure.

By performing the following steps by the multi-level space vector modulation controller (101), when the reference vector (502) is taken as input, it is determined in which lower triangle the end of the reference vector (502) is located.

By using a $V_\alpha$ component (520) and a $V_\beta$ component (521) in a space vector diagram firstly to find the end point of the reference vector (522), it is found which of the six sectors in the space vector diagram the reference vector (522) is located. To do this, by using $V_\alpha$ component (520) and $V_\beta$ components (521), the variables are calculated with (Formula 5), (Formula 6), (Formula 7), (Formula 8), (Formula 9), (Formula 10) and (Formula 11). In fact, these variables will be used to find the projections (523, 524) on the vectors forming the sector in which the reference vector (522) is located, in which lower equilateral triangle (519) the end point of the reference vector (522) is located, and also in the calculation of vector periods.

$$\text{Formula 5: } II_{sign} = (3V_\alpha - \sqrt{3}V_\beta)(s-1)\frac{1}{2}\frac{1}{V_{dc}}$$

$$\text{Formula 6: } III_{sign} = (3V_\alpha + \sqrt{3}V_\beta)(s-1)\frac{1}{2}\frac{1}{V_{dc}}$$

$$\text{Formula 7: } II' = \left| II_{sign} \right|$$

$$\text{Formula 8: } III' = \left| III_{sign} \right|$$

$$\text{Formula 9: } I' = \left| (\sqrt{3}V_\beta)(s-1)\frac{1}{V_{dc}} \right|$$

If it is desired to avoid the division process used for I' shown by (Formula 9), the calculation is performed as follows according to the relationship between $|3V_\alpha|$ and $\left|\sqrt{3}V_\beta\right|$. Basically, when it is analyzed on a sector basis, (Formula 10) is valid for sector 1-3-4-6 (503, 505, 506, 508) and (Formula 11) for sector 2 - 5 (504, 507).

$$\text{Formula 10: } \left|3V_\alpha\right| > \left|\sqrt{3}V_\beta\right| \Rightarrow I' = \left| III_{sign} - II_{sign} \right|$$

$$\text{Formula 11: } \left|3V_\alpha\right| < \left|\sqrt{3}V_\beta\right| \Rightarrow I' = \left| III_{sign} \right| + \left| II_{sign} \right|$$

The "s" used in these equations is the number of levels of the multi-level converter and Vdc is the total DC line voltage applied to the multi-level converter.

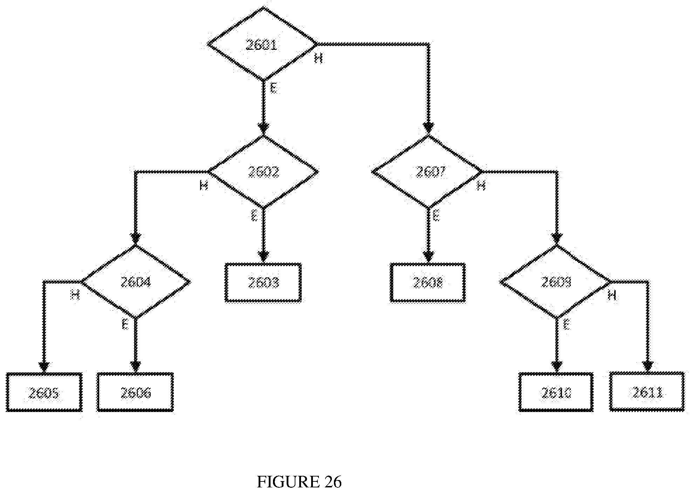

In Figure 26, the sign flow chart is shown related to which of the six vectors in the space vector diagram the voltage vector (522) rotating in the space vector diagram shown in Figure 5 is located and how to find it depending on whether $V_\beta$ and $II_{sign}$ and $III_{sign}$ values are positive or negative.

The first state (2601) where $V_\beta$ is greater than zero is controlled and branching occurs according to the result.

If the first state (2601) is correct (E), the second case (2602) where the $II_{sign}$ is greater than zero is controlled and branching occurs according to the result.

If the second state (2602) is correct (E), the Sector 1 selection step (2603) is performed.

If the second state (2602) is not correct (H), the third state (2604) where the $III_{sign}$ is less than zero is controlled and branching occurs according to the result.

If the third state (2604) is correct (E), the Sector 3 selection step (2606) is performed.

If the third state (2604) is not correct (H), the Sector 2 selection step (2605) is performed.

If the first state (2601) is not correct (H), the fourth state (2607) where the $III_{sign}$ is greater than zero is controlled and branching occurs according to the result.

If the fourth state (2607) is correct (E), the Sector 6 selection (2608) step is performed.

If the fourth state (2607) is not correct (H), the fifth state (2609) where the $II_{sign}$ is less than zero is controlled and branching occurs according to the result.

If the fifth state (2609) is correct (E), the Sector 4 selection (2610) step is performed.

If the fifth state (2609) is not correct (H), step Sector 5 selection (2611) is performed.

After determining the sector, it is necessary to determine it is necessary to determine in which lower triangle the end point of the reference vector (522) is located. For this purpose, an empirical formula is used. The variables used in the formula are provided by taking the full values of variables I', II' and III' by removing the decimal parts. These variables can take any natural number value up to 0,1,2,..., (s-2).

$$\text{Formula 12: } I_{int} \_ integer(I')$$

$$\text{Formula 13: } II_{int} \_ integer (II')$$

$$\text{Formula 14: } III_{int} \_ integer (III')$$

As seen in Figure 5, in the first sector (503), there is "s-1" line (516). If the lines are numbered from 0 to s-2, "s-1" line is obtained. The index number given for each first triangle also shows the number of lines drawn inside the triangle within a sector. The number of lines is also referred as a minus of the multi-level inverter level. If number of the first lower triangle (513) in $m_1$ sector 1 in line 1, the first lower triangle (514) in $m_2$ sector 1 in line 2,..., the first lower triangle $m_{s-2}$ (515) in sector 1 in (s-2) line, the first lower triangle (516) in $m_{s-1}$ sector in line (s-1), with the offset value to be calculated, in which lower triangle the reference vector (522) end is located will be found. The calculation requirement of the offset value is valid for the remaining five sectors. This offset value is available for six sectors with various combinations to be obtained with the results of (Formula 12), (Formula 13) and (Formula 14). After the offset value is found, the offset value will be added to the first triangle number. In the case where the first triangle number is recorded in a sequence, by using one of the values obtained with (Formula 12), (Formula 13) and (Formula 14), the first triangle number is read from the sequence by using the element index for this sequence. How this calculation will be performed on the basis of sector is shown in Table 1. For example, the index value for the element to be drawn from the first triangle sequence in Sector 1 is the result of the formula (Formula 12). The triangle number in which the end point of the reference vector (522) will be found is calculated with the formula in the sequence given for Sector 1 in Table 1. Still in Table 1, the formula for the triangle number including the vector end point in other sectors is given in the relevant sector number line.

Referring to Figure 5.2, the lower triangles are numbered in increasing numbers, (533) for sector 1, (534) for sector 2, (535) for sector 3, (536) for sector 4, (537) for sector 5, (538) for sector 6, along one of the edges coming from the origin and when the first line is formed, Table 1 is used.

Table 1

| Sector | Lower Triangle Number |
|---|---|
| 1 | triangle_no=first_triangle[$I_{tam}$] + $III_{int}$ + $II_{int}$ - $I_{int}$ |
| 2 | triangle_no=first_triangle[$II_{tam}$] + $III_{int}$ + $I_{int}$ $II_{int}$ |
| 3 | triangle_no=first_triangle[$III_{tam}$] + $II_{int}$ + $I_{int}$ - $III_{int}$ |

(continued)

| Sector | Lower Triangle Number |
|--------|----------------------|
| 4 | triangle_no=first_triangle[$I_{tam}$] + $III_{int}$ + $II_{int}$ - $I_{int}$ |
| 5 | triangle_no=first_triangle[$II_{tam}$]+ $III_{int}$ + $I_{int}$ - $II_{int}$ |
| 6 | üçgen_no=ilk_üçgen[$III_{tam}$] + $II_{tam}$ + $I_{tam}$ - $III_{tam}$ |

In a possible second embodiment, the lower triangles, referring to Figure 5.2, are numbered in increasing numbers ((539) for sector 1, (540) for sector 2, (541) for sector 3, (542) for sector 4, (543) for sector 5, (544) for sector 6) along other edge of the sector according to the edge described above, coming from the origin, and when the first line is formed, table 1.1 is used.

Table 1.1

| Sector | Lower Triangle Number |
|--------|----------------------|
| 1 | triangle_no=first_triangte[$II_{int}$ ] + $III_{int}$ + $I_{int}$ - $II_{int}$ |
| 2 | triangle_no=first_triangle[$III_{int}$ ] + $II_{int}$ + $I_{int}$ - $III_{int}$ |
| 3 | triangle_no=first_triangle[$I_{int}$ ] + $III_{int}$ + $II_{int}$ - $I_{int}$ |
| 4 | triangle_no=first_triangle[$II_{int}$ ] + $III_{int}$ + $I_{int}$ -$II_{int}$ |
| 5 | triangle_no=first_triangle[$III_{int}$ ] + $II_{int}$ + $I_{int}$ - $III_{int}$ |
| 6 | triangle_no=first_triangle[$I_{int}$ ] + $III_{int}$ + $II_{int}$ - $I_{int}$ |

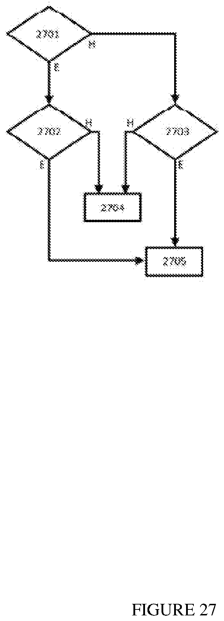

Depending on the lower triangle number obtained, it is sufficient to control the comparison algorithm developed to determine whether the reference vector end point is in the linear modulation region or the over modulation region. Referring to Figure 27, this comparison includes the following steps. The versions of the steps in the second embodiment mentioned above are also given.

First step (2701):

In the basic embodiment,
Comparing whether $I_{int}$ for Sector 1 and Sector 4, $II_{int}$ for Sector 2 and 5, and $III_{int}$ for Sector 3 and 6 are equal to the value (s-2) or not. If equal (E), moving to the second step (2702), if not equal (H) moving to the third step (2703).

First step (2701):

In the second embodiment,
Whether $I_{int}$ for Sector 1 and Sector 4, $II_{int}$ for Sector 2 and 5, and $III_{int}$ for Sector 3 and 6 are equal to the value (s-2) or not is compared. If equal (E), it is moved to (2702), if not equal (H), it is moved to (2703).

Second step (2702):

In the basic embodiment,
Determining whether the triangle number (triangle_no) calculated based on the sector number according to Table 1 is greater than the first_triangle[$I_{int}$] for Sector 1 and Sector 4 or than the last lower triangle of the line shown with $I_{int}$, the first_triangle[$I_{int}$] for Sector 2 and Sector 5 or the last lower triangle of the line shown with $II_{int}$, the first_triangle[$I_{int}$] for Sector 3 and Sector 6 or the last lower triangle of the line shown with $III_{int}$ or not. If the difference is greater than 0, this value is noted as "lower triangle deviation value for over modulation operation". The noted difference value will be used in the lower triangle selection in which the reference vector to be reformed during the over modulation operation will be found. If it is great (E), moving to the fifth step (2705), if it is not (H), moving to the fourth step (2704).

Second step (2702):

In the second embodiment,
Determining whether the triangle number (triangle_no) calculated based on the sector number according to Table 1.1 is greater than the first_triangle[$II_{int}$] for Sector 1 and Sector 4 or than the last lower triangle of the line shown with $II_{int}$, the first_triangle[$III_{int}$] for Sector 2 and Sector 5 or the last lower triangle of the line shown with $III_{int}$, the first_triangle[$I_{int}$] for Sector 3 and Sector 6 or the last lower triangle of the line shown with $I_{int}$ or not. If the difference is greater than 0, this value is noted as "lower triangle deviation value for over modulation operation". The noted difference value will be used in the lower triangle selection in which the reference vector to be reformed during the over modulation operation will be found. If it is great (E), moving to the fifth step (2705), if it is not (H), moving to the fourth step (2704).

Third step 2703:

In the basic embodiment,
Whether the triangle number (triangle_no) calculated based on the sector number according to Table 1 is greater than the (first_triangle[$I_{int}$+1]-1) for Sector 1 and Sector 4 or than the last lower triangle of the line shown with $I_{int}$, the (first_triangle[$II_{int}$+1]-1) for Sector 2 and Sector 5 or the last lower triangle of the line shown with $II_{int}$, the (first_triangle[$III_{int}$+1]-1) for Sector 3 and Sector 6 or the last lower triangle of the line shown with $III_{int}$ or not is determined. If the difference is greater than 0, this value is recorded as "lower triangle deviation value for over modulation operation" to the memory unit. The recorded difference value will be used in the lower triangle selection in which the reference vector to be reformed during the over modulation operation will be found. If it is great (E), it is moved to the fifth step (2705), if it is not (H), it is moved the fourth step (2704).

Third step (2703):

In the second embodiment,
Whether the triangle number (triangle_no) calculated based on the sector number according to Table 1.1 is greater than the (first_triangle[$III_{int}$+1]-1) for Sector 1 and Sector 4 or than the last lower triangle of the line shown with $II_{int}$, the (first_triangle[$III_{int}$+1]-1) for Sector 2 and Sector 5 or the last lower triangle of the line shown with $III_{int}$, the (first_triangle[$I_{int}$+1]-1) for Sector 3 and Sector 6 or the last lower triangle of the line shown with $I_{int}$ or not is compared. If the difference is greater than 0, this value is noted as "lower triangle deviation value for over modulation operation" to the memory unit. The noted difference value will be used in the lower triangle selection in which the reference vector to be reformed during the over modulation operation will be found. If it is great (E), it is moved to the fifth step (2705), if it is not (H), it is moved the fourth step (2704).

2704: Determining the presence of operation in the linear modulation region.

2705: Determining the presence of operation in the over modulation region.

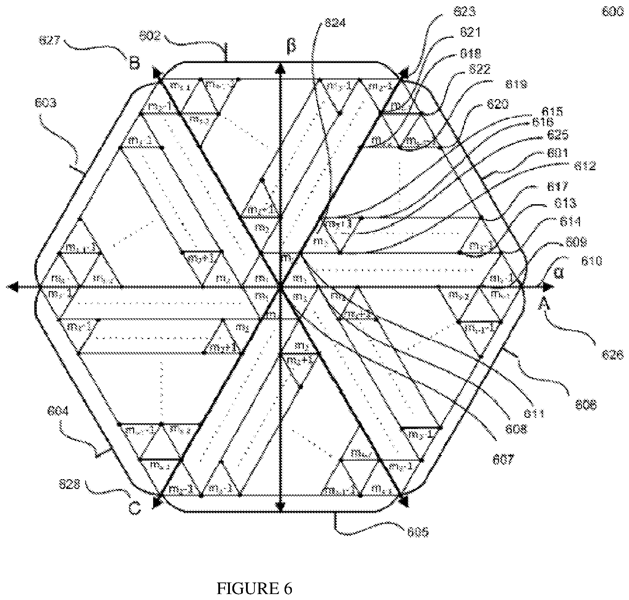

Depending on the obtained lower triangle number, a multi-level converter switching sequence is formed with the state variables coming to the corners of that triangle. In Figure 6, the multi-level converter space vector diagram with the level number "s" is given. Some of the state variables in Sector 1 (601) are shown in Table 2. The selection process of the state variables is performed such that each key element for each phase in each switching period enters to the transmission once and exits once. In multi-level converters, as the center of the space vector diagram is approached, the switching states options increase depending on the level number. It is possible to select these switching states, optionally, in order to provide capacitor balance, so that the voltage level between output phases does not change.

Table 2

| Figure 6 Element No. | Sector 1 (601) State Component Examples |
|---|---|
| 607 | (s-1)(s-1)(s-1), (s-2)(s-2)(s-2),...,222, 111, 000 |
| 608 | (s-1)(s-2)(s-2), (s-2)(s-3)(s-3),...,211, 100 |
| 609 | (s-1)11, (s-2)00 |
| 610 | (s-1)00 |
| 611 | (s-1)(s-1)(s-2), (s-2)(s-2)(s-3), 221, 110 |
| 612 | (s-1)(s-2)(s-3), (s-2)(s-3)(s-4), 321, 210 |
| 613 | (s-1)21, (s-2)10 |
| 614 | (s-1)10 |
| 615 | (s-1)(s-1)(s-3), (s-2)(s-2)(s-4),...,220 |
| 616 | (s-1)(s-2)(s-4),(s-2)(s-3)(s-5),...,210 |
| 617 | (s-1)20 |

(continued)

| Figure 6 Element No. | Sector 1 (601) State Component Examples |
|---|---|
| 618 | (s-1)(s-1)2, (s-2)(s-2)1, (s-3)(s-3)0 |
| 619 | (s-1)(s-2)1, (s-2)(s-3)0 |
| 620 | (s-1)(s-3)0 |
| 621 | (s-1)(s-1)1, (s-2)(s-2)0 |
| 622 | (s-1)(s-2)0 |
| 623 | (s-1)(s-1)0 |

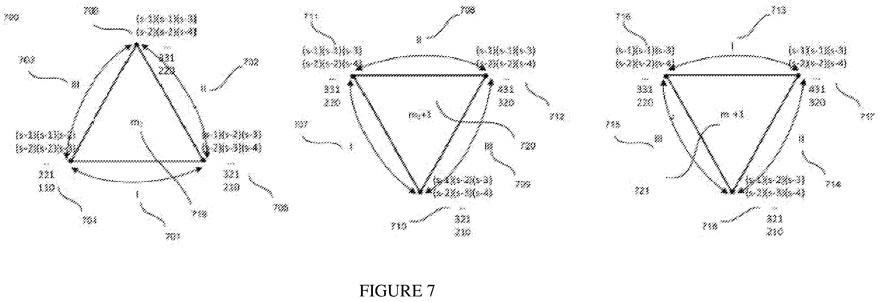

The lower triangles in the multi-level space vector diagram are divided into two types of lower triangles, which are shown with the 1.type lower triangle (624) "$m_2$" and the 2.type lower triangle (625) with "$m_2+1$" in Figure 6. These lower triangles are shown in Figure 7 by enlarging with the 1.type triangle (719) and the 1.type.a triangle (720) and the 2type.b triangle (721). 2.tip.a triangle (720) and 2.tip.b triangle (721) are the same triangles, and in this type of triangles, two different starting points are selected and the state variable is selected. In the case that the reference vector end point is within one of these lower triangles, considering the state variables coming to the corners of the lower triangles, it is performed such that each key element for each phase in each switching period enters to the transmission once in total and exits once.

Considering the 1.type triangle (719) in Figure 7, starting from the first state variable (704) selected for the 1.type triangles, counter-clockwise, a transition is performed to the second state variable (705) selected for 1.type triangles, to the third state variable (706) selected for 1.type triangles, and then again to the first state variable (704) selected for 1.type triangles. In this case, the half-period is half of the completed switching period (812), and a transition is performed from (704) to the state variable number (706), state variable number (705) and then state variable number (704) counter-clockwise. (Considering the rotation direction here, the rotation directions for Sector1, Sector 3 and Sector 5 for the 1.type triangle are (701), (702), (703), (703), (702), (701). Considering the rotation direction here, the rotation directions for Sector 2, Sector 4 and Sector 6 for the 1.type triangle are (703), (702), (701), (701), (702), (703)).

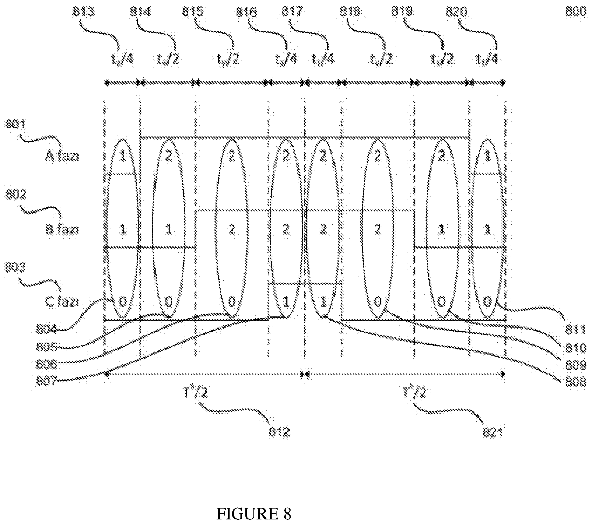

It is possible to for the switching order of A phase (801), B phase (802) and C phase (803) for the 1.type triangle (719) in Figure 8 by selecting the 110 zero voltage vector state variable (804), 210 $V_x$ voltage vector state variable (805), 220 $V_y$ voltage vector state variable (806), 221 Zero voltage vector state variable (807), 221 zero voltage vector state variable (808), 220 $V_y$ voltage vector state variable (809), 219 $V_x$ voltage vector state variable (810), 110 zero voltage vector state variable (811) state variables. Here, the numbers 0,1,2..., (s-2), (s-1) selected during switching directly affect the determination of the voltage level applied to the output. Considering Figure 8, in the output A phase (801), 1.Vdc/(s-1), 2.Vdc/(s-1), 2.Vdc/(s-1), 2.Vdc/(s-1), 2.Vdc/(s-1), 2.Vdc/(s-1), 2.Vdc/(s-1), 1.Vdc/(s-1) are applied. In the output B phase (802), 1.Vdc/(s-1), 1.Vdc/(s-1), 2.Vdc/(s-1), 2.Vdc/(s-1), 2.Vdc/(s-1), 2.Vdc/(s-1), 1.Vdc/(s-1), 1.Vdc/(s-1) are applied. In the output (803), 0.Vdc/(s-1), 0.Vdc/(s-1), 0.Vdc/(s-1), 1.Vdc/(s-1), 1.Vdc/(s-1), 0.Vdc/(s-1), 0.Vdc/(s-1), 0.Vdc/(s-1) are applied.

Considering (720) in Figure 7, starting from the first state variable (710) selected for the 2.type.a triangles, clockwise, a transition is performed to the second state variable (711) selected for 2.type.a triangles, to the third state variable (712) selected for 2.type.a triangles, and then again to the first state variable (710) selected for 2.type.a triangles. In this case, the half-period of the switching period (912) is completed and a transition is performed from the first state variable (710) for 2.type.a triangles, counter-clockwise, to the third state variable (712) selected for 2.type.a triangles, the second state variable (711) selected for 2.type.a and then the first state variable (710) selected for 2.type.a variable. (Considering the rotation direction here, the rotation directions for Sector1, Sector 3 and Sector 5 for the 2.type.a triangle are (707), (708), (709), (709), (708), (707). Considering the rotation direction here, the rotation directions for Sector 2, Sector 4 and Sector 6 for the 2.type.a triangle are (709), (708), (707), (707), (708), (709)).

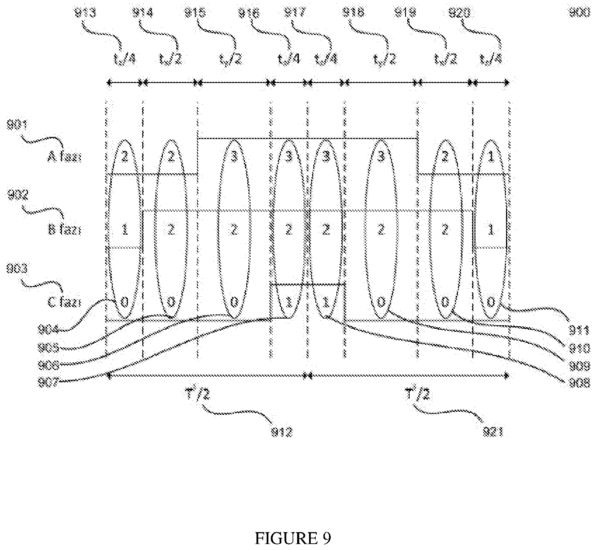

It is possible to form the switching orders of A phase (901), B phase (902) and C phase (903) outputs for the 2.type.a (720) in Figure 9 by selecting the state variable (904) showing the 210 zero voltage vector, the state variable (905) showing the 220 $V_x$ voltage vector, the state variable (906) showing the 320 $V_y$ voltage vector, the state variable (907) showing the 321 zero voltage vector, the state variable (908) showing the 321 zero voltage vector, the state variable (909) showing the 320 $V_y$ voltage vector, the state variable (910) showing the 220 $V_x$ voltage vector, the state variable (911) showing the 210 zero voltage vector. Considering Figure 9, to the output A phase (901), 2Vdc/(s-1), 2.Vdc/(s-1), 3.Vdc/(s-1), 3.Vdc/(s-1), 3.Vdc/(s-1), 3.Vdc/(s-1), 2.Vdc/(s-1), 2.Vdc/(s-1) are applied. To the output B phase (902), 1.Vdc/(s-1), 2.Vdc/(s-1), 2.Vdc/(s-1), 2.Vdc/(s-1), 2.Vdc/(s-1), 2.Vdc/(s-1), 2.Vdc/(s-1), 1.Vdc/(s-1) are applied. To the output C phase (903), 0.Vdc/(s-1), 0.Vdc/(s-1), 0.Vdc/(s-1), 1.Vdc/(s-1), 1.Vdc/(s-1), 0.Vdc/(s-1), 0.Vdc/(s-1), 0.Vdc/(s-1) are applied.

Considering the 2.type.b triangle (721) in Figure 7, starting from the first state variable (716) selected for the 2.type.b triangles, clockwise, a transition is performed to the second state variable (717) for 2.type.b triangles, the third state variable (718) selected for 2.type.b triangles and then again the state variable shown with the first state variable (716) selected for 2.type.b triangles. In this case, the half period (1012) is completed and from (716), counter-clockwise, a transition is performed to number (718) state variable, number (717) state variable and then number (716) state variable. (Considering the rotation direction here, the rotation directions for Sector1, Sector 3 and Sector 5 for the 2.type.b triangle are (713), (714), (715), (715), (714), (713). Considering the rotation direction here, the rotation directions for Sector 2, Sector 4 and Sector 6 for the 2.type.b triangle are (715), (714), (713), (713), (714), (715)).

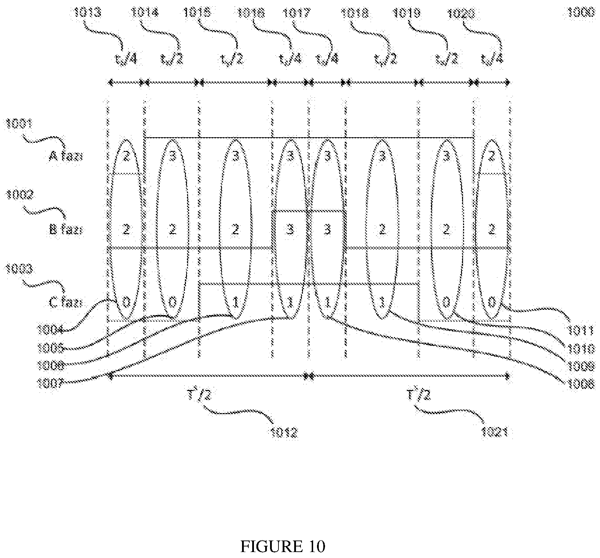

It is possible to form the switching order (20) of the outputs A phase (1001, B phase (1002) and C phase (1003) for the 2.type.b triangle (721) in Figure 10 by selecting the state variable (1004) showing the 220 zero voltage vector, the state variable (1005) showing the 320 $V_x$ voltage vector, the state variable (1006) showing the 321 $V_y$ voltage vector, the state variable (1007) showing the 331 zero voltage vector, the state variable (1008) showing the 331 zero voltage vector, the state variable (1009) showing the 321 $V_y$ voltage vector, the state variable (1010) showing the 320 $V_x$ voltage vector, the state variable (1011) showing the 220 zero voltage vector. Considering Figure 10, in the output A phase (1001), 2Vdc/(s-1), 3.Vdc/(s-1), 3.Vdc/(s-1), 3.Vdc/(s-1), 3.Vdc/(s-1), 3.Vdc/(s-1), 3.Vdc/(s-1), 2.Vdc/(s-1) are applied. In the output B phase (1002), 2.Vdc/(s-1), 2.Vdc/(s-1), 2.Vdc/(s-1), 3.Vdc/(s-1), 3.Vdc/(s-1), 2.Vdc/(s-1), 2.Vdc/(s-1), 2.Vdc/(s-1) are applied. In the output C phase (1003), 0.Vdc/(s-1), 0.Vdc/(s-1), 1.Vdc/(s-1), 1.Vdc/(s-1), 1.Vdc/(s-1), 1.Vdc/(s-1), 0.Vdc/(s-1), 0.Vdc/(s-1) are applied.

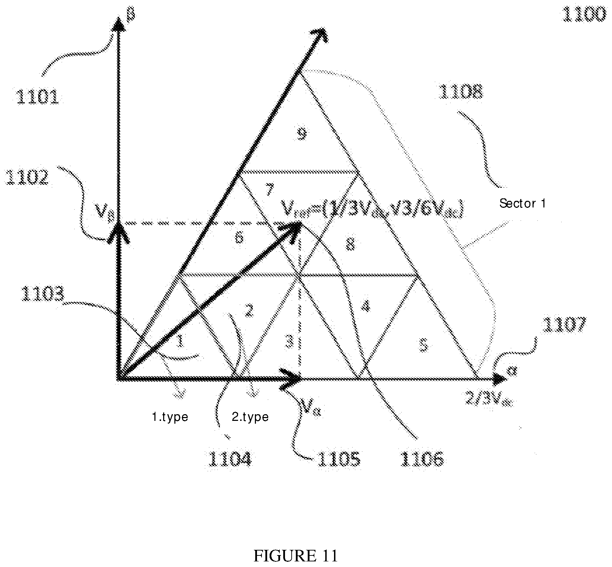

The formulas given in Table 1 are crosschecked with reference to the four-level space vector diagram given in Figure 11 for Sector 1 (1108). For example, in the coordinates α-β coordinate axis α axis and β axis (1101, 1107) of the reference vector end point selected in the first sector, with the end point of vectors Vα (1105) and Vβ (1102), the reference voltage vector Vref (1106) is shown as ($1/3\ V_{dc}$, $\sqrt{3}/6\ V_{dc}$). The side length of the equilateral triangle forming each sector is 2/3Vdc. The first triangle is referred as a sequence with (Formula 15) by using the elements of the sequence (Formula 3) that we will define as the first triangle. (Formula 5), (Formula 6), (Formula 7), (Formula 8) and (Formula 9) are obtained as shown by the variables I', II', and III' (Formula 16). The triangle number is calculated as given by (Formula 17) by selecting the result of one of the formulas indicated in Table 1, the appropriate sector number. The parameters to be used in the lower triangle calculation for six sectors are given in detail in Table 3.

$$\text{Formula 15: } \mathbf{first\_triangle}[3] = \{1,6,9\}$$

$$\text{Formula 16: } (I',II',III') = \left(\frac{3}{2},\frac{3}{4},\frac{9}{4}\right)$$

$$\text{Formula 17: } \mathbf{first\_triangle} = 6+2+0-1 = 7$$

Table 3

| Sector I – Sector IV | | | | | Sector II – Sector IV | | | | | Sector III – Sector VI | | | | |
|---|---|---|---|---|---|---|---|---|---|---|---|---|---|---|
| $I_{int}$ | $II_{int}$ | $III_{int}$ | first | Triangle | $I_{int}$ | $II_{int}$ | $III_{int}$ | first | Triangle | $I_{int}$ | $II_{int}$ | $III_{int}$ | first | Triangle |
| 0 | 0 | 0 | 1 | 1 | 0 | 0 | 0 | 1 | 1 | 0 | 0 | 0 | 1 | 1 |
| 0 | 0 | 1 | 1 | 2 | 1 | 0 | 0 | 1 | 2 | 0 | 1 | 0 | 1 | 2 |
| 0 | 1 | 1 | 1 | 3 | 1 | 0 | 1 | 1 | 3 | 1 | 1 | 0 | 1 | 3 |
| 0 | 1 | 2 | 1 | 4 | 2 | 0 | 1 | 1 | 4 | 1 | 2 | 0 | 1 | 4 |
| 0 | 2 | 2 | 1 | 5 | 2 | 0 | 2 | 1 | 5 | 2 | 2 | 0 | 1 | 5 |
| 1 | 0 | 1 | 6 | 6 | 1 | 1 | 0 | 6 | 6 | 0 | 1 | 1 | 6 | 6 |
| 1 | 0 | 2 | 6 | 7 | 2 | 1 | 0 | 6 | 7 | 0 | 2 | 1 | 6 | 7 |
| 1 | 1 | 2 | 6 | 8 | 2 | 1 | 1 | 6 | 8 | 1 | 2 | 1 | 6 | 8 |
| 2 | | 2 | 9 | 9 | 2 | 2 | 0 | 9 | 9 | 0 | 2 | 2 | 9 | 9 |

After finding which lower triangle the end point of the reference vector is included in, the vector periods are calculated. As shown in Figure 11, lower triangles are defined as two types within themselves. The first one is the 1.type lower triangle (1103) and the other one is the 2.type lower triangle (1104). The 1.type lower triangles (1103) correspond to the state that the offset values for each line is even number and the 2.type triangles (1104) correspond to the state that the offset value is odd number.

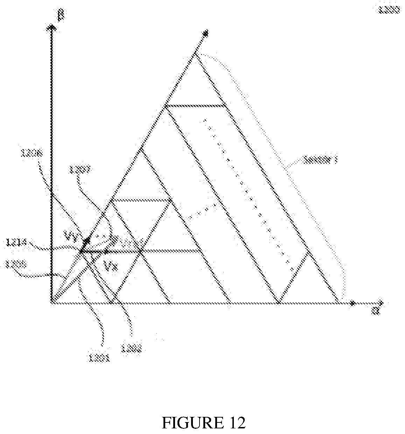

After determining the lower triangle in the multi-level converter with the number of levels "s", the vectors closest to the triangle in which the reference vector is located will be reconstructed with the state variables corresponding to the lower triangle corners and the transmission periods to be applied to the key elements at the multi-level converter levels should be calculated. In Figure 12, if the reference vector is in "1.type" triangles, the vector type to be selected for calculating the vector periods is shown. As can be seen, the vector used to form the reference voltage vector provides the reference vector 1201 with the vector sums of the resultant vector 1207 for the voltage vectors $V_x$ (1202) and $V_y$ (1206). When the 1.type triangle is used to form the reference voltage vector within the "1.type" triangle, a starting state variable (1214) to be selected forms a starting point to reach the reference vector end point coming to the corresponding lower triangle by using the closest voltage vector $V_x$ (1202) and $V_y$ (1206). $t_x$ and $t_y$ periods should be calculated for $V_x$ (1202) and $V_y$ voltage vector (1206). After the calculation is performed, depending on the state variables to be selected, the relevant keys on each phase in the multi-level converter are switched on and the voltage levels are applied to the AC output ends of the multi-level inverter. The periods of the A phase (801), B phase (802), C phase (803) output voltages shown in Figure 8 are directly related to the calculated $t_x$ and $t_y$ periods. The effect of $t_x$ and $t_y$ periods on the output voltages is shown with half of the application time of the $t_x/2 V_x$ voltage vector (814), half of the application time of the $t_y/2 V_y$ voltage vector (815), half of the application time of the $t_y/2 V_y$ voltage vector (818), $t_x/2$ (819). The $t_z$ zero vector effect is shown as one quarter of the application period of the zero voltage vector $t_z/4$ (813), $t_z/4$ (816), $t_z/4$ (817), $t_z/4$ (820). $T_s$ is the total period and shown by half of the $T_s/2$ switching period (812) and half of the $T_s/2$ switching period (821). $t_z$ is obtained by removing $t_x$ and $t_y$ periods from the total period $T_s$. In case of "1.type" triangle is selected, considering the sector in which the reference vector is located from the formulas given in "1.type" (as an example, 719 shown in Figure 7) named triangle column in Table 4, in order to determine the residence time of the key elements, the necessary $t_x$ and $t_y$ vector periods, thus the voltage periods to be applied to the output phases, are calculated.

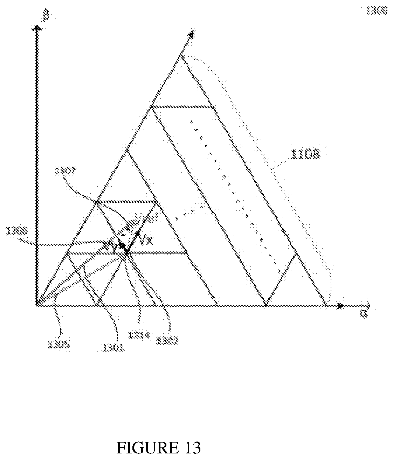

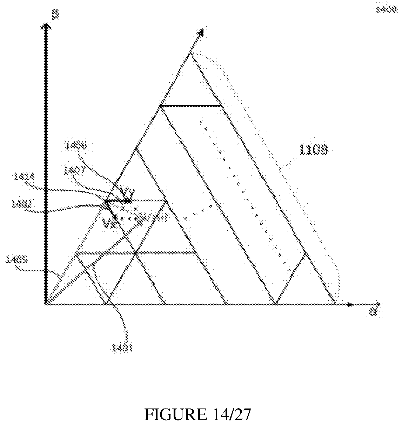

The reference vector for the 2.type lower triangle (1104) mentioned in Figure 11 is formed in two different ways. These are named as "2.type.a" and "2.type.b" within themselves. In Figure 13 and Figure 14, it is shown how to form reference vectors for "2.type.a" and "2.type.b". The "2.type.a" or "2.tip.b" is selected to form the reference vector and the selected one affects the capacitor voltage balance. Therefore, with the calculation method set forth in this invention, after the selection of the key elements in the multi-level converter that directly affects the capacitor voltage balance is completed depending on the state variables, in a simple way, the time required for the transmission periods of the switching elements is calculated.

In Figure 13, the vector type to be selected for the calculation of vector periods in case the reference vector is in the "2.type.a" triangles. The vector used to form the reference voltage vector provides the reference vector (1301) with (1305) and the vector sums of the resultant vector (1307) for the voltage vectors $V_x$ (1302) and $V_y$ (1306). The state variables shown with (1314) in the triangle "2.type.a" form the starting point to reach the reference vector end point in the corresponding lower triangle by using the voltage vector $V_x$ (1302) and the voltage vector $V_y$ (1306). For the voltage vector $V_x$ (1302) and the voltage vector $V_y$ (1306), the $t_x$ and $t_y$ periods should be calculated. After the calculation is performed, depending on the state variables to be selected, the relevant keys on each phase in the multi-level converter are switched on and the voltage levels of the capacitors are applied to the AC output ends of the multi-level inverter. The periods of the A phase (901), B phase (902), C phase (903) output voltages shown in Figure 9 are directly related to the calculated $t_x$ and $t_y$ periods. The effect of $t_x$ and $t_y$ periods on the output voltages is shown with half of the application time of the $t_x/2 V_x$ voltage vector (914), half of the application time of the $t_y/2 V_y$ voltage vector (915), half of the application time of the $t_y/2 V_y$ voltage vector (918), half of the application time of the $t_x/2 V_x$ (919). The $t_z$ zero vector effect is shown as one quarter of the application period of the zero voltage vector $t_z/4$ (913), $t_z/4$ (916), $t_z/4$ (917), $t_z/4$ (920). $T_s$ is the total period and shown by half of the $T_s/2$ switching period (912) and half of the $T_s/2$ switching period (921). $t_z$ is obtained by removing $t_x$ and $t_y$ periods from the total period $T_s$. In case of "2.type" triangle is selected, considering the sector in which the reference vector is located from the formulas given in "2.type.a" (as an example, 720 shown in Figure 7) named triangle column in Table 4, in order to determine the residence time of the key elements, the necessary $t_x$ and $t_y$ vector periods, thus the voltage periods to be applied to the output phases, are calculated.

In Figure 14, the vector type to be selected for the calculation of vector periods in case the reference vector is in the "2.type.b" triangles. The vector used to form the reference voltage vector provides the reference vector (1401) with (1405) and the vector sums of the resultant vector (1407) for the voltage vectors $V_x$ (1402) and $V_y$ (1406). The starting state variables (1414) to be selected when the 2.type.b triangle is used to form the reference voltage vector form the starting point to reach the reference vector end point coming into the relevant lower triangle by using the voltage vector $V_x$ (1402) and the voltage vector $V_y$ (1406) vectors. For the voltage vector $V_x$ (1402) and the voltage vector $V_y$ (1346), the $t_x$ and $t_y$ periods should be calculated. After the calculation is performed, depending on the state variables to be selected, the relevant keys on each phase in the multi-level converter are switched on and the voltage levels of the capacitors are applied to the AC output ends of the multi-level inverter. The periods of the A phase (1001), B phase (1002), C phase (1003) output voltages shown in Figure 10 are directly related to the calculated $t_x$ and $t_y$ periods. The effect of $t_x$ and $t_y$ periods on the output voltages is shown with half of the application time of the $t_x/2$ $V_x$ voltage vector (1014), half of the application time of the $t_y/2$ $V_y$ voltage vector (1015), half of the application time of the $t_y/2$ $V_y$ voltage vector (1018), half of the application time of the $t_x/2$ $V_x$ (1019). The $t_z$ zero vector effect is shown as one quarter of the application period of the zero voltage vector $t_z/4$ (1013), $t_z/4$ (1016), $t_z/4$ (1017), $t_z/4$ (1020). $T_s$ is the total period and shown by half of the $T_s/2$ switching period (1012) and half of the $T_s/2$ switching period (1021). $t_z$ is obtained by removing $t_x$ and $t_y$ periods from the total period $T_s$. In case of "2.type.b" triangle is selected, considering the sector in which the reference vector is located from the formulas given in "2.type.b" (as an example, 721 shown in Figure 7) named triangle column in Table 4, in order to determine the residence time of the key elements, the necessary $t_x$ and $t_y$ vector periods, thus the voltage periods to be applied to the output phases, are calculated.

Finding the reference vector is shown in Figure 12, Figure 13 and Figure 14 for the first sector (1212, 1312, 1412), however, it will be the same for the remaining sectors. Figure 12, Figure 13 and Figure 14 should be rotated sixty degrees counter-clockwise, so the offset vectors also rotate sixty degrees based on this rotation.

For the voltage vector $V_x$ (1202, 1302,1402) and the voltage vector $V_y$ (1206,1306,1406) the $t_x$ and $t_y$ periods should be obtained by using the triangles where the starting points of the vectors shown with the resultant vectors (1207, 1307, 1407) for $V_x$ and $V_y$ voltage vectors.

For each lower triangle, the calculation for $t_z$, which is the zero vector after $t_x$ and $t_y$ values are obtained, is provided by (Formula 18). $T_s$ corresponds to the switching period of the multi-level converter. When $t_x$, $t_y$, $t_z$ values, lower triangle number and state variables corresponding to their corners are determined, for the switching elements in the multi-level inverter, appropriate switching periods and switching sequence are selected.

$$\text{Formula 18: } t_z = T_s - t_x + t_y$$

All calculations are calculated by the multi-level space vector controller (101) in Figure 1. The capacitor voltage balance block structure (104) may or may not be included in the multi-level space vector controller (101). The multi-level space vector controller (101) may include digital signal processor, microcontroller, microprocessor, FPGA (Field programmable gate array), digital logic circuits, CPLD (complex programmable logic device, analogue circuits (operational amplifier, comparator, operational conductivity amplifier), resistor and capacitor structures with passive electronic elements. It may include all, one or some of the structures mentioned.

With a five-level diode clamped converter simulation where a new generalized space vector modulation method operates for multi-level converters is shown. In this simulation, there is an operation in the linear modulation region. In the simulation, five-level phase voltages were obtained with an output period of 20ms.

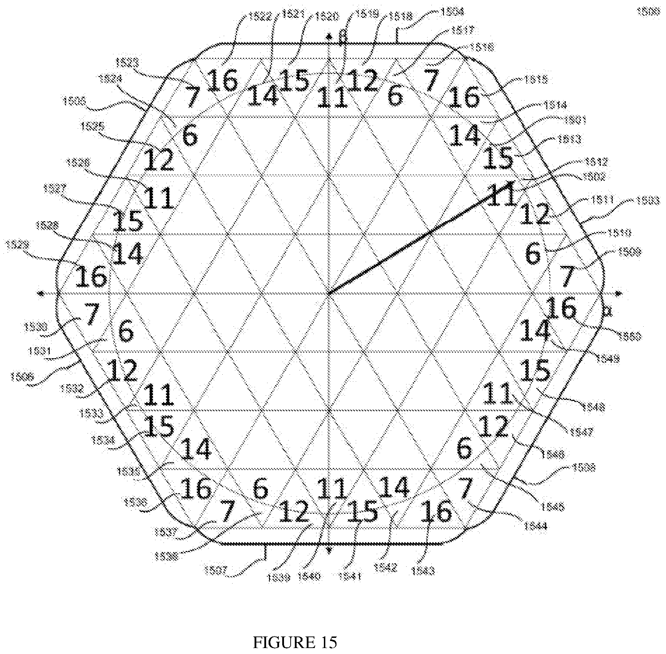

The five-level space vector diagram is given in Figure 15. It is considered that the reference voltage vector (1502) rotates in its circular orbit (1501). This circle, in sector 1 (1503), passes through the number 7 lower triangle (1509) in sector 1, the number 6 lower triangle (1510) in sector 1, the number 12 lower triangle (1511) in sector 1, the number 11 lower triangle (1512) in sector 1, the number 15 lower triangle (1513) in sector 1, the number 14 lower triangle (1514) in sector 1, the number 16 lower triangle (1515) in sector 1. The triangles through which the circle passes are shown in sector 2, 3, 4, 5 and 6.

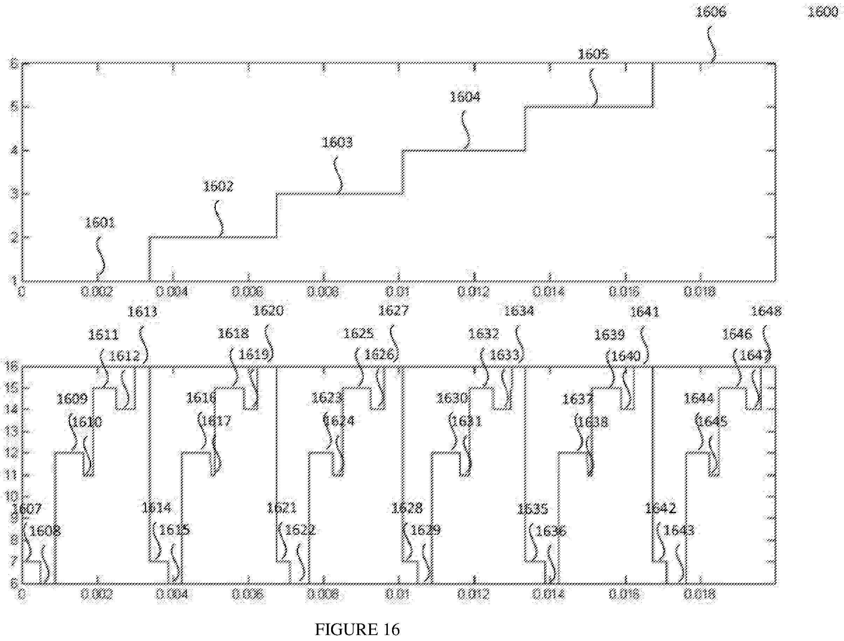

In Figure 16, the result of the triangle finding algorithm shown in the invention and summarized in Table 1 is shown. The results obtained coincide with the reference vector origin indicated in Figure 15.

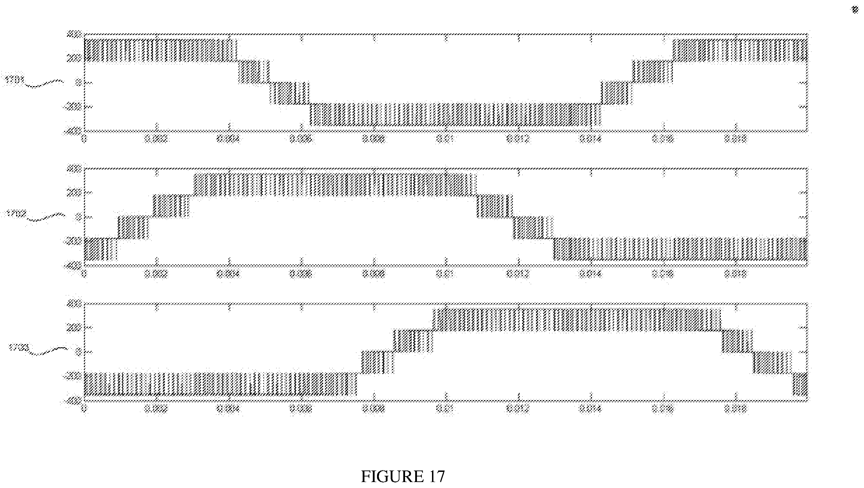

In Figure 17, the phase voltages obtained by the simulation result of the five-level converter operating in the linear modulation region by using the "Space Vector Modulation Method for Use in Multi-Level Converters" provided with this invention are given. The A phase output voltage is shown with (1701), the B phase output voltage with (1702) and the phase C output voltage with (1703).

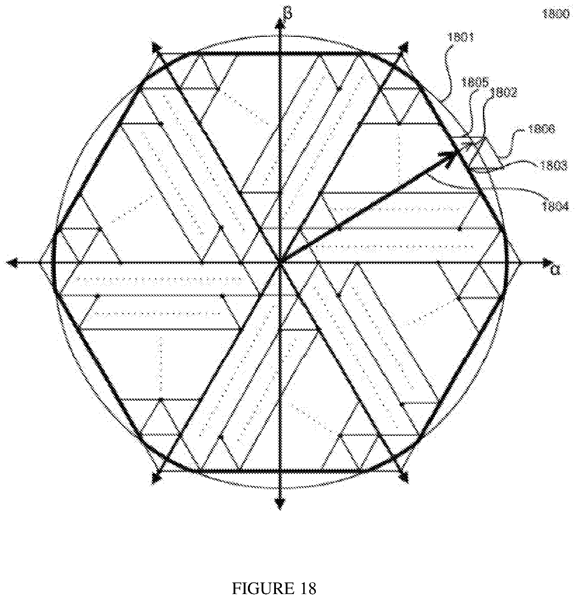

Operation in case of over modulation is shown in Figure 18. The reference vector $V_{ref}$ is shown with (1802) and rotates in its circular orbit (1801). This circular orbit (1801) extends beyond the multi-level space vector diagram. One of the triangles in which the end point of the reference voltage vector, which is in the over modulation state, can be located is indicated by (1805) (1.state triangle). Another of the triangles in which the reference voltage vector, which is in the over modulation state, can be located may be the lower triangles extending beyond the space vector diagram indicated by (1806) (2.state triangle). In case of over modulation, the reference voltage vector (1802) needs to be reformed so that it does not extend beyond the space vector diagram. The reformed Reference voltage vector ($V_{ref}'$) is reshaped as (1804) and the Reference voltage vector ($V_{ref}'$) starts to rotate in its orbit (1803). Considering this new orbit, vector periods are calculated. In the case of over modulation, the position of the original vector $V_{ref}$ (1802) is important during being pulled into the space vector diagram to reform the reformed Reference voltage vector ($V_{ref}'$) (1804) shown in Figure 18 (1804). Which of the triangles outside of the space vector diagram (1805 or 1806) is inside the reference voltage vector (1802), which is in the over modulation state, may be determined according to whether the "lower triangular deviation value for over modulation operation" of the difference value obtained in the second step (2702) or the third steps (2703) is odd or even. If this difference value is odd, the lower triangle (1805) in which the $V_{ref}$ reference vector is located (1.state triangle for over modulation operation), if the difference value is even, the lower triangle in which the $V_{ref}$ reference vector is located (1806) (2.state triangle for over modulation operation) are selected. The new orbit of the $V_{ref}$' new reference vector is determined. Depending on this position, the lower triangle that will enter into the multi-level space vector diagram of $V_{ref}$ (1804) and the period of transmission of the switching elements are determined.

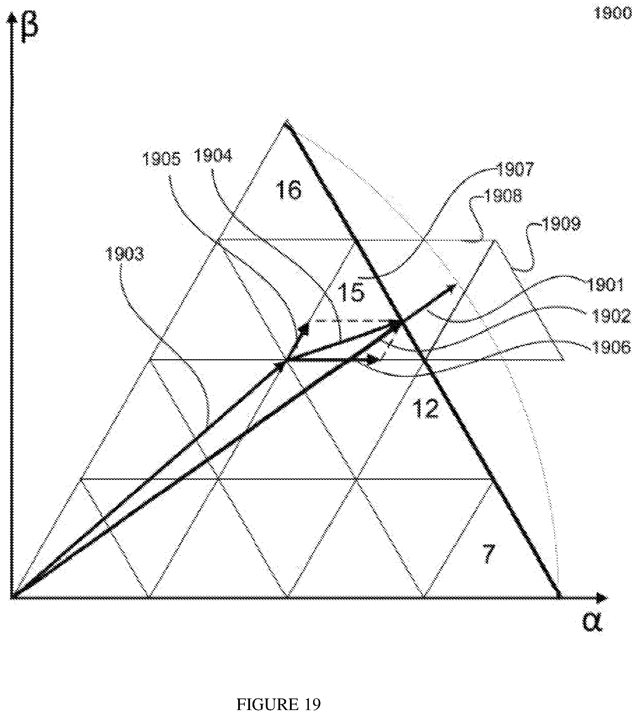

Considering the space vector diagram of a 5-level converter for over modulation, how to reform the reference vector in case of over modulation is shown in Figure 19, Figure 20 and Figure 21. This reformation process can be applied in the multi-level space vector diagram, regardless of the number of levels.

In Figure 19, the reference voltage vector $V_{ref}$ (1901), which is in the over modulation state, corresponds to the triangle of the 1.state over modulation state (1805) shown by one of the triangles (1908) in which the reference voltage vector in the over modulation state can be located. This equilateral triangle is one-to-one conjugate with the lower triangles in the multi-level space vector diagram. When the reference voltage vector $V_{ref}$ (1901), which is in the over modulation state, is reformed, $V_{ref}$ shown with the reformed reference voltage vector (1902) is obtained, and the lower triangle into which the reformed reference voltage vector is pulled becomes the lower triangle shown by (1907). This lower triangle number is (first_triangle [$I_{int}$]) if (s-2) = $I_{int}$ for Sector 1 and Sector 4, if not it is (first_triangle[$I_{int}$+1]-1), (first_triangle[$II_{int}$]) if (s-2) = $II_{int}$ for Sector 2 and Sector 5, if not, (first_triangle[$II_{int}$+1]-1), (first_triangle[$III_{int}$]) if (s-2) = $III_{int}$ for Sector 3 and Sector 6, if not (first_triangle[$III_{int}$+1]-1). The determined triangle numbers are also the last lower triangle number of the line determined with $I_{int}$ for Sector 1 and Sector 4, the last triangle number of the line determined with $II_{int}$ for Sector 2 and Sector 5, the last triangle number of the line determined with $III_{int}$ for Sector 3 and Sector 6.

For the second embodiment of the invention mentioned above, (first_triangle [$II_{int}$]) if (s-2) = $II_{int}$ for Sector 1 and Sector 4, if not it is (first_triangle[$II_{int}$+1]-1), (first_triangle[$III_{int}$]) if (s-2) = $III_{int}$ for Sector 2 and Sector 5, if not, (first_triangle [$III_{int}$+1]-1), (first_triangle[$I_{int}$]) if (s-2) = $I_{int}$ for Sector 3 and Sector 6, if not (first_triangle[$I_{int}$+1]-1). The determined triangle numbers are also the last lower triangle number of the line determined with $II_{int}$ for Sector 1 and Sector 4, the last triangle number of the line determined with $III_{int}$ for Sector 2 and Sector 5, the last triangle number of the line determined with $I_{int}$ for Sector 3 and Sector 6.

The reformed reference voltage vector $V_{ref}$' (1902) is formed by using the vector shown with (1903) and the resultant vector (1904) for $V_x$' (1906) and $V_y$' (1905) voltage vectors. It provides to determine the state variables suitable for the selection of starting point switching elements of the resultant vector (1904) of $V_x$' and $V_y$' voltage vectors. The period of $V_y$' vector is equal to the switching period defined with $t_y$' and $V_x$' vector period $t_x$' total $T_s$. The zero vector is removed and thus $t_x$ is equal to zero. The formulas to be used to calculate sector-based of the $t_y$' and $t_x$' periods during the reformation of Vref' reference vector corresponding to (1805) triangle, one of the triangles in which the reference voltage vector, which is in the 1.state over modulation state in the over modulation operation, can be located.

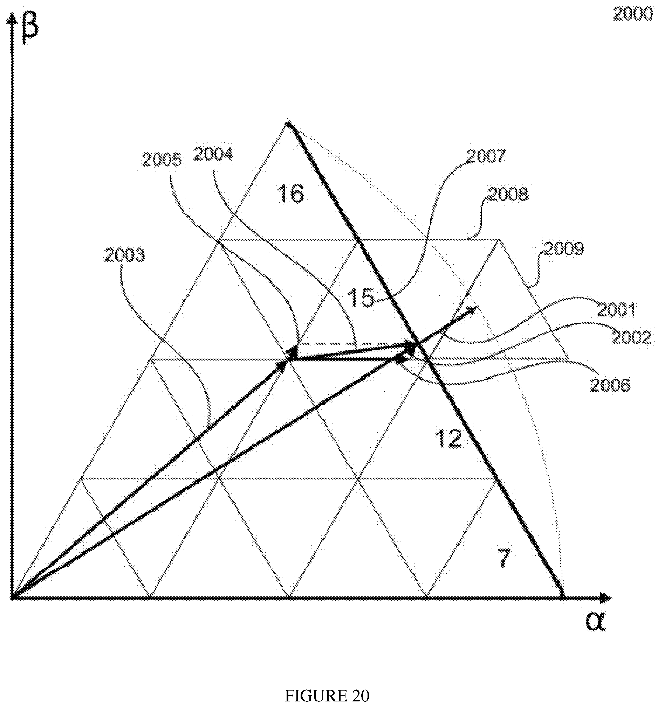

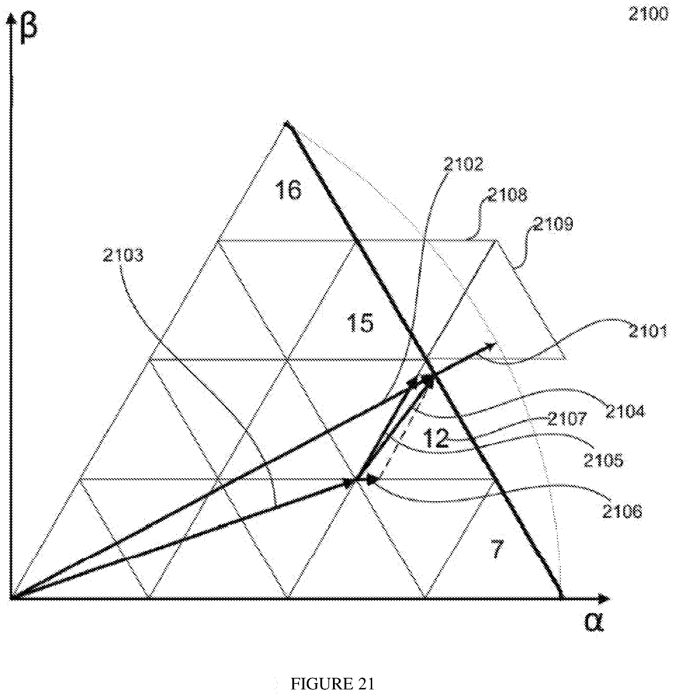

The reference voltage vector $V_{ref}$ (2001, 2101), which is in the over modulation state in Figure 20 and Figure 21, corresponds to the (1806) triangle from the 2.state over modulation state triangles shown with one of the triangles (2009, 2109) in which the reference voltage vector in the over modulation state can be located. While the reference voltage vector $V_{ref}$ (2001, 2101) in the over modulation state located in the 2.state (1806) triangle in the over modulation operation is being reformed as the reference vector $V_{ref}$', $t_x$ and $t_y$ values need to be compared to determine the lower triangle. Two cases that will occur as a result of comparing are analysed below.

In the basic embodiment of the invention, if $t_y$ is greater than $t_x$ or equal, the 2.state.a in the over modulation operation occurs. When the reference voltage value $V_{ref}$ (2001) in the over modulation state is reformed, the reformed reference voltage vector $V_{ref}$' (2002) is obtained and it becomes the last triangle shown with the lower triangle (2007) where the reformed reference voltage vector is pulled inside. This lower triangle number is (first_triangle [$I_{int}$]) if (s-2) = $I_{int}$ for Sector 1 and Sector 4, if not it is (first_triangle[$I_{int}$+1]-1), (first_triangle[$II_{int}$]) if (s-2) = $II_{int}$ for Sector 2 and Sector 5, if not, (first_triangle[$II_{int}$+1]-1), (first_triangle[$III_{int}$]) if (s-2) = $III_{int}$ for Sector 3 and Sector 6, if not (first_triangle[$III_{int}$+1]-1). The determined triangle numbers are also the last lower triangle number of the line determined with $I_{int}$ for Sector 1 and Sector 4, the last triangle number of the line determined with $II_{int}$ for Sector 2 and Sector 5, the last triangle number of the line determined with $III_{int}$ for Sector 3 and Sector 6.

In the second embodiment of the invention, if $t_y$ is greater than $t_x$ or equal, the 2.state.a in the over modulation operation occurs. When the reference voltage value $V_{ref}$ (2001) in the over modulation state is reformed, the reformed reference voltage vector $V_{ref}$' (2002) is obtained and it becomes the last triangle shown with the lower triangle (2007) where the reformed reference voltage vector is pulled inside. This lower triangle number is (first_triangle [$II_{int}$]-1) for Sector 1 and Sector 4, (first_triangle[$III_{int}$]-1) Sector 2 and Sector 5, (first_triangle[$I_{int}$])-1 for Sector 3 and Sector 6. The determined triangle numbers are also the last lower triangle number of the line determined with ($II_{int}$-1) for Sector 1 and Sector 4, the last triangle number of the line determined with ($III_{int}$-1) for Sector 2 and Sector 5, the last triangle number of the line determined with ($I_{int}$-1) for Sector 3 and Sector 6.

The reformed reference voltage vector $V_{ref}$' (2002) is formed by using the vector shown with (2003) and the resultant vector (2004) for $V_x$' (2006) and $V_y$' (2005) voltage vectors. It provides to determine the state variables suitable for the selection of starting point switching elements of the resultant vector (2004) of $V_x$' and $V_y$' voltage vectors. The period of $V_y$' vector is equal to the switching period defined with $t_y$' and $V_x$' vector period $t_x$' total $T_s$. The zero vector is removed and thus $t_z$ is equal to zero. The formulas to be used to calculate sector-based of the $t_y$' and $t_x$' periods during the reformation of Vref' reference vector corresponding to (1806) triangle, one of the triangles in which the reference voltage vector, which is in the 2.state.a over modulation state in the over modulation operation, can be located are shown in Table 6.

In the basic embodiment of the invention, if $t_x$ is greater than $t_y$ or equal, the 2.state.b in the over modulation operation occurs. When the reference voltage value $V_{ref}$ (2101) in the over modulation state is reformed, the reformed reference voltage vector $V_{ref}$' (2102) is obtained and it becomes the last triangle shown with the lower triangle (2107) where the reformed reference voltage vector is pulled inside. This lower triangle number is (first_triangle [$I_{int}$]-1) for Sector 1 and Sector 4, (first_triangle[$II_{int}$]-1) Sector 2 and Sector 5, (first_triangle[$III_{int}$])-1 for Sector 3 and Sector 6. The determined triangle numbers are also the last lower triangle number of the line determined with ($I_{int}$-1) for Sector 1 and Sector 4, the last triangle number of the line determined with ($II_{int}$-1) for Sector 2 and Sector 5, the last triangle number of the line determined with ($III_{int}$-1) for Sector 3 and Sector 6.

In the second embodiment of the invention, if $t_x$ is greater than $t_y$ or equal, the 2.state.b in the over modulation operation occurs. When the reference voltage value $V_{ref}$ (2101) in the over modulation state is reformed, the reformed reference voltage vector $V_{ref}$' (2102) is obtained and it becomes the last triangle shown with the lower triangle (2107) where the reformed reference voltage vector is pulled inside. This lower triangle number is (first_triangle [$II_{int}$]) if (s-2) = $II_{int}$ for Sector 1 and Sector 4, if not it is (first_triangle[$II_{int}$+1]-1), (first_triangle[$III_{int}$]) if (s-2) = $III_{int}$ for Sector 2 and Sector 5, if not, (first_triangle[$III_{int}$+1]-1), (first_triangle[$I_{int}$]) if (s-2) = $I_{int}$ for Sector 3 and Sector 6, if not (first_triangle[$I_{int}$+1]-1). The determined triangle numbers are also the last lower triangle number of the line determined with ($II_{int}$) for Sector 1 and Sector 4, the last triangle number of the line determined with ($III_{int}$) for Sector 2 and Sector 5, the last triangle number of the line determined with ($I_{int}$) for Sector 3 and Sector 6.

The reformed reference voltage vector $V_{ref}$' (2102) is formed by using the vector shown with (2103) and the resultant vector (2104) for $V_x$' (2106) and $V_y$' (2105) voltage vectors. It provides to determine the state variables suitable for the selection of starting point switching elements of the resultant vector (2104) of $V_x$' and $V_y$' voltage vectors. The period of $V_y$' vector is equal to the switching period defined with $t_y$' and $V_x$' vector period $t_x$' total $T_s$. The zero vector is removed and thus $t_z$ is equal to zero. The formulas to be used to calculate sector-based of the $t_y$' and $t_x$' periods during the reformation of Vref' reference vector corresponding to (1806) triangle, one of the triangles in which the reference voltage vector, which is in the 2.state.b over modulation state in the over modulation operation, can be located are shown in Table 7.

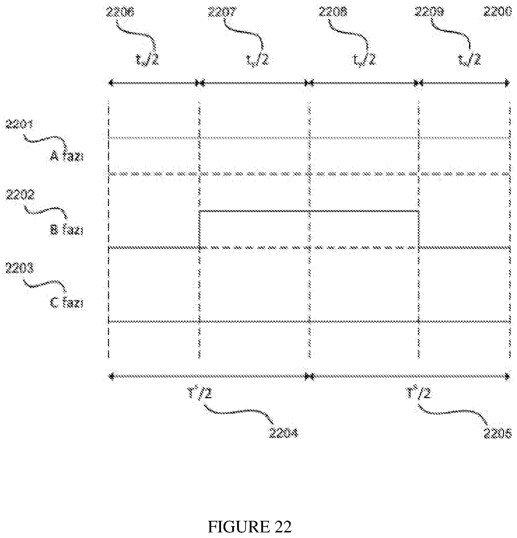

For the reference voltage vector $V_{ref}$ (1901, 2001) in over modulation state, shown in Figure 19 and Figure 20, Sector 1 is shown for the switching sequence of A phase (2201), B phase (2202) and C phase (2203) outputs. A similar method is used for other sectors. Considering Figure 22, (4).Vdc/(4), (4).Vdc/(4), (4).Vdc/(4), (4).Vdc/(4) are applied to the phase A (2201) output. 2.Vdc/(4), 3.Vdc/(4), 3.Vdc/(4), 2.Vdc/(4) are applied to the phase B (2202) output. 0.Vdc/(4), 0.Vdc/(4), 0.Vdc/(4), 0.Vdc/(4) are applied to the phase C (2203) output.

For the reference voltage vector $V_{ref}$ (2101) in over modulation state, shown in Figure 21, Sector 1 is shown for the switching sequence of A phase (2201), B phase (2202) and C phase (2203) outputs. A similar method is used for other sectors. Considering Figure 22, (4).Vdc/(4) (2206) , (4).Vdc/(4), (4).Vdc/(4), (4).Vdc/(4) are applied to the phase A (2201) output. 1.Vdc/(4), 2.Vdc/(4), 2.Vdc/(4), 1.Vdc/(4) are applied to the phase B (2202) output. 0.Vdc/(4), 0.Vdc/(4), 0.Vdc/(4), 0.Vdc/(4) are applied to the phase C (2203) output.

It is shown with the five-level diode clamped converter simulation where a new generalized space vector modulation method for the multi-level converters operates. In this simulation, there is an operation in the over modulation region. In the simulation, five-level phase voltages were obtained in such a way that an output period was 20ms.

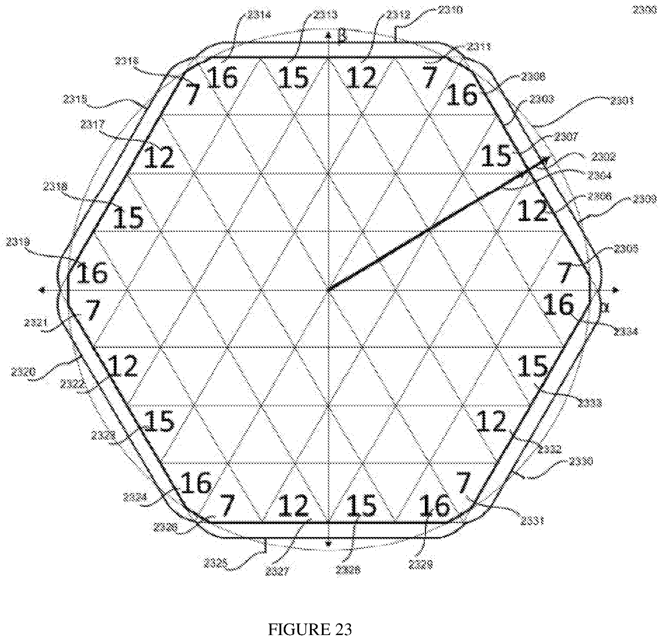

In Figure 23, the five-level space vector diagram is given. It is considered that the reference voltage vector (2302) rotates in it circular orbit in the reference voltage vector orbit (2301). The orbit of the reference voltage vector (2302) is reconstructed so that it is pulled into the space vector diagram. Accordingly, the new reference voltage vector (2304) pulled into the space vector diagram rotates in the orbit (2303) of the new reference voltage vector pulled into the space vector diagram. This orbit passes through the (2309) in Sector 1, the number 7 lower triangle (2305) in Sector 1, the number 12 lower triangle (2306) in Sector 1, the number 15 lower triangle (2307) in Sector 1, the number 16 triangle (2308) in Sector 1. For the other triangles, it passes through the relevant triangles as can be seen similarly in Figure 23.

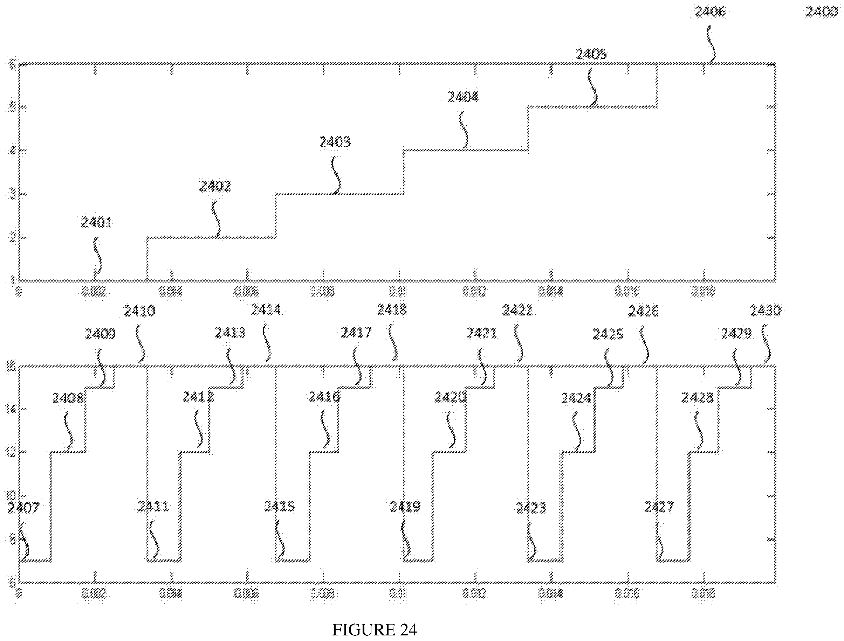

In Figure 24, the result of the triangle finding algorithm for operation in the over modulation region. The results obtained coincide with the reference vector orbit indicated in Figure 23.

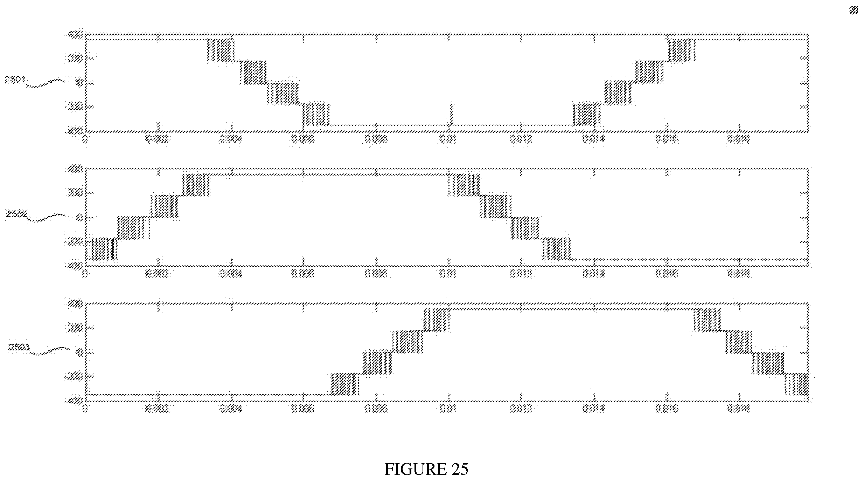

In Figure 25, the phase voltages obtained by the simulation result of the five-level converter operating in the over modulation region by using "A Space Vector Modulation Method for Use in Multi-Level Converters" provided with this invention are given. The phase A is shown with the output voltage (2501), the phase B with the output voltage (2502) and the phase C with the output voltage (2503).

There is an illustration of the method steps of the generalized space vector modulation algorithm for the multi-level converters developed in the present invention below. These steps are listed as follows. During these processes, the number of levels of the multi-level inverter to be designed was determined. The balance/unbalance of the voltages of the capacitors (108, 109, 110, 111, 112) shown in Figure 1 was determined by the capacitor voltage balance block structure (104).

i) In the first stage, it is determined by using the first lower triangle number (Formula 1) in each level of the multi-level space vector diagram. In Figure 5, the lower triangles are shown with $m_1$ (513), $m_2$ (514),..., $m_{s-2}$ (515) and $m_{s-1}$ (516). The values obtained are written on a sequence. The first element of the sequence is always "1". Unless the value "s", which is the level number of the designed multi-level converter, needs to be changed, it is sufficient to calculate the first triangle numbers only once.

ii) Values indicated by I', II' and III' are calculated by using (Formula 4), (Formula 5), (Formula 6), (Formula 7), (Formula 8), (Formula 9), (Formula 10) and (Formula 11). These values will be used in determining which sector the reference vector is in the multi-level space vector diagram, both in calculating the offset value during the finding of the lower triangle and in calculating the residence time of the key elements.

iii) It is determined in which sector the reference vector is located in the space vector diagram (503, 504, 505, 506, 507, 508 in Figure 5), considering $V_\beta$ value and II' and III' values are positive or negative. This determination process is performed by taking the steps determined in Figure 26 into consideration.

iv) Integer components of I', II' and III' values calculated in "ii)" step are determined. This is shown by the formulas (Formula 12), (Formula 13) and (Formula 14).

v) After determining which sector the reference vector is located in the space vector diagram, it is determined in which lower triangle the reference vector end is in the relevant sector. For this purpose, first, an offset value must be calculated and then this offset value must be added to the value calculated with the formula (Formula 1) at the beginning of each line. In the basic embodiment, necessary formulas are given in Table 1 to obtain the lower triangle number by using the offset number and the first triangle value. In the second embodiment, the necessary formulas are given in Table 1.1 to obtain the lower triangle number by using the offset number and the first triangle value.

vi) Whether the reference vector end point is in the hexagon forming the space vector diagram or not, therefore whether the converter operates in the linear modulation region or in the over modulation region are determined within the instructions given in Figure 27. If there is an operation in the linear modulation region, it is passed to step "vii)". If there is an operation in the over-modulation region, it is passed to step "xi)".

vii) When it is determined that the converter operates in the linear modulation region, depending on whether the offset value obtained in v) is even or odd, the triangle named as "1.type" (1103) or "2.type" (1104) in Figure 11 are selected. If the offset value is an even number, the triangle "1.type" (1103) is selected and it is passed to step "viii)". If the offset value is an odd number, then "2.type" (1104) triangle is selected and it is passed to step "ix)".

viii) If the "1.type" triangle is selected, from the formulas given in the column named "1.type" (719 shown in Figure 7 as an example) in Table 4, considering the sector in which the reference vector is located, the $t_x$ and $t_y$ vector periods required to determine the residence time of the key elements, therefore the voltage periods to be applied to the output phases, are calculated. The state variables to be selected directly determine the voltage level to be applied to the output and play an important role in balancing the capacitor voltages (108, 109, 110, 111, 112).

ix) If the "2.type" triangle is selected, the state components that will be most effective in balancing the capacitor voltages (108, 109, 110, 111, 112) must be selected. "2.type" triangles are divided into "2.type.a" (720 shown in Figure 7 as an example) and "2.type.b" (721 shown in Figure 7 as an example). In order to obtain the output phase voltages by using these triangles, the zero vector varies depending on the change of the starting points. For "2.type.a", for example, it starts from 710 in 720 shown in Figure 7 and for "2.type.b" from 716 in 721 shown in Figure 7. After the decision is made for "2.type.a" or "2.type.b", the residence period of the key elements in the transmission is determined. If the "2.type.a" triangle is selected, from the formulas given in the column named "2.type.a" (720 shown in Figure 7 as an example) in Table 4, considering the sector in which the reference vector is located, the $t_x$ and $t_y$ vector periods required to determine the residence time of the key elements, therefore the voltage periods to be applied to the output phases, are calculated. If the "2.type.b" triangle is selected, from the formulas given in the line named "2.type.b" (721 shown in Figure 7 as an example) in Table 4, considering the sector in which the reference vector is located, the $t_x$ and $t_y$ vector periods required to determine the residence time of the key elements, therefore the voltage periods to be applied to the output phases, are calculated.

Table 4

| Sector | "1.type" Triangle | "2.type.a" Triangle | "2.type.b" Triangle |
|---|---|---|---|
| I | $t_x = (II' - II_{int})T_s$<br>$t_y = (I' - I_{int})T_s$ | $t_x = (III' - III_{int})T_s$<br>$t_y = (II_{int} + 1 - II')T_s$ | $t_x = (I_{int} + 1 - I')T_s$<br>$t_y = (III' - III_{int})T_s$ |
| II | $t_x = (III' - III_{int})T_s$<br>$t_y = (II' - II_{int})T_s$ | $t_x = (I' - I_{int})T_s$<br>$t_y = (III_{int} + 1 - III')T_s$ | $t_x = (II_{int} + 1 - II')T_s$<br>$t_y = (I' - I_{int})T_s$ |

(continued)

| Sector | "1.type" Triangle | "2.type.a" Triangle | "2.type.b" Triangle |
|---|---|---|---|
| III | $t_x = (I' - I_{int})T_s$ <br> $t_y = (III' - III_{int})T_s$ | $t_x = (II' - II_{int})T_s$ <br> $t_y = (I_{int} + 1 - I')T_s$ | $t_x = (III_{int} + 1 - III')T_s$ <br> $t_y = II_{int})T_s$ |
| IV | $t_x = (II' - II_{int})T_s$ <br> $t_y = (I' - I_{int})T_s$ | $t_x = (III' - III_{int})T_s$ <br> $t_y = (II_{int} + 1 - II')T_s$ | $t_x = (I_{int} + 1 - I')T_s$ <br> $t_y = (III' - III_{int})T_s$ |
| V | $t_x = (III' - III_{int})T_s$ <br> $t_y = (II' - II_{int})T_s$ | $t_x = (I' - I_{int})T_s$ <br> $t_y = (III_{int} + 1 - III')T_s$ | $t_x = (II_{int} + 1 - II')T_s$ <br> $t_y = (I' - I_{int})T_s$ |
| VI | $t_x = (I' - I_{int})T_s$ <br> $t_y = (III' - III_{int})T_s$ | $t_x = (II' - II_{int})T_s$ <br> $t_y = (I_{int} + 1 - I')T_s$ | $t_x = (III_{int} + 1 - III')T_s$ <br> $t_y = (II' - II_{int})T_s$ |

x) After calculating $t_x$ and $t_y$ times, $T_s$ is calculated by subtracting the calculated values from a period value, $t_z$, zero vector period is calculated. In order to obtain the phase output voltages, the required key element periods are calculated. The residence time of the key elements in the transmission depending on the $t_x$, $t_y$ and $t_z$ periods are applied to the multi-level converter (103) with the level number "s" shown in Figure 1, with the multi-level space vector controller (101).

xi) In the case of operation in the over modulation region, the reference vector orbit (1803) is reformed such that the orbit (1801) of the reference vector remains within the space vector modulation. Depending on the original (1801) position of the reference vector (1908, 2009, 2109), it is determined which "1.type" lower triangle will be selected in the new orbit. According to this result, in the over modulation operation, the over modulation state "1.state", "2.state.a", "2.state.b" is determined. The transmission periods of the switching elements are determined by calculating the $t_x$ and $t_y$ periods of the $V_x'$ (1906, 2006, 2106) and $V_y'$ (1905, 2005, 2105) vector components of the new created $V_{ref}'$ vector. Zero vectors are not available for the over modulation state, thus $t_z$ is equal to zero. In Table-5, Table-6 and Table-7, calculation of $t_x'$ and $t_y'$ periods is shown.

Table 5

| Sector | 1.state |
|---|---|
| I | $$t_y' = \frac{T_s\left[(s-1)t_y - (t_x + t_y - T_s)I_{int}\right]}{t_x + t_y + (s-2)T_s}$$ <br> or <br> $$t_y' = \frac{T_s\left[((s-1) - I_{int})(I' - I_{int}) - ((II' - II_{int}) - 1)I_{int}\right]}{(II' - II_{int}) + (I' - I_{int}) + (s-2)}$$ <br> $t_x' = T_s - t_y'$ |
| II | $$t_y' = \frac{T_s\left[(s-1)t_y - (t_x + t_y - T_s)II_{int}\right]}{t_x + t_y + (s-2)T_s}$$ <br> or <br> $$t_y' = \frac{T_s\left[((s-1) - II_{int})(II' - II_{int}) - ((III' - III_{int}) - 1)II_{tam}\right]}{(III' - III_{int}) + (II' - II_{int}) + (s-2)}$$ <br> $t_x' = T_s - t_y'$ |

(continued)

| Sector | 1.state |
|---|---|
| III | $t_y' = \dfrac{T_s\left[(s-1)t_y - (t_x + t_y - T_s)III_{int}\right]}{t_x + t_y + (s-2)T_s}$ <br><br> or <br><br> $t_y' = \dfrac{T_s\left[((s-1)-III_{int})(III'-III_{int}) - ((I'-I_{int})-1)III_{int}\right]}{(I'-I_{int}) + (III'-III_{int}) + (s-2)}$ <br><br> $t_x' = T_s - t_y'$ |
| IV | $t_y' = \dfrac{T_s\left[(s-1)t_y - (t_x + t_y - T_s)I_{int}\right]}{t_x + t_y + (s-2)T_s}$ <br><br> or <br><br> $t_y' = \dfrac{T_s\left[((s-1)-I_{int})(I'-I_{int}) - ((II'-II_{int})-1)I_{int}\right]}{(II'-II_{int}) + (I'-I_{int}) + (s-2)}$ <br><br> $t_x' = T_s - t_y'$ |
| V | $t_y' = \dfrac{T_s\left[(s-1)t_y - (t_x + t_y - T_s)II_{int}\right]}{t_x + t_y + (s-2)T_s}$ <br><br> or <br><br> $t_y' = \dfrac{T_s\left[((s-1)-II_{int})(II'-II_{int}) - ((III'-III_{int})-1)II_{int}\right]}{(III'-III_{int}) + (II'-II_{int}) + (s-2)}$ <br><br> $t_x' = T_s - t_y'$ |
| VI | $t_y' = \dfrac{T_s\left[(s-1)t_y - (t_x + t_y - T_s)III_{int}\right]}{t_x + t_y + (s-2)T_s}$ <br><br> or <br><br> $t_y' = \dfrac{T_s\left[((s-1)-III_{int})(III'-III_{int}) - ((I'-I_{int})-1)III_{int}\right]}{(I'-I_{int}) + (III'-III_{int}) + (s-2)}$ <br><br> $t_x' = T_s - t_y'$ |

Table 6

| Sector | 2.state.a |
|---|---|
| I | $t_y' = \dfrac{T_s\left[(s-1)t_y - (t_x + t_y)I_{int}\right]}{t_x + t_y + (s-1)T_s}$ <br><br> or <br><br> $t_y' = \dfrac{T_s\left[((s-1)-I_{int})(I'-I_{int}) - (II'-II_{int})I_{int}\right]}{(II'-II_{int}) + (I'-I_{int}) + (s-1)}$ <br><br> $t_x' = T_s - t_y'$ |

(continued)

| Sector | 2.state.a |
|--------|-----------|
| II | $$t_y' = \frac{T_s\left[(s-1)t_y - (t_x + t_y)II_{int}\right]}{t_x + t_y + (s-1)T_s}$$ or $$t_y' = \frac{T_s\left[((s-1)-II_{int})(II'-II_{int}) - (III'-III_{int})II_{int}\right]}{(III'-III_{int}) + (II'-II_{int}) + (s-1)}$$ $t_x' = T_s - t_y'$ |
| III | $$t_y' = \frac{T_s\left[(s-1)t_y - (t_x + t_y)III_{int}\right]}{t_x + t_y + (s-1)T_s}$$ or $$t_y' = \frac{T_s\left[((s-1)-III_{int})(III'-III_{int}) - (I'-I_{int})III_{int}\right]}{(I'-I_{int}) + (III'-III_{int}) + (s-1)}$$ $t_x' = T_s - t_y'$ |
| IV | $$t_y' = \frac{T_s\left[(s-1)t_y - (t_x + t_y)I_{int}\right]}{t_x + t_y + (s-1)T_s}$$ or $$t_y' = \frac{T_s\left[((s-1)-I_{int})(I'-I_{int}) - (II'-II_{int})I_{int}\right]}{(II'-II_{int}) + (I'-I_{int}) + (s-1)}$$ $t_x' = T_s - t_y'$ |
| V | $$t_y' = \frac{T_s\left[(s-1)t_y - (t_x + t_y)II_{int}\right]}{t_x + t_y + (s-1)T_s}$$ or $$t_y' = \frac{T_s\left[((s-1)-II_{int})(II'-II_{int}) - (III'-III_{int})II_{int}\right]}{(III'-III_{int}) + (II'-II_{int}) + (s-1)}$$ $t_x' = T_s - t_y'$ |
| VI | $$t_y' = \frac{T_s\left[(s-1)t_y - (t_x + t_y)III_{int}\right]}{t_x + t_y + (s-1)T_s}$$ or $$t_y' = \frac{T_s\left[((s-1)-III_{int})(III'-III_{int}) - (I'-I_{int})III_{int}\right]}{(I'-I_{int}) + (III'-III_{int}) + (s-1)}$$ $t_x' = T_s - t_y'$ |

Table 7

| Sector | 2.state.b |
|---|---|
| I | $$t_y{}' = \frac{T_s\left[(s-1)(T_s+t_y)-(t_x+t_y)(I_{int}-1)\right]}{t_x+t_y+(s-1)T_s}$$ or $$t_y{}' = \frac{T_s\left[(s-1)+(s-I_{int})(I'-I_{int})-(II'-II_{int})(I_{int}-1)\right]}{(II'-II_{int})+(I'-I_{int})+(s-1)}$$ $t_x{}' = T_s - t_y{}'$ |
| II | $$t_y{}' = \frac{T_s\left[(s-1)(T_s+t_y)-(t_x+t_y)(II_{int}-1)\right]}{t_x+t_y+(s-1)T_s}$$ or $$t_y{}' = \frac{T_s\left[(s-1)+(s-II_{int})(II'-II_{int})-(III'-III_{int})(II_{int}-1)\right]}{(III'-III_{int})+(II'-II_{int})+(s-1)}$$ $t_x{}' = T_s - t_y{}'$ |
| III | $$t_y{}' = \frac{T_s\left[(s-1)(T_s+t_y)-(t_x+t_y)(III_{int}-1)\right]}{t_x+t_y+(s-1)T_s}$$ or $$t_y{}' = \frac{T_s\left[(s-1)+(s-III_{int})(III'-III_{int})-(I'-I_{int})(III_{int}-1)\right]}{(I'-I_{int})+(III'-III_{int})+(s-1)}$$ $t_x{}' = T_s - t_y{}'$ |
| IV | $$t_y{}' = \frac{T_s\left[(s-1)(T_s+t_y)-(t_x+t_y)(I_{int}-1)\right]}{t_x+t_y+(s-1)T_s}$$ or $$t_y{}' = \frac{T_s\left[(s-1)+(s-I_{int})(I'-I_{int})-(II'-II_{int})(I_{int}-1)\right]}{(II'-II_{int})+(I'-I_{int})+(s-1)}$$ $t_x{}'=T_s-t_y{}'$ |
| V | $$t_y{}' = \frac{T_s\left[(s-1)(T_s+t_y)-(t_x+t_y)(II_{int}-1)\right]}{t_x+t_y+(s-1)T_s}$$ or $$t_y{}' = \frac{T_s\left[(s-1)+(s-II_{int})(II'-II_{int})-(III'-III_{int})(II_{int}-1)\right]}{(III'-III_{int})+(II'-II_{int})+(s-1)}$$ $t_x{}'=T_s-t_y{}'$ |

# EP 4 118 492 B1

(continued)

| Sector | 2.state.b |
|---|---|
| VI | $$t_y' = \frac{T_s\left[(s-1)(T_s+t_y)-(t_x+t_y)(III_{int}-1)\right]}{t_x+t_y+(s-1)T_s}$$ <br> or <br> $$t_y' = \frac{T_s\left[(s-1)+(s-III_{int})(III'-III_{int})-(I'-I_{int})(III_{int}-1)\right]}{(I'-I_{int})+(III'-III_{int})+(s-1)}$$ <br> $t_x'=T_s-t_y'$ |

The scope of protection of the invention is specified in the attached claims and it cannot be limited to descriptions above in this detailed description for the purpose of example. It is clear that a person skilled in the art can present similar embodiments in the light of the above descriptions, without departing from the main idea of the invention.

**REFERENCE NUMBERS GIVEN IN FIGURES**

100 Multi-level converter circuit
101 Multi-level space vector modulation controller
102 Reference voltage vector source
103 Capacitor voltage balance determiner
104 Multi-level Converter
105 AC end
106 Output line
107 DC end
108, 109, 110, 111, 112 DC line capacitor
113 Capacitor connection point
114 Positive DC line
115 Negative DC line
116 Capacitor end point
15 Sector
150 Lower triangle
151 First triangle
152 First edge
153 Second edge
200 representative view of the single phase arm of the three-phase diode clamped multi-level converter
300 representative view of single phase arm of three-phase capacitor/condenser clamped multi-level converter
400 representative view of a single phase arm of a three-phase cascade connected H-bridge type multi-level converter
500 Multi-level Space Vector Diagram
501 "β" axis of two axis αβ coordinate system
502 "α" axis, "A" axis and "x" axis of two axis αβ coordinate system
503 Sector 1
504 Sector 2
505 Sector 3
506 Sector 4
507 Sector 5
508 Sector 6
509 last lower triangle in sector 1 in line 2
510 "x" axis in sector 1
511 "y" axis in sector 1
512 Space vector diagram state variables
513 first lower triangle in sector 1 in line 1

514 first lower triangle in sector 1 in line 2

515 first lower triangle in sector 1 in line (s-2)

516 first lower triangle in sector 1 in line (s-1)

517 last lower triangle in sector 1 in line 1

518 last lower triangle in sector 1 in line (s-2)

519 lower triangle in which reference voltage vector end is located in sector 1

520 $V_\alpha$ component

521 $V_\beta$ component

522 Reference voltage vector

523 component of reference voltage vector in x axis in Sector 1

524 component of reference voltage vector in y axis in Sector 1

525 side length of space vector diagram

526 origin of reference voltage vector for operation example in linear modulation region

527 origin of reference voltage vector for operation example in border of linear modulation region

528 circular origin

533 first line for sector 1 in basic embodiment

534 first line for sector 2 in basic embodiment

535 first line for sector 3 in basic embodiment

536 first line for sector 4 in basic embodiment

537 first line for sector 5 in basic embodiment

538 first line for sector 6 in basic embodiment

539 first line for sector 1 in second embodiment

540 first line for sector 2 in second embodiment

541 first line for sector 3 in second embodiment

542 first line for sector 4 in second embodiment

543 first line for sector 5 in second embodiment

544 first line for sector 6 in second embodiment

600 Multi-level Space Vector Diagram

601 Multi-level Space Vector Diagram for Sector 1

602 Multi-level Space Vector Diagram for Sector 2

603 Multi-level Space Vector Diagram for Sector 3

604 Multi-level Space Vector Diagram for Sector 4

605 Multi-level Space Vector Diagram for Sector 5

606 Multi-level Space Vector Diagram for Sector 6

607, 608, 609, 611, 612, 613, 614, 615, 616, 617, 618, 619, 620, 621, 622, 623, state variables

624 1. Type lower triangle

625 2. Type lower triangle

626 A axis in three-phase coordinate system

627 B axis in three-phase coordinate system

628 C axis in three-phase coordinate system

700 selection of state variables for 1. Type and 2. Type lower triangles

701 first step in selection of state variable selection for 1. Type triangles

702 second step in selection of state variable selection for 1. Type triangles

703 third step in selection of state variable selection for 1. Type triangles

704 first state variable selected for 1. Type triangles

705 second state variable selected for 1. Type triangles

706 third state variable selected for 1. Type triangles

707 first step in selection of state variable for 2.type.a triangles

708 second step in selection of state variable for 2.type.a triangles

709 third step in selection of state variable for 2.type.a triangles

710 first state variable selected for 2.type.a triangles

711 second state variable selected for 2.type.a triangles

712 third state variable selected for 2.type.a triangles

713 first step in selection of state variable for 2.type.b triangles

714 second step in selection of state variable for 2.type.b triangles

715 third step in selection of state variable for 2.type.b triangles

716 first state variable selected for 2.type.b triangles

717 second state variable selected for 2.type.b triangles

718 third state variable selected for 2.type.b triangles

719 1. Type triangle

720 2.Type.a triangle

721 2.Type.b triangle

800 presentation of output phase order based on selection of 1.type triangle sate variables for sector 1

801 A phase

802 B phase

803 C phase

804 zero voltage vector state variable

805 $V_x$ voltage vector state variable

806 $V_y$ voltage vector state variable

807 zero voltage vector state variable

808 zero voltage vector state variable

809 $V_y$ voltage vector state variable

810 $V_x$ voltage vector state variable

811 zero voltage vector state variable

812 half of switching period

813 one quarter of zero voltage vector application period

814 half of $V_x$ voltage vector application period

815 half of $V_y$ voltage vector application period

816 one quarter of zero voltage vector application period

817 one quarter of zero voltage vector application period

818 half of $V_y$ voltage vector application period

819 half of $V_x$ voltage vector application period

820 one quarter of zero voltage vector application period

821 half of switching period

900 representation of output phase order based on selection of 2.type.a triangle state variables is Sector 1

901 A phase

902 B phase

903 C phase

904 state variable showing zero voltage vector

905 state variable showing $V_x$ voltage vector

906 state variable showing $V_y$ voltage vector

907 state variable showing zero voltage vector

908 state variable showing zero voltage vector

909 state variable showing $V_y$ voltage vector

910 state variable showing $V_x$ voltage vector

911 state variable showing zero voltage vector

912 half of switching period

913 one quarter of zero voltage vector application period

914 Half of $V_x$ voltage vector application period

915 Half of $V_y$ voltage vector application period

916 One quarter of zero voltage vector application period

917 One quarter of zero voltage vector application period

918 Half of $V_y$ voltage vector application period

919 Half of $V_x$ voltage vector application period

920 One quarter of zero voltage vector application period

921 Half of switching period

1000 representation of output phase order based on selection of 2.type.b triangle state variables is Sector 1

1001 A phase

1002 B phase

1003 C phase

1004 State variable showing zero voltage vector

1005 State variable showing $V_x$ voltage vector

1006 State variable showing $V_y$ voltage vector

1007 State variable showing zero voltage vector

1008 State variable showing zero voltage vector

1009 State variable showing $V_y$ voltage vector

1010 State variable showing V$_x$ voltage vector

1011 State variable showing zero voltage vector

1012 half period

1013 One quarter of zero voltage vector application period

1014 Half of V$_x$ voltage vector application period

1015 Half of V$_y$ voltage vector application period

1016 One quarter of zero voltage vector application period

1017 One quarter of zero voltage vector application period

1018 Half of V$_y$ voltage vector application period

1019 Half of V$_x$ voltage vector application period

1020 One quarter of zero voltage vector application period

1021 Half of switching period

1100 Sector 1 of four-level converter space vector diagram

1101 "β" axis of two axis αβ coordinate system

1102 V$_\beta$

1103 1.type lower triangle

1104 2.type lower triangle

1105 V$_\alpha$

1106 reference voltage vector V$_{ref}$

1107 "α" axis of two axis αβ coordinate system

1108 Sector 1 in four-level converter space vector diagram

1200 formation of reference voltage vector in "1.type" triangle

1201 reference voltage vector

1202 V$_x$ voltage vector

1205 vector used to form reference voltage vector

1206 V$_y$ voltage vector

1207 resultant vector for V$_x$ and V$_y$ voltage vectors

1214 starting state variable to be selected when 1.type triangle is used to form reference voltage vector

1300 formation of reference voltage vector in "2.type.a" triangle

1301 reference voltage vector

1302 V$_x$ voltage vector

1305 vector used to form reference voltage vector

1306 V$_y$ voltage vector

1307 resultant vector for V$_x$ and V$_y$ voltage vectors

1314 starting state variable to be selected when 1.type triangle is used to form reference voltage vector

1400 formation of reference voltage vector in "2.type.b" triangle

1401 reference voltage vector

1402 V$_x$ voltage vector

1405 vector used to form reference voltage vector

1406 V$_y$ voltage vector

1407 resultant vector for V$_x$ and V$_y$ voltage vectors

1414 starting state variable to be selected when 1.type triangle is used to form reference voltage vector

1500 lower triangles through which an orbit of a reference voltage vector passes in 5-level space vector diagram operating in linear region

1501 Orbit of reference voltage vector

1502 Reference voltage vector

1503 Sector 1

1509 lower triangle number 7 in Sector 1

1510 lower triangle number 6 in Sector 1

1511 lower triangle number 12 in Sector 1

1512 lower triangle number 11 in Sector 1

1513 lower triangle number 15 in Sector 1

1514 lower triangle number 14 in Sector 1

1515 lower triangle number 16 in Sector 1

1504 Sector 2

1516 lower triangle number 7 in Sector 2

1517 lower triangle number 6 in Sector 2

1518 lower triangle number 12 in Sector 2

1519 lower triangle number 11 in Sector 2
1520 lower triangle number 15 in Sector 2
1521 lower triangle number 14 in Sector 2
1522 lower triangle number 16 in Sector 2
1505 Sector 3
1523 lower triangle number 7 in Sector 3
1524 lower triangle number 6 in Sector 3
1525 lower triangle number 12 in Sector 3
1526 lower triangle number 11 in Sector 3
1527 lower triangle number 15 in Sector 3
1528 lower triangle number 14 in Sector 3
1529 lower triangle number 16 in Sector 3
1506 Sector 4
1530 lower triangle number 7 in Sector 4
1531 lower triangle number 6 in Sector 4
1532 lower triangle number 12 in Sector 4
1533 lower triangle number 11 in Sector 4
1534 lower triangle number 15 in Sector 4
1535 lower triangle number 14 in Sector 4
1536 lower triangle number 16 in Sector 4
1507 Sector 5
1537 lower triangle number 7 in Sector 5
1538 lower triangle number 6 in Sector 5
1539 lower triangle number 12 in Sector 5
1540 lower triangle number 11 in Sector 5
1541 lower triangle number 15 in Sector 5
1542 lower triangle number 14 in Sector 5
1543 lower triangle number 16 in Sector 5
1508 Sector 6
1544 lower triangle number 7 in Sector 6
1545 lower triangle number 6 in Sector 6
1546 lower triangle number 12 in Sector 6
1547 lower triangle number 11 in Sector 6
1548 lower triangle number 15 in Sector 6
1549 lower triangle number 14 in Sector 6
1550 lower triangle number 16 in Sector 6
1600 calculation results of lower triangles through which an orbit of a reference vector passes in 5-level space vector diagram operating in linear modulation region
1601 Sector 1
1607 lower triangle number 7 in Sector 1
1608 lower triangle number 6 in Sector 1
1609 lower triangle number 12 in Sector 1
1610 lower triangle number 11 in Sector 1
1611 lower triangle number 15 in Sector 1
1612 lower triangle number 14 in Sector 1
1613 lower triangle number 16 in Sector 1
1602 Sector 2
1614 lower triangle number 7 in Sector 2
1615 lower triangle number 6 in Sector 2
1616 lower triangle number 12 in Sector 2
1617 lower triangle number 11 in Sector 2
1618 lower triangle number 15 in Sector 2
1619 lower triangle number 14 in Sector 2
1620 lower triangle number 16 in Sector 2
1603 Sector 3
1621 lower triangle number 7 in Sector 3
1622 lower triangle number 6 in Sector 3
1623 lower triangle number 12 in Sector 3

1624 lower triangle number 11 in Sector 3
1625 lower triangle number 15 in Sector 3
1626 lower triangle number 14 in Sector 3
1627 lower triangle number 16 in Sector 3
1604 Sector 4
1628 lower triangle number 7 in Sector 4
1629 lower triangle number 6 in Sector 4
1630 lower triangle number 12 in Sector 4
1631 lower triangle number 11 in Sector 4
1632 lower triangle number 15 in Sector 4
1633 lower triangle number 14 in Sector 4
1634 lower triangle number 16 in Sector 4
1605 Sector 5
1635 lower triangle number 7 in Sector 5
1636 lower triangle number 6 in Sector 5
1637 lower triangle number 12 in Sector 5
1638 lower triangle number 11 in Sector 5
1639 lower triangle number 15 in Sector 5
1640 lower triangle number 14 in Sector 5
1641 lower triangle number 16 in Sector 5
1606 Sector 6
1642 lower triangle number 7 in Sector 6
1643 lower triangle number 6 in Sector 6
1644 lower triangle number 12 in Sector 6
1645 lower triangle number 11 in Sector 6
1646 lower triangle number 15 in Sector 6
1647 lower triangle number 14 in Sector 6
1648 lower triangle number 16 in Sector 6
1700 three-phase output voltages obtained with application of the invention depending on a reference vector diagram in 5-level space vector diagram operating in linear modulation region
1701 A phase output voltage
1702 B phase output voltage
1703 C phase output voltage
1800 determining orbit of reference voltage vector again in over modulation state
1801 Reference voltage vector ($V_{ref}$)
1802 Reference voltage vector ($V_{ref}$) orbit
1803 Reference voltage vector ($V_{ref}$) orbit
1804 Reformed Reference voltage vector ($V_{ref}'$)
1805 one of the triangles in which reference voltage vector, which is in over modulation state, can be located
1806 another of the triangles in which reference voltage vector, which is in over modulation state, can be located
1900 first of the states where reference voltage vector rotating in over modulation state can be reformed
1901 reference voltage vector $V_{ref}$ in over modulation state
1902 reformed reference voltage vector $V_{ref}'$
1903 vector used to form reference voltage vector
1904 resultant vector for $V_x$ and $V_y$
1905 $V_x$ voltage vector
1906 $V_y$ voltage vector
1907 lower triangle in which reformed reference vector is pulled
1908 one of the triangles in which reference voltage vector, which is in over modulation state, can be located
1909 one of the triangles in which reference voltage vector, which is in over modulation state, can be located
2000 second of the states where reference voltage vector rotating in over modulation state can be reformed
2001 reference voltage vector $V_{ref}$ in over modulation state
2002 reformed reference voltage vector $V_{ref}'$
2003 vector used to form reference voltage vector
2004 resultant vector for $V_x$ and $V_y$
2005 $V_x$ voltage vector
2006 $V_y$ voltage vector
2007 lower triangle in which reformed reference vector is pulled

2008 one of the triangles in which reference voltage vector, which is in over modulation state, can be located

2009 one of the triangles in which reference voltage vector, which is in over modulation state, can be located

2100 third of the states where reference voltage vector rotating in over modulation state can be reformed

2101 reference voltage vector $V_{ref}$ in over modulation state

2102 reformed reference voltage vector $V_{ref}$'

2103 vector used to form reference voltage vector

2104 resultant vector for $V_x$ and $V_y$

2105 $V_x$ voltage vector

2106 $V_y$ voltage vector

2107 lower triangle in which reformed reference vector is pulled

2108 one of the triangles in which reference voltage vector, which is in over modulation state, can be located

2109 one of the triangles in which reference voltage vector, which is in over modulation state, can be located

2200 representation of output order depending on selection of state variable for Sector 1 in over modulation state

2201 A phase

2202 B phase

2203 C phase

2204 Half of switching period

2205 Half of switching period

2206 Half of $V_x$ voltage vector application period

2207 Half of $V_y$ voltage vector application period

2208 Half of $V_y$ voltage vector application period

2209 Half of $V_x$ voltage vector application period

2300 through which an orbit of a reference vector diagram passes in 5-level space vector diagram operating in over modulation region

2301 orbit of reference voltage vector

2302 reference voltage vector

2303 orbit of new reference voltage vector pulled into space vector diagram

2304 new reference voltage vector pulled into space vector diagram

2305 lower triangle number 7 in Sector 1

2306 lower triangle number 12 in Sector 1

2307 lower triangle number 15 in Sector 1

2308 lower triangle number 16 in Sector 1

2309 Sector 1

2310 Sector 2

2311 lower triangle number 7 in Sector 2

2312 lower triangle number 12 in Sector 2

2313 lower triangle number 15 in Sector 2

2314 lower triangle number 16 in Sector 2

2315 Sector 3

2316 lower triangle number 7 in Sector 3

2317 lower triangle number 12 in Sector 3

2318 lower triangle number 15 in Sector 3

2319 lower triangle number 16 in Sector 3

2320 Sector 4

2321 lower triangle number 7 in Sector 4

2322 lower triangle number 12 in Sector 4

2323 lower triangle number 15 in Sector 4

2324 lower triangle number 16 in Sector 4

2325 Sector 5

2326 lower triangle number 7 in Sector 5

2327 lower triangle number 12 in Sector 5

2328 lower triangle number 15 in Sector 5

2329 lower triangle number 16 in Sector 5

2330 Sector 6

2331 lower triangle number 7 in Sector 6

2332 lower triangle number 12 in Sector 6

2333 lower triangle number 15 in Sector 6

2334 lower triangle number 16 in Sector 6

2400 calculation results of lower triangles through which an orbit of a reference voltage vector passes in 5-level space vector diagram operating in over modulation region

2401 Sector 1

2407 lower triangle number 7 in Sector 1

2408 lower triangle number 12 in Sector 1

2409 lower triangle number 15 in Sector 1

2410 lower triangle number 16 in Sector 1

2402 Sector 2

2411 lower triangle number 7 in Sector 2

2412 lower triangle number 12 in Sector 2

2413 lower triangle number 15 in Sector 2

2414 lower triangle number 16 in Sector 2

2403 Sector 3

2415 lower triangle number 7 in Sector 3

2416 lower triangle number 12 in Sector 3

2417 lower triangle number 15 in Sector 3

2418 lower triangle number 16 in Sector 3

2404 Sector 4

2419 lower triangle number 7 in Sector 4

2420 lower triangle number 12 in Sector 4

2421 lower triangle number 15 in Sector 4

2422 lower triangle number 16 in Sector 4

2405 Sector 5

2423 lower triangle number 7 in Sector 5

2424 lower triangle number 12 in Sector 5

2425 lower triangle number 15 in Sector 5

2426 lower triangle number 16 in Sector 5

2406 Sector 6

2427 lower triangle number 7 in Sector 6

2428 lower triangle number 12 in Sector 6

2429 lower triangle number 15 in Sector 6

2430 lower triangle number 16 in Sector 6

2500 three-phase output voltages obtained with application of the invention depending on a reference voltage vector in 5-Level space vector diagram operating in over modulation region

2501 A phase output voltage

2502 B phase output voltage

2503 C phase output voltage

2501 A phase output voltage

2502 B phase output voltage

2503 C phase output voltage

2601 First state

2602 Second state

2603 Sector 1 selection

2604 Third state

2605 Sector 2 selection

2606 Sector 3 selection

2607 Fourth state

2608 Sector 6 selection

2609 Fifth state

2610 Sector 4 selection step

2611 Sector 5 selection

2701 First step

2702 Second step

2703 Third step

2704 Fourth step

2705 Fifth step

**Claims**

1. A method performed by a multi-level space vector modulation controller (100) of a system comprising one multi-level space vector modulation controller (100) in connection with a multi-level converter (300) controlling said multi-level converter (300) to perform space vector modulation according to its position in a space vector diagram (500) comprising six sectors (15) in the form of an equilateral hexagon whose center is coincident with the origin of an α-β (alpha-beta) coordinate system and in the form of equilateral triangles and lower triangles (150) in an equilateral triangle structure provided within said sectors (15) of the multi-level converter (300) with level number "s" provided between an AC end and a DC end, and a rotating reference voltage vector (522) in a three-axial A,B,C three-phase coordinate system, the method comprising the following steps:

 - each sector (15) of the space vector diagram (500) is assigned a reference pointer and a sector guide recorded in a memory unit,
 - the number 1 is assigned for each sector (15) to a first lower triangle (151) whose corner is directly connected to the origin and each lower triangle (150) is given numbers so that the other lower triangles (150) are assigned successive values starting from said first lower triangle (151) following the number 1 in a first direction parallel to a first edge directly connected with the first lower triangle (151), and increasing consecutive values and a lower triangle guide recorded in said memory unit is accessed,
 - Vα and Vβ are the components of said reference voltage vector (522) and $V_{dc}$ is the total voltage value applied to the multi-level converter,

wherein

$$II_{sign} = (3V_\alpha - \sqrt{3}V_\beta)(s-1)\frac{1}{2}\frac{1}{V_{dc}},$$

$$III_{sign} = (3V_\alpha + \sqrt{3}V_\beta)(s-1)\frac{1}{2}\frac{1}{V_{dc}},$$

$$II' = \left| II_{sign} \right|,$$

$$III' = \left| III_{sign} \right|$$

 - the II' and the III' values are calculated from the above equations and
 - it is determined in which sector (15) the reference voltage vector (15) is located in the space vector diagram, considering that the Vβ component value and the II' and III' values are positive or negative,

$$I' = \left| (\sqrt{3}V_\beta)(s-1)\frac{1}{V_{dc}} \right|,$$

$$\left| 3V_\alpha \right| > \left| \sqrt{3}V_\beta \right| \Rightarrow I' = \left| III_{sign} - II_{sign} \right|$$

For sector I-III-IV-VI,

$$\left| 3V_\alpha \right| < \left| \sqrt{3}V_\beta \right| \Rightarrow I' = \left| III_{sign} \right| + \left| II_{sign} \right|$$

For Sector II - V,
 - the value I' is determined from one of the equations,
 - integer components of I', II' and III' values are determined as $I_{int}$, $II_{int}$, $III_{int}$,

- a first_triangle[x] refers to a sequence in which each line in the sector is ordered according to the increasing numbers of the first triangles that directly contact with said first edge,

for sector 1 and 4

$$\text{triangle number= first\_triangle } [I_{int}] + III_{int} + II_{int} - I_{int},$$

for sector 2 and 5

$$\text{triangle number= first\_triangle } [II_{int}] + III_{int} + I_{int} - II_{int},$$

for sector 3 and 6

$$\text{triangle number= first\_triangle } [III_{int}] + II_{int} + I_{int} - III_{int},$$

by using the above equations, the number assigned to the lower triangle (150) in which the reference voltage vector (522) is located, is determined;
further comprising the following steps to determine whether the inverter operates in the linear modulation region or the over modulation region:

- it is determined whether $I_{int}$ value for sector 1 and sector 4, $II_{int}$ value for sector 2 and sector 5, $III_{int}$ value for sector 3 and sector 6 are equal to (s-2) value or not,
- if equal, a deviation value different from first_triangle[$I_{int}$] number for sector 1 and 4, first_triangle[$II_{int}$] number for sector 2 and 5, first_triangle[$III_{int}$] number for sector 3 and 6 of a number assigned to the determined lower triangle is determined,
- if not equal, a deviation value different from first_triangle[$I_{int}$+1]-1)] number for sector 1 and 4, first_triangle[$II_{int}$+1]-1)] number for sector 2 and 5, first_triangle[$III_{int}$+1]-1)] number for sector 3 and 6 of the number assigned to the determined lower triangle is determined,
- over modulation operation is determined if the deviation value is a positive integer and linear modulation operation is determined if the deviation value is zero or a negative integer; and further comprising the following steps:

- the lower triangle type is determined as type 1 or type 2 depending on whether the first_triangle [$I_{int}$], the first_triangle [$II_{int}$] and the first_triangle [$III_{int}$] are even or odd, respectively, according to the sector where the reference voltage vector is located if there is an operation in the linear modulation region,
- $T_s$ is the total period considering the sector where the reference voltage value is located in case the lower triangle type is determined as type 1

$$t_x = \left( II' - II_{int} \right) T_s ,$$

For Sector 1

$$t_y = \left( I' - I_{int} \right) T_s$$

$$t_x = \left( III' - III_{int} \right) T_s$$

for Sector 2

$$t_y = \left( II' - II_{int} \right) T_s$$

$$t_x = \left( I' - I_{int} \right) T_s$$

for Sector 3

$$t_v = \left( III' - III_{int} \right) T_s$$

$$t_x = \left( II' - II_{int} \right) T_s$$

for Sector 4

$$t_v = \left( I' - I_{int} \right) T_s$$

$$t_x = \left( III' - III_{int} \right) T_s$$

for Sector 5

$$t_v = \left( II' - II_{int} \right) T_s$$

$$t_x = \left( I' - I_{int} \right) T_s$$

for Sector 6

$$t_v = \left( III' - III_{int} \right) T_s$$

according to the formulas above, the period of transmission of key elements forming the multi-level converter (300) is determined, the $t_x$ and $t_y$ vector periods of the vectors $V_x$ and $V_y$, which are the closest vectors to the lower triangle where the reference voltage vector is located, are calculated.

2. A method according to claim 1, comprising the following steps:

- in case the "2.type" triangle is selected, "2.type" triangle, "2.type.a" or "2.type.b" is determined,
- if the type of the lower triangle is determined as the 2.type.a, considering the sector in which the reference voltage vector is in, $T_s$ is the total period,

$$t_x = \left( III' - III_{int} \right) T_s$$

for sector 1

$$t_y = \left( II_{int} + 1 - II' \right) T_s$$

$$t_x = \left( I' - I_{int} \right) T_s$$

for sector 2

$$t_y = \left( III_{int} + 1 - III' \right) T_s$$

$$t_x = \left( II' - II_{int} \right) T_s$$

for sector 3

$$t_y = \left(I_{int} + 1 - I'\right)T_s$$

$$t_x = \left(III' - III_{int}\right)T_s$$

for sector 4

$$t_y = \left(II_{int} + 1 - II'\right)T_s$$

$$t_x = \left(I' - I_{int}\right)T_s$$

for sector 5

$$t_y = \left(III_{int} + 1 - III'\right)T_s$$

$$t_x = \left(II' - II_{int}\right)T_s$$

for sector 6

$$t_y = \left(I_{int} + 1 - I'\right)T_s$$

- according to the formulas above, the period of transmission of key elements is determined, the $t_x$ and $t_y$ vector periods of the vectors $V_x$ and $V_y$, which are the closest vectors to the lower triangle where the reference voltage vector is located, are calculated,
- if the type of the lower triangle is determined as the 2.type.b, considering the sector in which the reference voltage vector is in, $T_s$ is the total period,

$$t_x = \left(I_{int} + 1 - I'\right)T_s$$

for sector 1

$$t_y = \left(III' - III_{int}\right)T_s$$

$$t_x = \left(II_{int} + 1 - II'\right)T_s$$

for sector 2

$$t_y = \left(I' - I_{int}\right)T_s$$

$$t_x = \left(III_{int} + 1 - III'\right)T_s$$

for sector 3

$$t_y = \left(II' - II_{int}\right)T_s$$

$$t_x = \left(I_{int} + 1 - I'\right)T_s$$

for sector 4

$$t_y = \left(III' - III_{int}\right)T_s$$

$$t_x = \left(II_{int} + 1 - II'\right)T_s$$

for sector 5

$$t_y = \left(I' - I_{int}\right)T_s$$

$$t_x = \left(III_{int} + 1 - III'\right)T_s$$

for sector 5

$$t_y = \left(II' - II_{int}\right)T_s$$

- according to the formulas above, the period of transmission of key elements is determined, the $t_x$ and $t_y$ vector periods of the vectors $V_x$ and $V_y$, which are the closest vectors to the lower triangle where the reference voltage vector is located, are calculated
- for the linear modulation state, a zero vector period is calculated as $t_z = T_s - t_x - t_y$.

3. A method according to claim 1, comprising the following steps:

- when an operation in the over modulation region is determined, the reference vector is re-placed in the vector diagram so that the end of the reference vector is within the space vector diagram boundaries of the orbit rotating around the origin,
- if the deviation value determined is odd, the state 1 triangle is determined, if it is double, the state 2 triangle is determined,
- depending on the initial position of the reference vector, it is determined which type of "1.type" lower triangle will be selected to place the end of the reference voltage vector in the new orbit,
- in case of determining the state 1 triangle, the $t_x'$ and $t_y'$ periods of the $V_x'$ and $V_y'$ vectors are calculated using the following equations,

$$t_y' = \frac{T_s\left[(s-1)t_y - \left(t_x + t_y - T_s\right)I_{int}\right]}{t_x + t_y + (s-2)T_s}$$

or for sector 1

$$t_y' = \frac{T_s\left[\left((s-1)-I_{int}\right)\left(I'-I_{int}\right) - \left(\left(II'-II_{int}\right)-1\right)I_{int}\right]}{\left(II'-II_{int}\right)+\left(I'-I_{int}\right)+(s-2)}$$

$$t_x' = T_s - t_y'$$

$$t_y' = \frac{T_s\left[(s-1)t_y - \left(t_x + t_y - T_s\right)II_{int}\right]}{t_x + t_y + (s-2)T_s}$$

or for sector 2

$$t_y' = \frac{T_s\left[\left((s-1)-II_{int}\right)\left(II'-II_{int}\right) - \left(\left(III'-III_{int}\right)-1\right)II_{int}\right]}{\left(III'-III_{int}\right)+\left(II'-II_{int}\right)+(s-2)}$$

$$t_x' = T_s - t_y'$$

$$t_y' = \frac{T_s\left[(s-1)t_y - (t_x + t_y - T_s)III_{int}\right]}{t_x + t_y + (s-2)T_s}$$

or for sector 3

$$t_y' = \frac{T_s\left[((s-1)-III_{int})(III'-III_{int}) - ((I'-I_{int})-1)III_{int}\right]}{(I'-I_{int}) + (III'-III_{int}) + (s-2)}$$

$$t_x' = T_s - t_y'$$

$$t_y' = \frac{T_s\left[(s-1)t_y - (t_x + t_y - T_s)I_{int}\right]}{t_x + t_y + (s-2)T_s}$$

or for sector 4

$$t_y' = \frac{T_s\left[((s-1)-I_{int})(I'-I_{int}) - ((II'-II_{int})-1)I_{int}\right]}{(II'-II_{int}) + (I'-I_{int}) + (s-2)}$$

$$t_x' = T_s - t_y'$$

$$t_y' = \frac{T_s\left[(s-1)t_y - (t_x + t_y - T_s)II_{int}\right]}{t_x + t_y + (s-2)T_s}$$

or for sector 5

$$t_y' = \frac{T_s\left[((s-1)-II_{int})(II'-II_{int}) - ((III'-III_{int})-1)II_{int}\right]}{(III'-III_{int}) + (II'-II_{int}) + (s-2)}$$

$$t_x' = T_s - t_y'$$

$$t_y' = \frac{T_s\left[(s-1)t_y - (t_x + t_y - T_s)III_{int}\right]}{t_x + t_y + (s-2)T_s}$$

or for sector 6

$$t_y' = \frac{T_s\left[((s-1)-III_{int})(III'-III_{int}) - ((I'-I_{int})-1)III_{int}\right]}{(I'-I_{int}) + (III'-III_{int}) + (s-2)}$$

$$t_x' = T_s - t_y'$$

- in case of determining the state 2 triangle, $t_x$ and $t_y$ periods are compared and if $t_y'$ is greater than $t_x'$, the 2.state.a triangle is selected,
- in case of determining the triangle 2.state.a, $t_x'$ and $t_y'$ periods of $V_x'$ and $V_y'$ vectors are calculated by using the following equations:

$$t_y' = \frac{T_s\left[(s-1)t_y - (t_x + t_y)I_{int}\right]}{t_x + t_y + (s-1)T_s}$$

or for sector 1

$$t_y' = \frac{T_s\left[((s-1)-I_{int})(I'-I_{int}) - (II'-II_{int})I_{int}\right]}{(II'-II_{int}) + (I'-I_{int}) + (s-1)}$$

$$t_x' = T_s - t_y'$$

$$t_y' = \frac{T_s\left[(s-1)t_y - (t_x + t_y)II_{int}\right]}{t_x + t_y + (s-1)T_s}$$

or for sector 2

$$t_y' = \frac{T_s\left[((s-1)-II_{int})(II'-II_{int}) - (III'-III_{int})II_{int}\right]}{(III'-III_{int}) + (II'-II_{int}) + (s-1)}$$

$$t_x' = T_s - t_y'$$

$$t_y' = \frac{T_s\left[(s-1)t_y - (t_x + t_y)III_{int}\right]}{t_x + t_y + (s-1)T_s}$$

or for sector 3

$$t_y' = \frac{T_s\left[((s-1)-III_{int})(III'-III_{int}) - (I'-I_{int})III_{int}\right]}{(I'-I_{int}) + (III'-III_{int}) + (s-1)}$$

$$t_x' = T_s - t_y'$$

$$t_y' = \frac{T_s\left[(s-1)t_y - (t_x + t_y)I_{int}\right]}{t_x + t_y + (s-1)T_s}$$

or for sector 4

$$t_y' = \frac{T_s\left[((s-1)-I_{int})(I'-I_{int}) - (II'-II_{int})I_{int}\right]}{(II'-II_{int}) + (I'-I_{int}) + (s-1)}$$

$$t_x' = T_s - t_y'$$

$$t_y' = \frac{T_s\left[(s-1)t_y - (t_x+t_y)II_{int}\right]}{t_x + t_y + (s-1)T_s}$$

or for sector 5

$$t_y' = \frac{T_s\left[((s-1)-II_{int})(II'-II_{int}) - (III'-III_{int})II_{int}\right]}{(III'-III_{int}) + (II'-II_{int}) + (s-1)}$$

$$t_x' = T_s - t_y'$$

$$t_y' = \frac{T_s\left[(s-1)t_y - (t_x+t_y)III_{int}\right]}{t_x + t_y + (s-1)T_s}$$

or for sector 6

$$t_y' = \frac{T_s\left[((s-1)-III_{int})(III'-III_{int}) - (I'-I_{int})III_{int}\right]}{(I'-I_{int}) + (III'-III_{int}) + (s-1)}$$

$$t_x' = T_s - t_y'$$

- in case of determining the state 2 triangle, $t_y$ and $t_x$ periods are compared, and if $t_x$ is greater than $t_y$, 2.state.b triangle is selected,
- if the triangle 2.state.b is determined, $t_x'$ and $t_y'$ periods of the $V_x'$ and $V_y'$ vectors are calculated by using the following equations:

$$t_y' = \frac{T_s\left[(s-1)(T_s+t_y) - (t_x+t_y)(I_{int}-1)\right]}{t_x + t_y + (s-1)T_s}$$

or for sector 1

$$t_y' = \frac{T_s\left[(s-1)+(s-I_{int})(I'-I_{int}) - (II'-II_{int})(I_{int}-1)\right]}{(II'-II_{int}) + (I'-I_{int}) + (s-1)}$$

$$t_x' = T_s - t_y'$$

$$t_y' = \frac{T_s\left[(s-1)(T_s+t_y) - (t_x+t_y)(II_{int}-1)\right]}{t_x + t_y + (s-1)T_s}$$

or for sector 2

$$t_y' = \frac{T_s\left[(s-1)+(s-II_{int})(II'-II_{int}) - (III'-III_{int})(II_{int}-1)\right]}{(III'-III_{int}) + (II'-II_{int}) + (s-1)}$$

$$t_x' = T_s - t_y'$$

$$t_y' = \frac{T_s\left[(s-1)(T_s+t_y)-(t_x+t_y)(III_{int}-1)\right]}{t_x+t_y+(s-1)T_s}$$

or for sector 3

$$t_y' = \frac{T_s\left[(s-1)+(s-III_{int})(III'-III_{int})-(I'-I_{int})(III_{int}-1)\right]}{(I'-I_{int})+(III'-III_{int})+(s-1)}$$

$$t_x' = T_s - t_y'$$

$$t_y' = \frac{T_s\left[(s-1)(T_s+t_y)-(t_x+t_y)(I_{int}-1)\right]}{t_x+t_y+(s-1)T_s}$$

or for sector 4

$$t_y' = \frac{T_s\left[(s-1)+(s-I_{int})(I'-I_{int})-(II'-II_{int})(I_{int}-1)\right]}{(II'-II_{int})+(I'-I_{int})+(s-1)}$$

$$t_x' = T_s - t_y'$$

$$t_y' = \frac{T_s\left[(s-1)(T_s+t_y)-(t_x+t_y)(II_{int}-1)\right]}{t_x+t_y+(s-1)T_s}$$

or for sector 5

$$t_y' = \frac{T_s\left[(s-1)+(s-II_{int})(II'-II_{int})-(III'-III_{int})(II_{int}-1)\right]}{(III'-III_{int})+(II'-II_{int})+(s-1)}$$

$$t_x' = T_s - t_y'$$

$$t_y' = \frac{T_s\left[(s-1)(T_s+t_y)-(t_x+t_y)(III_{int}-1)\right]}{t_x+t_y+(s-1)T_s}$$

or for sector 6

$$t_y' = \frac{T_s\left[(s-1)+(s-III_{int})(III'-III_{int})-(I'-I_{int})(III_{int}-1)\right]}{(I'-I_{int})+(III'-III_{int})+(s-1)}$$

$$t_x' = T_s - t_y'$$

- for the over modulation state, a zero vector period $t_z$ is equal to zero,
- depending on the sector in which the reference vector is located in the space vector diagram and depending on the lower triangle type in which the reference vector end point is located, the key element periods required for the formation of phase voltages are calculated and applied to the multi-level converter (103).

4. A method performed by a multi-level space vector modulation controller (100) of a system comprising one multi-level space vector modulation controller (100) in connection with a multi-level converter (300) controlling said multi-level converter (300) to perform space vector modulation according to its position in a space vector diagram (500) comprising six sectors (15) in the form of an equilateral hexagon whose center is coincident with the origin of an $\alpha$-$\beta$ (alpha-beta) coordinate system and in the form of equilateral triangles and lower triangles (150) in an equilateral triangle structure provided within said sectors (15) of the multi-level converter (300) with level number "s" provided between an AC end and a DC end, and a rotating reference voltage vector (522) in a three-axial A,B,C three-phase coordinate system, the method comprising the following steps:

- each sector (15) of the space vector diagram (500) is assigned a reference pointer and a sector guide recorded in a memory unit,
- the number 1 is assigned for each sector (15) to a first lower triangle (151) whose corner is directly connected to the origin and each lower triangle (150) is given numbers so that the other lower triangles (150) are assigned successive values starting from said first lower triangle (151) following the number 1 in a first direction parallel to a first edge directly connected with the first lower triangle (151), and increasing consecutive values and a lower triangle guide recorded in said memory unit is accessed,
- $V\alpha$ and $V\beta$ are the components of said reference voltage vector (522) and $V_{dc}$ is the total voltage value applied to the multi-level converter,
wherein

$$II_{sign} = (3V_\alpha - \sqrt{3}V_\beta)(s-1)\frac{1}{2}\frac{1}{V_{dc}},$$

$$III_{sign} = (3V_\alpha + \sqrt{3}V_\beta)(s-1)\frac{1}{2}\frac{1}{V_{dc}},$$

$$II' = \left| II_{sign} \right|,$$

$$III' = \left| III_{sign} \right|$$

- the II' and the III' values are calculated from the above equations and
- it is determined in which sector the reference voltage vector is located in the space vector diagram, considering that the $V\beta$ component value and the II' and III' values are positive or negative,
-

$$I' = \left| (\sqrt{3}V_\beta)(s-1)\frac{1}{V_{dc}} \right|,$$

$$|3V_\alpha| > |\sqrt{3}V_\beta| \Rightarrow I' = \left| III_{sign} - II_{sign} \right|,$$

for sector I-III-IV-VI

$$|3V_\alpha| < |\sqrt{3}V_\beta| \Rightarrow I' = \left| III_{sign} \right| + \left| II_{sign} \right|$$

for sector II - V
- the value I' is determined from one of the equations.
- integer components of I', II' and III' values are determined as $I_{int}$, $II_{int}$, $III_{int}$,
- it refers to the sequence in which each line in the sector is ordered according to the increasing number of triangles that directly contact with said first edge

for sector 1 and 4

$$\text{triangle number} = \text{first\_triangle} \, [II_{int}] + III_{int} + I_{int} - II_{int,}$$

for sector 2 and 5

$$\text{triangle number} = \text{first\_triangle} \, [III_{int}] + I_{int} + I_{int} - III_{int,}$$

for sector 3 and 6

$$\text{triangle number} = \text{first\_triangle} \, [I_{int}] + II_{int} + I_{int} - I_{int,}$$

by using the above equations, the number assigned to the lower triangle in which the reference voltage vector end is located, is determined;
further comprising the following steps to determine whether the converter operates in the linear modulation region or the over modulation region:

- it is determined whether $II_{int}$ value for sector 1 and sector 4, $III_{int}$ value for sector 2 and sector 5, $I_{int}$ value for sector 3 and sector 6 are equal to (s-2) value or not,
- if equal, a deviation value different from first_triangle[$II_{int}$] number for sector 1 and 4, first_triangle[$III_{int}$] number for sector 2 and 5, first_triangle[$I_{int}$] number for sector 3 and 6 of a number assigned to the determined lower triangle is determined,
- if not equal, a deviation value different from first_triangle[$II_{int}$+1]-1)] number for sector 1 and 4, first_triangle[$III_{int}$+1]-1)] number for sector 2 and 5, first_triangle[$I_{int}$+1]-1)] number for sector 3 and 6 of the number assigned to the determined lower triangle is determined,
- over modulation operation is determined if the deviation value is a positive integer and linear modulation operation is determined if the deviation value is zero or a negative integer; and further comprising the following steps:

- the lower triangle type is determined as type 1 or type 2 depending on whether the first_triangle [$I_{int}$], the first_triangle [$II_{int}$] and the first_triangle [$III_{int}$] are even or odd, respectively, according to the sector where the reference voltage vector is located if there is an operation in the linear modulation region,
- $T_s$ is the total period considering the sector where the reference voltage value is located in case of the lower triangle type is determined as type 1,

For sector 1

$$t_x = \left( II' - II_{int} \right) T_s ,$$

$$t_y = \left( I' - I_{int} \right) T_s$$

For sector 2

$$t_x = \left( III' - III_{int} \right) T_s$$

$$t_y = \left( II' - II_{int} \right) T_s$$

For sector 3

$$t_x = \left( I' - I_{int} \right) T_s$$

$$t_y = \left( III' - III_{int} \right) T_s$$

For sector 4

$$t_x = \left( II' - II_{int} \right) T_s$$

$$t_v = \left( I' - I_{int} \right) T_s$$

For sector 5

$$t_x = \left( III' - III_{int} \right) T_s$$

$$t_v = \left( II' - II_{int} \right) T_s$$

For sector 6

$$t_x = \left( I' - I_{int} \right) T_s$$

$$t_y = \left( III' - III_{int} \right) T_s$$

according to the formulas above, the period of transmission of key elements forming the multi-level converter (300) is determined, the $t_x$ and $t_y$ vector periods of the vectors $V_x$ and $V_y$, which are the closest vectors to the lower triangle where the reference voltage vector is located, are calculated.

5. A method according to claim 4, comprising the following steps:

- in case the "2.type" triangle is selected, "2.type" triangle, "2.type.a" or "2.type.b" is determined,
- if the type of the lower triangle is determined as the 2.type.a, considering the sector in which the reference voltage vector is in, $T_s$ is the total period,

For sector 1

$$t_x = \left( III' - III_{int} \right) T_s$$

$$t_v = \left( II_{int} + 1 - II' \right) T_s$$

For sector 2

$$t_x = \left( I' - I_{int} \right) T_s$$

$$t_v = \left( III_{int} + 1 - III' \right) T_s$$

For sector 3

$$t_x = \left( II' - II_{int} \right) T_s$$

$$t_v = \left( I_{int} + 1 - I' \right) T_s$$

For sector 4

**54**

$$t_x = \left( III' - III_{int} \right) T_s$$

$$t_y = \left( II_{int} + 1 - II' \right) T_s$$

For sector 5

$$t_x = \left( I' - I_{int} \right) T_s$$

$$t_y = \left( III_{int} + 1 - III' \right) T_s$$

For sector 6

$$t_x = \left( II' - II_{int} \right) T_s$$

$$t_y = \left( I_{int} + 1 - I' \right) T_s$$

- according to the formulas above, the period of transmission of key elements is determined, the $t_x$ and $t_y$ vector periods of the vectors $V_x$ and $V_y$, which are the closest vectors to the lower triangle where the reference voltage vector is located, are calculated,
- if the type of the lower triangle is determined as the 2.type.b, considering the sector in which the reference voltage vector is in, $T_s$ is the total period,

$$t_x = \left( I_{int} + 1 - I' \right) T_s$$

for sector 1

$$t_y = \left( III' - III_{int} \right) T_s$$

$$t_x = \left( II_{int} + 1 - II' \right) T_s$$

for sector 2

$$t_y = \left( I' - I_{int} \right) T_s$$

$$t_x = \left( III_{int} + 1 - III' \right) T_s$$

for sector 3

$$t_y = \left( II' - II_{int} \right) T_s$$

$$t_x = \left( I_{tam} + 1 - I' \right) T_s$$

for sector 4

$$t_y = \left( III' - III_{int} \right) T_s$$

$$t_x = \left( II_{int} + 1 - II' \right) T_s$$

for sector 5

$$t_v = \left( I' - I_{int} \right) T_s$$

$$t_x = \left( III_{int} + 1 - III' \right) T_s$$

for sector 6

$$t_y = \left( II' - II_{int} \right) T_s$$

- according to the formulas above, the period of transmission of key elements is determined, the $t_x$ and $t_y$ vector periods of the vectors $V_x$ and $V_y$, which are the closest vectors to the lower triangle where the reference voltage vector is located, are calculated
- for the linear modulation state, it is calculated as $t_z = T_s - t_x - t_y$.

**6.** A method according to claim 4, comprising the following steps:

- when an operation in the over modulation region is determined, the reference vector is re-placed in the vector diagram so that the end of the reference vector is within the space vector diagram boundaries of the orbit rotating around the origin,
- if the deviation value determined is odd, the state 1 triangle is determined, if it is double, the state 2 triangle is determined,
- depending on the initial position of the reference vector, it is determined which type of "1.type" lower triangle will be selected to place the end of the reference voltage vector in the new orbit,
- in case of determining the state 1 triangle, the $t_x'$ and $t_y'$ periods of the $V_x'$ and $V_y'$ vectors are calculated using the following equations,

$$t_y' = \frac{T_s \left[ (s-1) t_y - \left( t_x + t_y - T_s \right) I_{int} \right]}{t_x + t_y + (s-2) T_s}$$

For sector 1 or

$$t_y' = \frac{T_s \left[ \left( (s-1) - I_{int} \right) \left( I' - I_{int} \right) - \left( \left( II' - II_{int} \right) - 1 \right) I_{int} \right]}{\left( II' - II_{int} \right) + \left( I' - I_{int} \right) + (s-2)}$$

$$t_x' = T_s - t_y'$$

$$t_y' = \frac{T_s \left[ (s-1) t_y - \left( t_x + t_y - T_s \right) II_{int} \right]}{t_x + t_y + (s-2) T_s}$$

For sector 2 or

$$t_y' = \frac{T_s \left[ \left( (s-1) - II_{int} \right) \left( II' - II_{int} \right) - \left( \left( III' - III_{int} \right) - 1 \right) II_{int} \right]}{\left( III' - III_{int} \right) + \left( II' - II_{int} \right) + (s-2)}$$

$$t_x' = T_s - t_y'$$

$$t_y' = \frac{T_s\left[(s-1)t_y - (t_x + t_y - T_s)III_{int}\right]}{t_x + t_y + (s-2)T_s}$$

For sector 3 or

$$t_y' = \frac{T_s\left[((s-1)-III_{int})(III'-III_{int}) - ((I'-I_{int})-1)III_{int}\right]}{(I'-I_{int}) + (III'-III_{int}) + (s-2)}$$

$$t_x' = T_s - t_y'$$

$$t_y' = \frac{T_s\left[(s-1)t_y - (t_x + t_y - T_s)I_{int}\right]}{t_x + t_y + (s-2)T_s}$$

For sector 4 or

$$t_y' = \frac{T_s\left[((s-1)-I_{int})(I'-I_{int}) - ((II'-II_{int})-1)I_{int}\right]}{(II'-II_{int}) + (I'-I_{int}) + (s-2)}$$

$$t_x' = T_s - t_y'$$

$$t_y' = \frac{T_s\left[(s-1)t_y - (t_x + t_y - T_s)II_{int}\right]}{t_x + t_y + (s-2)T_s}$$

For sector 5 or

$$t_y' = \frac{T_s\left[((s-1)-II_{int})(II'-II_{int}) - ((III'-III_{int})-1)II_{int}\right]}{(III'-III_{int}) + (II'-II_{int}) + (s-2)}$$

$$t_x' = T_s - t_y'$$

$$t_y' = \frac{T_s\left[(s-1)t_y - (t_x + t_y - T_s)III_{int}\right]}{t_x + t_y + (s-2)T_s}$$

For sector 6 or

$$t_y' = \frac{T_s\left[((s-1)-III_{int})(III'-III_{int}) - ((I'-I_{int})-1)III_{int}\right]}{(I'-I_{int}) + (III'-III_{int}) + (s-2)}$$

$$t_x' = T_s - t_y'$$

- in case of determining the state 2 triangle, $t_x$ and $t_y$ periods are compared and if $t_y'$ is greater than $t_x'$, the 2.state.a triangle is selected,
- in case of determining the triangle 2.state.a, $t_x'$ and $t_y'$ periods of $V_x'$ and $V_y'$ vectors are calculated by using the following equations:

$$t_y' = \frac{T_s\left[(s-1)t_y - (t_x + t_y)I_{int}\right]}{t_x + t_y + (s-1)T_s}$$

For sector 1 or

$$t_y' = \frac{T_s\left[((s-1) - I_{int})(I' - I_{int}) - (II' - II_{int})I_{int}\right]}{(II' - II_{int}) + (I' - I_{int}) + (s-1)}$$

$$t_x' = T_s - t_y'$$

$$t_y' = \frac{T_s\left[(s-1)t_y - (t_x + t_y)II_{int}\right]}{t_x + t_y + (s-1)T_s}$$

For sector 2 or

$$t_y' = \frac{T_s\left[((s-1) - II_{int})(II' - II_{int}) - (III' - III_{int})II_{int}\right]}{(III' - III_{int}) + (II' - II_{int}) + (s-1)}$$

$$t_x' = T_s - t_y'$$

$$t_y' = \frac{T_s\left[(s-1)t_y - (t_x + t_y)III_{int}\right]}{t_x + t_y + (s-1)T_s}$$

For sector 3 or

$$t_y' = \frac{T_s\left[((s-1) - III_{int})(III' - III_{int}) - (I' - I_{int})III_{int}\right]}{(I' - I_{int}) + (III' - III_{int}) + (s-1)}$$

$$t_x' = T_s - t_y'$$

$$t_y' = \frac{T_s\left[(s-1)t_y - (t_x + t_y)I_{int}\right]}{t_x + t_y + (s-1)T_s}$$

For sector 4 or

$$t_y' = \frac{T_s\left[((s-1) - I_{int})(I' - I_{int}) - (II' - II_{int})I_{int}\right]}{(II' - II_{int}) + (I' - I_{int}) + (s-1)}$$

$$t_x' = T_s - t_y'$$

$$t_y' = \frac{T_s\left[(s-1)t_y - (t_x + t_y)II_{int}\right]}{t_x + t_y + (s-1)T_s}$$

For sector 5 or

$$t_y' = \frac{T_s\left[((s-1)-II_{int})(II'-II_{int}) - (III'-III_{int})II_{int}\right]}{(III'-III_{int}) + (II'-II_{int}) + (s-1)}$$

$$t_x' = T_s - t_y'$$

$$t_y' = \frac{T_s\left[(s-1)t_y - (t_x + t_y)III_{int}\right]}{t_x + t_y + (s-1)T_s}$$

For sector 6 or

$$t_y' = \frac{T_s\left[((s-1)-III_{int})(III'-III_{int}) - (I'-I_{int})III_{int}\right]}{(I'-I_{int}) + (III'-III_{int}) + (s-1)}$$

$$t_x' = T_s - t_y'$$

- in case of determining the state 2 triangle, $t_y$ and $t_x$ periods are compared, and if $t_x$ is greater than $t_y$, 2.state.b triangle is selected,
- if the triangle 2.state.b is determined, $t_x'$ and $t_y'$ periods of the $V_x'$ and $V_y'$ vectors are calculated by using the following equations:

$$t_y' = \frac{T_s\left[(s-1)(T_s + t_y) - (t_x + t_y)(I_{int}-1)\right]}{t_x + t_y + (s-1)T_s}$$

For sector 1 or

$$t_y' = \frac{T_s\left[(s-1) + (s-I_{int})(I'-I_{int}) - (II'-II_{int})(I_{int}-1)\right]}{(II'-II_{int}) + (I'-I_{int}) + (s-1)}$$

$$t_x' = T_s - t_y'$$

$$t_y' = \frac{T_s\left[(s-1)(T_s + t_y) - (t_x + t_y)(II_{int}-1)\right]}{t_x + t_y + (s-1)T_s}$$

For sector 2 or

$$t_y' = \frac{T_s\left[(s-1) + (s-II_{int})(II'-II_{int}) - (III'-III_{int})(II_{int}-1)\right]}{(III'-III_{int}) + (II'-II_{int}) + (s-1)}$$

$$t_x' = T_s - t_y'$$

$$t_y' = \frac{T_s\left[(s-1)(T_s + t_y) - (t_x + t_y)(III_{int} - 1)\right]}{t_x + t_y + (s-1)T_s}$$

For sector 3 or

$$t_y' = \frac{T_s\left[(s-1) + (s - III_{int})(III' - III_{int}) - (I' - I_{int})(III_{int} - 1)\right]}{(I' - I_{int}) + (III' - III_{int}) + (s-1)}$$

$$t_x' = T_s - t_y'$$

$$t_y' = \frac{T_s\left[(s-1)(T_s + t_y) - (t_x + t_y)(I_{int} - 1)\right]}{t_x + t_y + (s-1)T_s}$$

For sector 4 or

$$t_y' = \frac{T_s\left[(s-1) + (s - I_{int})(I' - I_{int}) - (II' - II_{int})(I_{int} - 1)\right]}{(II' - II_{int}) + (I' - I_{int}) + (s-1)}$$

$$t_x' = T_s - t_y'$$

$$t_y' = \frac{T_s\left[(s-1)(T_s + t_y) - (t_x + t_y)(II_{int} - 1)\right]}{t_x + t_y + (s-1)T_s}$$

For sector 5 or

$$t_y' = \frac{T_s\left[(s-1) + (s - II_{int})(II' - II_{int}) - (III' - III_{int})(II_{int} - 1)\right]}{(III' - III_{int}) + (II' - II_{int}) + (s-1)}$$

$$t_x' = T_s - t_y'$$

$$t_y' = \frac{T_s\left[(s-1)(T_s + t_y) - (t_x + t_y)(III_{int} - 1)\right]}{t_x + t_y + (s-1)T_s}$$

For sector 6 or

$$t_y' = \frac{T_s\left[(s-1) + (s - III_{int})(III' - III_{int}) - (I' - I_{int})(III_{int} - 1)\right]}{(I' - I_{int}) + (III' - III_{int}) + (s-1)}$$

$$t_x' = T_s - t_y'$$

- for the over modulation state, $t_z$ is equal to zero,

- depending on the sector in which the reference vector is located in the space vector diagram and depending on the lower triangle type in which the reference vector end point is located, the key element periods required for the formation of phase voltages are calculated and applied to the multi-level converter (103).

**Patentansprüche**

1. Verfahren, das von einem Mehrebenen-Raumvektor-Modulationsregler (100) eines Systems durchgeführt wird, das einen Mehrebenen-Raumvektor-Modulationsregler (100) in Verbindung mit einem Mehrebenen-Wandler (300) umfasst, der den Mehrebenen-Wandler (300) so steuert, dass er eine Raumvektor-Modulation entsprechend seiner Position in einem Raumvektordiagramm (500) durchführt, das sechs Sektoren (15) in Form eines gleichseitigen Sechsecks, dessen Mittelpunkt mit dem Ursprung eines $\alpha$-$\beta$ (alpha-beta)-Koordinatensystems zusammenfällt, und in Form gleichseitiger Dreiecke und unterer Dreiecke (150) in einer gleichseitigen Dreiecksstruktur, die innerhalb der Sektoren (15) des Mehrebenen-Wandlers (300) mit der Niveaunummer "s" zwischen einem AC-Ende und einem DC-Ende vorgesehen ist, und einem rotierenden Referenzspannungsvektor (522) in einem dreiachsigen A,B,C-Dreiphasenkoordinatensystem, wobei das Verfahren die folgenden Schritte umfasst:

   - jedem Sektor (15) des Raumvektordiagramms (500) ein Referenzzeiger und eine in einer Speichereinheit aufgezeichneter Sektorführung zugewiesen wird,
   - die Zahl 1 für jeden Sektor (15) einem ersten unteren Dreieck (151) zugewiesen wird, dessen Ecke direkt mit dem Ursprung verbunden ist, und jedem unteren Dreieck (150) Zahlen zugewiesen werden, so dass den anderen unteren Dreiecken (150) aufeinanderfolgende Werte zugewiesen werden, ausgehend von dem ersten unteren Dreieck (151), das der Zahl 1 in einer ersten Richtung parallel zu einer ersten Kante folgt, die direkt mit dem ersten unteren Dreieck (151) verbunden ist, und aufsteigende aufeinanderfolgende Werte und eine in der Speichereinheit aufgezeichnete untere Dreiecksführung zugegriffen wird,
   - V$\alpha$ und V$\beta$ die Komponenten des Referenzspannungsvektors (522) sind und V$_{dc}$ der Gesamtspannungswert ist, der an den Mehrebenen-Wandler angelegt wird,
   wobei

$$II_{sign} = \left(3V_{\alpha} - \sqrt{3}V_{\beta}\right)(s-1)\frac{1}{2}\frac{1}{V_{dc}},$$

$$III_{sign} = \left(3V_{\alpha} + \sqrt{3}V_{\beta}\right)(s-1)\frac{1}{2}\frac{1}{V_{dc}},$$

$$II' = \left| II_{sign} \right|,$$

$$III' = \left| III_{sign} \right|$$

   - die Werte II' und III' aus den obigen Gleichungen berechnet werden und
   - bestimmt wird, in welchem Sektor (15) sich der Referenzspannungsvektor (15) im Raumvektordiagramm befindet, wobei berücksichtigt wird, dass der Wert der V$\beta$-Komponente und die Werte II' und III' positiv oder negativ sind,

$$I' = \left| \left(\sqrt{3}V_{\beta}\right)(s-1)\frac{1}{V_{dc}} \right|,$$

$$\left| 3V_{\alpha} \right| > \left| \sqrt{3}V_{\beta} \right| \Rightarrow I' = \left| III_{sign} - II_{sign} \right|$$

Für die Sektoren I-III-IV-VI

$$\left|3V_{\alpha}\right| < \left|\sqrt{3}V_{\beta}\right| \Rightarrow I' = \left|III_{sign}\right| + \left|II_{sign}\right|$$

Für die Sektoren II - V,
- der Wert I' aus einer der Gleichungen bestimmt wird,
- die ganzzahligen Komponenten der Werte I', II' und III' als $I_{int}$, $II_{int}$, $III_{int}$ bestimmt werden,
- first_triangle[x] sich auf eine Folge bezieht, in der jede Zeile des Sektors nach der zunehmenden Anzahl der ersten Dreiecke geordnet ist, die die erste Kante direkt berühren,

für die Sektoren 1 und 4

$$\text{Dreiecksnummer} = first\_triangle\ [I_{int}] + III_{int} + II_{int} - I_{int},$$

für die Sektoren 2 und 5

$$\text{Dreiecksnummer} = first\_triangle\ [II_{int}] + III_{int} + I_{int} - II_{int},$$

für die Sektoren 3 und 6

$$\text{Dreiecksnummer} = first\_triangle\ [III_{int}] + II_{int} + I_{int} - III_{int},$$

unter Verwendung der obigen Gleichungen die dem unteren Dreieck (150), in dem sich der Referenzspannungsvektor (522) befindet, zugeordnete Nummer bestimmt wird;
es ferner die folgenden Schritte umfasst, um festzustellen, ob der Wechselrichter im linearen Modulationsbereich oder im Übermodulationsbereich arbeitet:

- bestimmt wird, ob der $I_{int}$-Wert für Sektor 1 und Sektor 4, der $II_{int}$-Wert für Sektor 2 und Sektor 5, der $III_{int}$-Wert für Sektor 3 und Sektor 6 gleich dem (s-2)-Wert sind oder nicht,
- falls gleich, ein Abweichungswert bestimmt wird, der sich von der Nummer von first_triangle[$I_{int}$] für Sektor 1 und 4, der Nummer von first_triangle([$II_{int}$] für Sektor 2 und 5, der Nummer von first_triangle [$III_{int}$] für Sektor 3 und 6 einer dem bestimmten unteren Dreieck zugeordneten Nummer unterscheidet,
- falls gleich, ein Abweichungswert bestimmt wird, der sich von der Nummer von first_triangle[$I_{int}$+1]-1)] für Sektor 1 und 4, der Nummer von first_triangle[$II_{int}$+1]-1)] für Sektor 2 und 5, der Nummer von first_triangle[$III_{int}$+1]-1)] für Sektor 3 und 6 der dem bestimmten unteren Dreieck zugeordneten Nummer unterscheidet,
- die Übermodulationsoperation bestimmt wird, wenn der Abweichungswert eine positive Ganzzahl ist, und die lineare Modulationsoperation bestimmt wird, wenn der Abweichungswert Null oder eine negative Ganzzahl ist;

und es außerdem die folgenden Schritte umfasst:

- der untere Dreieckstyp als Typ 1 oder Typ 2 bestimmt wird, je nachdem, ob first_triangle [$I_{int}$], first_triangle [$II_{int}$] und first_triangle [$III_{int}$] gerade bzw. ungerade sind, entsprechend dem Sektor, in dem sich der Referenzspannungsvektor befindet, wenn eine Operation im linearen Modulationsbereich stattfindet,
- $T_s$ die Gesamtperiode unter Berücksichtigung des Sektors ist, in dem sich der Referenzspannungswert befindet, wenn der untere Dreieckstyp als Typ 1 bestimmt wird,

$$t_x = \left(II' - II_{int}\right)T_s$$

$$t_y = \left(I' - I_{int}\right)T_s$$

Für Sektor 1

$$t_x = \left( III' - III_{int} \right) T_s$$

$$t_y = \left( II' - II_{int} \right) T_s$$

für Sektor 2

$$t_x = \left( I' - I_{int} \right) T_s$$

$$t_y = \left( III' - III_{int} \right) T_s$$

für Sektor 3

$$t_x = \left( II' - II_{int} \right) T_s$$

$$t_y = \left( I' - I_{int} \right) T_s$$

für Sektor 4

$$t_x = \left( III' - III_{int} \right) T_s$$

$$t_y = \left( II' - II_{int} \right) T_s$$

für Sektor 5

$$t_x = \left( I' - I_{int} \right) T_s$$

$$t_y = \left( III' - III_{int} \right) T_s$$

für Sektor 6

gemäß den obigen Formeln die Übertragungsperiode von Schlüsselelementen, die den Mehrebenen-Wandler (300) bilden, bestimmt wird, die $t_x$- und $t_y$-Vektorperioden der Vektoren $V_x$ und $V_y$, die die nächstgelegenen Vektoren zu dem unteren Dreieck sind, in dem sich der Referenzspannungsvektor befindet, berechnet werden.

2. Verfahren nach Anspruch 1, umfassend die folgenden Schritte:

- für den Fall, dass das Dreieck "2.type" ausgewählt wird, das Dreieck "2.type", "2.type.a" oder "2.type.b" bestimmt wird,
- wobei, wenn der Typ des unteren Dreiecks als der 2.type.a bestimmt wird, unter Berücksichtigung des Sektors, in dem sich der Referenzspannungsvektor befindet, $T_s$ die Gesamtperiode ist,

$$t_x = \left( III' - III_{int} \right) T_s$$

$$t_y = \left( II_{int} + 1 - II' \right) T_s$$

für Sektor 1

$$t_x = \left(I' - I_{int}\right)T_s$$

$$t_y = \left(III_{int} + 1 - III'\right)T_s$$

für Sektor 2

$$t_x = \left(II' - II_{int}\right)T_s$$

$$t_y = \left(I_{int} + 1 - I'\right)T_s$$

für Sektor 3

$$t_x = \left(III' - III_{int}\right)T_s$$

$$t_y = \left(II_{int} + 1 - II'\right)T_s$$

für Sektor 4

$$t_x = \left(I' - I_{int}\right)T_s$$

$$t_y = \left(III_{int} + 1 - III'\right)T_s$$

für Sektor 5

$$t_x = \left(II' - II_{int}\right)T_s$$

$$t_y = \left(I_{int} + 1 - I'\right)T_s$$

für Sektor 6
- gemäß den obigen Formeln die Übertragungsperiode von Schlüsselelementen bestimmt wird, die $t_x$- und $t_y$-Vektorperioden der Vektoren $V_x$ und $V_y$, die die nächstgelegenen Vektoren zu dem unteren Dreieck sind, in dem sich der Referenzspannungsvektor befindet, berechnet,
- wobei, wenn der Typ des unteren Dreiecks als der 2.type.b bestimmt wird, unter Berücksichtigung des Sektors, in dem sich der Referenzspannungsvektor befindet, $T_s$ die Gesamtperiode ist,

$$t_x = \left(I_{int} + 1 - I'\right)T_s$$

$$t_y = \left(III' - III_{int}\right)T_s$$

für Sektor 1

$$t_x = \left(II_{int} + 1 - II'\right)T_s$$

$$t_y = \left(I' - I_{int}\right)T_s$$

für Sektor 2

$$t_x = \left( III_{int} + 1 - III' \right) T_s$$

$$t_y = \left( III' - II_{int} \right) T_s$$

für Sektor 3

$$t_x = \left( I_{int} + 1 - I' \right) T_s$$

$$t_y = \left( III' - III_{int} \right) T_s$$

für Sektor 4

$$t_x = \left( II_{int} + 1 - II' \right) T_s$$

$$t_y = \left( I' - I_{int} \right) T_s$$

für Sektor 5

$$t_x = \left( III_{int} + 1 - III' \right) T_s$$

$$t_y = \left( II' - II_{int} \right) T_s$$

für Sektor 5

- gemäß den obigen Formeln die Übertragungsperiode von Schlüsselelementen bestimmt wird, die $t_x$- und $t_y$-Vektorperioden der Vektoren $V_x$ und $V_y$, die die nächstgelegenen Vektoren zu dem unteren Dreieck sind, in dem sich der Referenzspannungsvektor befindet, berechnet,
- für den linearen Modulationszustand eine Nullvektorperiode berechnet wird als $t_z = T_s - t_x - t_y$.

3. Verfahren nach Anspruch 1, umfassend die folgenden Schritte:

- wobei, wenn eine Operation im Übersteuerungsbereich bestimmt wird, der Referenzvektor im Vektordiagramm neu platziert wird, so dass das Ende des Referenzvektors innerhalb der Raumvektordiagrammgrenzen der um den Ursprung rotierenden Umlaufbahn liegt,
- wenn der ermittelte Abweichungswert ungerade ist, das Dreieck state 1 ermittelt wird, wenn er doppelt ist, das Dreieck state 2 ermittelt wird,
- in Abhängigkeit von der Anfangsposition des Referenzvektors bestimmt wird, welche Art von unterem Dreieck des Typs "1.type" ausgewählt wird, um das Ende des Referenzspannungsvektors in der neuen Umlaufbahn zu platzieren,
- im Falle der Bestimmung des Dreiecks state 1 die $t_x'$- und $t_y'$-Perioden der Vektoren $V_x'$ und $V_y'$ unter Verwendung der folgenden Gleichungen berechnet werden,

$$t_y' = \frac{T_s \left[ (s-1)t_y - \left( t_x + t_y - T_s \right) I_{int} \right]}{t_x + t_y + (s-2)T_s}$$

oder

$$t_y' = \frac{T_s\left[\left((s-1)-I_{int}\right)\left(I'-I_{int}\right)-\left(\left(II'-II_{int}\right)-1\right)I_{int}\right]}{\left(II'-II_{int}\right)+\left(I'-I_{int}\right)+(s-2)}$$

für Sektor 1

$$t_x' = T_s - t_y'$$

$$t_y' = \frac{T_s\left[(s-1)t_y-\left(t_x+t_y-T_s\right)II_{int}\right]}{t_x+t_y+(s-2)T_s}$$

oder

$$t_y' = \frac{T_s\left[\left((s-1)-II_{int}\right)\left(II'-II_{int}\right)-\left(\left(III'-III_{int}\right)-1\right)II_{int}\right]}{\left(III'-III_{int}\right)+\left(II'-II_{int}\right)+(s-2)}$$

für Sektor 2

$$t_x' = T_s - t_y'$$

$$t_y' = \frac{T_s\left[(s-1)t_y-\left(t_x+t_y-T_s\right)III_{int}\right]}{t_x+t_y+(s-2)T_s}$$

oder

$$t_y' = \frac{T_s\left[\left((s-1)-III_{int}\right)\left(III'-III_{int}\right)-\left(\left(I'-I_{int}\right)-1\right)III_{int}\right]}{\left(I'-I_{int}\right)+\left(III'-III_{int}\right)+(s-2)}$$

für Sektor 3

$$t_x' = T_s - t_y'$$

$$t_y' = \frac{T_s\left[(s-1)t_y-\left(t_x+t_y-T_s\right)I_{int}\right]}{t_x+t_y+(s-2)T_s}$$

oder

$$t_y' = \frac{T_s\left[\left((s-1)-I_{int}\right)\left(I'-I_{int}\right)-\left(\left(II'-II_{int}\right)-1\right)I_{int}\right]}{\left(II'-II_{int}\right)+\left(I'-I_{int}\right)+(s-2)}$$

für Sektor 4

$$t_x' = T_s - t_y'$$

$$t_x' = T_s - t_y'$$

$$t_y' = \frac{T_s\left[(s-1)t_y - (t_x + t_y - T_s)II_{int}\right]}{t_x + t_y + (s-2)T_s}$$

oder

$$t_y' = \frac{T_s\left[((s-1)-II_{int})(II'-II_{int}) - ((III'-III_{int})-1)II_{int}\right]}{(III'-III_{int}) + (II'-II_{int}) + (s-2)}$$

für Sektor 5 $t_x' = T_s - t_y'$

$$t_y' = \frac{T_s\left[(s-1)t_y - (t_x + t_y - T_s)III_{int}\right]}{t_x + t_y + (s-2)T_s}$$

oder

$$t_y' = \frac{T_s\left[((s-1)-III_{int})(III'-III_{int}) - ((I'-I_{int})-1)III_{int}\right]}{(I'-I_{int}) + (III'-III_{int}) + (s-2)}$$

für Sektor 6

$$t_x' = T_s - t_y'$$

- bei der Bestimmung des Dreiecks state 2 werden die $t_x$- und $t_y$-Perioden verglichen, und wenn $t_y'$ größer als $t_x'$ ist, wird das Dreieck 2.state.a ausgewählt,
- im Falle der Bestimmung des Dreiecks 2.state.a die $t_x'$- und $t_y'$-Perioden der Vektoren $V_x'$ und $V_y'$ unter Verwendung der folgenden Gleichungen berechnet werden:

$$t_y' = \frac{T_s\left[(s-1)t_y - (t_x + t_y)I_{int}\right]}{t_x + t_y + (s-1)T_s}$$

oder

$$t_y' = \frac{T_s\left[((s-1)-I_{int})(I'-I_{int}) - (II'-II_{int})I_{int}\right]}{(II'-II_{int}) + (I'-I_{int}) + (s-1)}$$

für Sektor 1

$$t_x' = T_s - t_y'$$

$$t_y' = \frac{T_s\left[(s-1)t_y - (t_x + t_y)II_{int}\right]}{t_x + t_y + (s-1)T_s}$$

oder

$$t_y' = \frac{T_s\left[\left((s-1)-II_{int}\right)\left(II'-II_{int}\right)-\left(III'-III_{int}\right)II_{int}\right]}{\left(III'-III_{int}\right)+\left(II'-II_{int}\right)+(s-1)}$$

für Sektor 2

$$t_x' = T_s - t_y'$$

$$t_y' = \frac{T_s\left[(s-1)t_y-\left(t_x+t_y\right)III_{int}\right]}{t_x+t_y+(s-1)T_s}$$

oder

$$t_y' = \frac{T_s\left[\left((s-1)-III_{int}\right)\left(III'-III_{int}\right)-\left(I'-I_{int}\right)III_{int}\right]}{\left(I'-I_{int}\right)+\left(III'-III_{int}\right)+(s-1)}$$

für Sektor 3

$$t_x' = T_s - t_y'$$

$$t_y' = \frac{T_s\left[(s-1)t_y-\left(t_x+t_y\right)I_{int}\right]}{t_x+t_y+(s-1)T_s}$$

oder

$$t_y' = \frac{T_s\left[\left((s-1)-I_{int}\right)\left(I'-I_{int}\right)-\left(II'-II_{int}\right)I_{int}\right]}{\left(II'-II_{int}\right)+\left(I'-I_{int}\right)+(s-1)}$$

für Sektor 4

$$t_x' = T_s - t_y'$$

$$t_y' = \frac{T_s\left[(s-1)t_y-\left(t_x+t_y\right)II_{int}\right]}{t_x+t_y+(s-1)T_s}$$

oder

$$t_y' = \frac{T_s\left[\left((s-1)-II_{int}\right)\left(II'-II_{int}\right)-\left(III'-III_{int}\right)II_{int}\right]}{\left(III'-III_{int}\right)+\left(II'-II_{int}\right)+(s-1)}$$

für Sektor 5

$$t_x' = T_s - t_y'$$

$$t_y' = \frac{T_s\left[(s-1)t_y - \left(t_x + t_y\right)III_{int}\right]}{t_x + t_y + (s-1)T_s}$$

oder

$$t_y' = \frac{T_s\left[\left((s-1) - III_{int}\right)\left(III' - III_{int}\right) - \left(I' - I_{int}\right)III_{int}\right]}{\left(I' - I_{int}\right) + \left(III' - III_{int}\right) + (s-1)}$$

für Sektor 6

$$t_x' = T_s - t_y'$$

- bei der Bestimmung des Dreiecks state 2 werden die $t_y$- und $t_x$-Perioden verglichen, und wenn $t_x$ größer als $t_y$ ist, wird das Dreieck 2.state.b ausgewählt,
- wenn das Dreieck 2.state.b bestimmt ist, werden die $t_x'$- und $t_y'$-Perioden der Vektoren $V_x'$ und $V_y'$ unter Verwendung der folgenden Gleichungen berechnet:

$$t_y' = \frac{T_s\left[(s-1)\left(T_s + t_y\right) - \left(t_x + t_y\right)\left(I_{int} - 1\right)\right]}{t_x + t_y + (s-1)T_s}$$

oder

$$t_y' = \frac{T_s\left[(s-1) + \left(s - I_{int}\right)\left(I' - I_{int}\right) - \left(II' - II_{int}\right)\left(I_{int} - 1\right)\right]}{\left(II' - II_{int}\right) + \left(I' - I_{int}\right) + (s-1)}$$

für Sektor 1

$$t_x' = T_s - t_y'$$

$$t_y' = \frac{T_s\left[(s-1)\left(T_s + t_y\right) - \left(t_x + t_y\right)\left(II_{int} - 1\right)\right]}{t_x + t_y + (s-1)T_s}$$

oder

$$t_y' = \frac{T_s\left[(s-1) + \left(s - II_{int}\right)\left(II' - II_{int}\right) - \left(III' - III_{int}\right)\left(II_{int} - 1\right)\right]}{\left(III' - III_{int}\right) + \left(II' - II_{int}\right) + (s-1)}$$

für Sektor 2

$$t_x' = T_s - t_y'$$

$$t_y' = \frac{T_s\left[(s-1)\left(T_s + t_y\right) - \left(t_x + t_y\right)\left(III_{int} - 1\right)\right]}{t_x + t_y + (s-1)T_s}$$

oder

$$t_y' = \frac{T_s\left[(s-1)+(s-III_{int})(III'-III_{int})-(I'-I_{int})(III_{int}-1)\right]}{(I'-I_{int})+(III'-III_{int})+(s-1)}$$

für Sektor 3

$$t_x' = T_s - t_y'$$

$$t_y' = \frac{T_s\left[(s-1)(T_s+t_y)-(t_x+t_y)(I_{int}-1)\right]}{t_x+t_y+(s-1)T_s}$$

oder

$$t_y' = \frac{T_s\left[(s-1)+(s-I_{int})(I'-I_{int})-(II'-II_{int})(I_{int}-1)\right]}{(II'-II_{int})+(I'-I_{int})+(s-1)}$$

für Sektor 4

$$t_x' = T_s - t_y'$$

$$t_y' = \frac{T_s\left[(s-1)(T_s+t_y)-(t_x+t_y)(II_{int}-1)\right]}{t_x+t_y+(s-1)T_s}$$

oder

$$t_y' = \frac{T_s\left[(s-1)+(s-II_{int})(II'-II_{int})-(III'-III_{int})(II_{int}-1)\right]}{(III'-III_{int})+(II'-II_{int})+(s-1)}$$

für Sektor 5

$$t_x' = T_s - t_y'$$

$$t_y' = \frac{T_s\left[(s-1)(T_s+t_y)-(t_x+t_y)(III_{int}-1)\right]}{t_x+t_y+(s-1)T_s}$$

oder

$$t_y' = \frac{T_s\left[(s-1)+(s-III_{int})(III'-III_{int})-(I'-I_{int})(III_{int}-1)\right]}{(I'-I_{int})+(III'-III_{int})+(s-1)}$$

für Sektor 6

$$t_x' = T_s - t_y'$$

- für den Zustand der Übermodulation ist eine Nullvektorperiode $t_z$ gleich Null,
- je nach dem Sektor, in dem sich der Referenzvektor im Raumvektordiagramm befindet, und je nach dem Typ des unteren Dreiecks, in dem sich der Endpunkt des Referenzvektors befindet, werden die für die Bildung der Phasenspannungen erforderlichen Schlüsselelementperioden berechnet und an den Mehrebenen-Wandler (103) angelegt.

4. Verfahren, das von einem Mehrebenen-Raumvektor-Modulationsregler (100) eines Systems durchgeführt wird, das einen Mehrebenen-Raumvektor-Modulationsregler (100) in Verbindung mit einem Mehrebenen-Wandler (300) umfasst, der den Mehrebenen-Wandler (300) so steuert, dass er eine Raumvektor-Modulation entsprechend seiner Position in einem Raumvektordiagramm (500) durchführt, das sechs Sektoren (15) in Form eines gleichseitigen Sechsecks, dessen Mittelpunkt mit dem Ursprung eines $\alpha$-$\beta$ (alpha-beta)-Koordinatensystems zusammenfällt, und in Form gleichseitiger Dreiecke und unterer Dreiecke (150) in einer gleichseitigen Dreiecksstruktur, die innerhalb der Sektoren (15) des Mehrebenen-Wandlers (300) mit der Niveaunummer "s" zwischen einem AC-Ende und einem DC-Ende vorgesehen ist, und einem rotierenden Referenzspannungsvektor (522) in einem dreiachsigen A,B,C-Dreiphasenkoordinatensystem, wobei das Verfahren die folgenden Schritte umfasst:

- jedem Sektor (15) des Raumvektordiagramms (500) ein Referenzzeiger und eine in einer Speichereinheit aufgezeichneter Sektorführung zugewiesen wird,
- die Zahl 1 für jeden Sektor (15) einem ersten unteren Dreieck (151) zugewiesen wird, dessen Ecke direkt mit dem Ursprung verbunden ist, und jedem unteren Dreieck (150) Zahlen zugewiesen werden, so dass den anderen unteren Dreiecken (150) aufeinanderfolgende Werte zugewiesen werden, ausgehend von dem ersten unteren Dreieck (151), das der Zahl 1 in einer ersten Richtung parallel zu einer ersten Kante folgt, die direkt mit dem ersten unteren Dreieck (151) verbunden ist, und aufsteigende aufeinanderfolgende Werte und eine in der Speichereinheit aufgezeichnete untere Dreiecksführung zugegriffen wird,
- V$\alpha$ und V$\beta$ die Komponenten des Referenzspannungsvektors (522) sind und V$_{dc}$ der Gesamtspannungswert ist, der an den Mehrebenen-Wandler angelegt wird, wobei

$$II_{sign} = (3V_\alpha - \sqrt{3}V_\beta)(s-1)\frac{1}{2}\frac{1}{V_{dc}},$$

$$III_{sign} = (3V_\alpha + \sqrt{3}V_\beta)(s-1)\frac{1}{2}\frac{1}{V_{dc}},$$

$$II' = \left| II_{sign} \right|,$$

$$III' = \left| III_{sign} \right|$$

- die Werte II' und III' aus den obigen Gleichungen berechnet werden und
- bestimmt wird, in welchem Sektor sich der Referenzspannungsvektor im Raumvektordiagramm befindet, wobei berücksichtigt wird, dass der Wert der V$\beta$-Komponente und die Werte II' und III' positiv oder negativ sind,

$$I' = \left| (\sqrt{3}V_\beta)(s-1)\frac{1}{V_{dc}} \right|,$$

$$\left| 3V_\alpha \right| > \left| \sqrt{3}V_\beta \right| \Rightarrow I' = \left| III_{sign} - II_{sign} \right|,$$

für die Sektoren I-III-IV-VI

$$\left|3V_\alpha\right| < \left|\sqrt{3}V_\beta\right| \Rightarrow I' = \left|III_{sign}\right| + \left|II_{sign}\right|$$

für die Sektoren II - V

- der Wert I' aus einer der Gleichungen bestimmt wird.
- die ganzzahligen Komponenten der Werte I', II' und III' als $I_{int}$, $II_{int}$, $III_{int}$ bestimmt werden,
- sie bezieht sich auf die Folge, in der jede Zeile des Sektors nach der zunehmenden Anzahl der Dreiecke geordnet ist, die die erste Kante direkt berühren,

für die Sektoren 1 und 4

$$\text{Dreiecksnummer=first\_triangle } [II_{int}] + III_{int} + I_{int} - II_{int},$$

für die Sektoren 2 und 5

$$\text{Dreiecksnummer=first\_triangle } [III_{int}] + I_{int} + I_{int} - III_{int},$$

für die Sektoren 3 und 6

$$\text{Dreiecksnummer=first\_triangle } [I_{int}] + II_{int} + I_{int} - I_{int},$$

unter Verwendung der obigen Gleichungen wird die dem unteren Dreieck, in dem sich das Ende des Referenzspannungsvektors befindet, zugewiesene Nummer bestimmt; es umfasst ferner die folgenden Schritte, um festzustellen, ob der Wandler im Bereich der linearen Modulation oder im Bereich der Übermodulation arbeitet:

- bestimmt wird, ob der $II_{int}$-Wert für Sektor 1 und Sektor 4, der $III_{int}$-Wert für Sektor 2 und Sektor 5, der $I_{int}$-Wert für Sektor 3 und Sektor 6 gleich dem (s-2)-Wert sind oder nicht,
- falls gleich, ein Abweichungswert bestimmt wird, der sich von der Nummer von first_triangle[$II_{int}$] für Sektor 1 und 4, der Nummer von first_triangle[$III_{int}$] für Sektor 2 und 5, der Nummer von first-triangle[$I_{int}$] für Sektor 3 und 6 einer dem bestimmten unteren Dreieck zugeordneten Nummer unterscheidet,
- falls gleich, ein Abweichungswert bestimmt wird, der sich von der Nummer von first_triangle[$II_{int}$+1]-1)] für Sektor 1 und 4, der Nummer von first_triangle[$III_{int}$+1]-1)] für Sektor 2 und 5, der Nummer von first_triangle[$I_{int}$+1]-1)] für Sektor 3 und 6 der dem bestimmten unteren Dreieck zugeordneten Nummer unterscheidet,
- die Übermodulationsoperation bestimmt wird, wenn der Abweichungswert eine positive Ganzzahl ist, und die lineare Modulationsoperation bestimmt wird, wenn der Abweichungswert Null oder eine negative Ganzzahl ist;

und es außerdem die folgenden Schritte umfasst:

- der untere Dreieckstyp als Typ 1 oder Typ 2 bestimmt wird, je nachdem, ob first_triangle [$I_{int}$], first_triangle [$II_{int}$] und first_triangle [$III_{int}$] gerade bzw. ungerade sind, entsprechend dem Sektor, in dem sich der Referenzspannungsvektor befindet, wenn eine Operation im linearen Modulationsbereich stattfindet,
- $T_s$ die Gesamtperiode unter Berücksichtigung des Sektors ist, in dem sich der Referenzspannungswert befindet, wenn der untere Dreieckstyp als Typ 1 bestimmt wurde,

$$t_x = \left(II' - II_{int}\right)T_s$$

Für Sektor 1

$$t_y = \left(I' - I_{int}\right)T_s \qquad '$$

$$t_x = \left( III' - III_{int} \right) T_s$$

Für Sektor 2

$$t_y = \left( II' - II_{int} \right) T_s$$

$$t_x = \left( I' - I_{int} \right) T_s$$

Für Sektor 3

$$t_y = \left( III' - III_{int} \right) T_s$$

$$t_x = \left( II' - II_{int} \right) T_s$$

Für Sektor 4

$$t_y = \left( I' - I_{int} \right) T_s$$

$$t_x = \left( III' - III_{int} \right) T_s$$

Für Sektor 5

$$t_y = \left( II' - II_{int} \right) T_s$$

$$t_x = \left( I' - I_{int} \right) T_s$$

Für Sektor 6

$$t_y = \left( III' - III_{int} \right) T_s$$

gemäß den obigen Formeln die Übertragungsperiode von Schlüsselelementen, die den Mehrebenen-Wandler (300) bilden, bestimmt wird, die $t_x$- und $t_y$-Vektorperioden der Vektoren $V_x$ und $V_y$, die die nächstgelegenen Vektoren zu dem unteren Dreieck sind, in dem sich der Referenzspannungsvektor befindet, berechnet,

5. Verfahren nach Anspruch 4, umfassend die folgenden Schritte:

- für den Fall, dass das Dreieck "2.type" ausgewählt wird, das Dreieck "2.type", "2.type.a" oder "2.type.b" bestimmt wird,
- wobei, wenn der Typ des unteren Dreiecks als der 2.type.a bestimmt wird, unter Berücksichtigung des Sektors, in dem sich der Referenzspannungsvektor befindet, $T_s$ die Gesamtperiode ist,

$$t_x = \left( III' - III_{int} \right) T_s$$

Für Sektor 1

$$t_y = \left( II_{int} + 1 - II' \right) T_s$$

$$t_x = \left( I' - I_{int} \right) T_s$$

Für Sektor 2

$$t_y = \left( III_{int} + 1 - III' \right) T_s$$

$$t_x = \left( II' - II_{int} \right) T_s$$

Für Sektor 3

$$t_y = \left( I_{int} + 1 - I' \right) T_s$$

$$t_x = \left( III' - III_{int} \right) T_s$$

Für Sektor 4

$$t_y = \left( II_{int} + 1 - II' \right) T_s$$

$$t_x = \left( I' - I_{int} \right) T_s$$

Für Sektor 5

$$t_y = \left( III_{int} + 1 - III' \right) T_s$$

$$t_x = \left( II' - II_{int} \right) T_s$$

Für Sektor 6

$$t_y = \left( I_{int} + 1 - I' \right) T_s$$

- gemäß den obigen Formeln die Übertragungsperiode von Schlüsselelementen bestimmt wird, die $t_x$- und $t_y$-Vektorperioden der Vektoren $V_x$ und $V_y$, die die nächstgelegenen Vektoren zu dem unteren Dreieck sind, in dem sich der Referenzspannungsvektor befindet, berechnet,
- wobei, wenn der Typ des unteren Dreiecks als der 2.type.b bestimmt wird, unter Berücksichtigung des Sektors, in dem sich der Referenzspannungsvektor befindet, $T_s$ die Gesamtperiode ist,

$$t_x = \left( I_{int} + 1 - I' \right) T_s$$

$$t_y = \left( III' - III_{int} \right) T_s$$

für Sektor 1

$$t_x = \left( II_{int} + 1 - II' \right) T_s$$

$$t_y = \left( I' - I_{int} \right) T_s$$

für Sektor 2

$$t_x = \left( III_{int} + 1 - III' \right) T_s$$

$$t_y = \left( II' - II_{int} \right) T_s$$

für Sektor 3

$$t_x = \left( I_{tam} + 1 - I' \right) T_s$$

$$t_y = \left( III' - III_{int} \right) T_s$$

für Sektor 4

$$t_x = \left( II_{int} + 1 - II' \right) T_s$$

$$t_y = \left( I' - I_{int} \right) T_s$$

für Sektor 5

$$t_x = \left( III_{int} + 1 - III' \right) T_s$$

$$t_y = \left( II' - II_{int} \right) T_s$$

für Sektor 6
- gemäß den obigen Formeln die Übertragungsperiode von Schlüsselelementen bestimmt wird, die $t_x$- und $t_y$-Vektorperioden der Vektoren $V_x$ und $V_y$, die die nächstgelegenen Vektoren zu dem unteren Dreieck sind, in dem sich der Referenzspannungsvektor befindet, berechnet
- für den linearen Modulationszustand sie berechnet wird als $t_z = T_s - t_x - t_y$.

6. Verfahren nach Anspruch 4, umfassend die folgenden Schritte:

- wobei, wenn eine Operation in der Übermodulationsregion bestimmt wird, der Referenzvektor im Vektordiagramm neu platziert wird, so dass das Ende des Referenzvektors innerhalb der Raumvektordiagrammgrenzen der um den Ursprung rotierenden Umlaufbahn liegt,
- wenn der ermittelte Abweichungswert ungerade ist, das Dreieck state 1 ermittelt wird, wenn er doppelt ist, das Dreieck state 2 ermittelt wird,
- in Abhängigkeit von der Anfangsposition des Referenzvektors bestimmt wird, welche Art von unterem Dreieck des Typs "1.type" ausgewählt wird, um das Ende des Referenzspannungsvektors in der neuen Umlaufbahn zu platzieren,
- im Falle der Bestimmung des Dreiecks state 1 die $t_x$'- und $t_y$'-Perioden der Vektoren $V_x$' und $V_y$' unter Verwendung der folgenden Gleichungen berechnet werden,

$$t_y' = \frac{T_s \left[ (s-1)t_y - \left( t_x + t_y - T_s \right) I_{int} \right]}{t_x + t_y + (s-2)T_s}$$

Für Sektor 1 oder

$$t_y' = \frac{T_s\left[\left((s-1)-I_{int}\right)\left(I'-I_{int}\right)-\left((II'-II_{int})-1\right)I_{int}\right]}{(II'-II_{int})+(I'-I_{int})+(s-2)}$$

$$t_x' = T_s - t_y'$$

$$t_y' = \frac{T_s\left[(s-1)t_y-\left(t_x+t_y-T_s\right)II_{int}\right]}{t_x+t_y+(s-2)T_s}$$

Für Sektor 2 oder

$$t_y' = \frac{T_s\left[\left((s-1)-II_{int}\right)\left(II'-II_{int}\right)-\left((III'-III_{int})-1\right)II_{int}\right]}{(III'-III_{int})+(II'-II_{int})+(s-2)}$$

$$t_x' = T_s - t_y'$$

$$t_y' = \frac{T_s\left[(s-1)t_y-\left(t_x+t_y-T_s\right)III_{int}\right]}{t_x+t_y+(s-2)T_s}$$

Für Sektor 3 oder

$$t_y' = \frac{T_s\left[\left((s-1)-III_{int}\right)\left(III'-III_{int}\right)-\left((I'-I_{int})-1\right)III_{int}\right]}{(I'-I_{int})+(III'-III_{int})+(s-2)}$$

$$t_x' = T_s - t_y'$$

$$t_y' = \frac{T_s\left[(s-1)t_y-\left(t_x+t_y-T_s\right)I_{int}\right]}{t_x+t_y+(s-2)T_s}$$

Für Sektor 4 oder

$$t_y' = \frac{T_s\left[\left((s-1)-I_{int}\right)\left(I'-I_{int}\right)-\left((II'-II_{int})-1\right)I_{int}\right]}{(II'-II_{int})+(I'-I_{int})+(s-2)}$$

$$t_x' = T_s - t_y'$$

$$t_y' = \frac{T_s\left[(s-1)t_y-\left(t_x+t_y-T_s\right)II_{int}\right]}{t_x+t_y+(s-2)T_s}$$

Für Sektor 5 oder

$$t_y' = \frac{T_s\left[\left((s-1)-II_{int}\right)\left(II'-II_{int}\right)-\left(\left(III'-III_{int}\right)-1\right)II_{int}\right]}{\left(III'-III_{int}\right)+\left(II'-II_{int}\right)+\left(s-2\right)}$$

$$t_x' = T_s - t_y'$$

$$t_y' = \frac{T_s\left[(s-1)t_y-\left(t_x+t_y-T_s\right)III_{int}\right]}{t_x+t_y+\left(s-2\right)T_s}$$

Für Sektor 6 oder

$$t_y' = \frac{T_s\left[\left((s-1)-III_{int}\right)\left(III'-III_{int}\right)-\left(\left(I'-I_{int}\right)-1\right)III_{int}\right]}{\left(I'-I_{int}\right)+\left(III'-III_{int}\right)+\left(s-2\right)}$$

$$t_x' = T_s - t_y'$$

- bei der Bestimmung des Dreiecks state 2 werden die $t_x$- und $t_y$-Perioden verglichen, und wenn $t_y'$ größer als $t_x'$ ist, wird das Dreieck 2.state.a ausgewählt,
- im Falle der Bestimmung des Dreiecks 2.state.a die $t_x'$- und $t_y'$-Perioden der Vektoren $V_x'$ und $V_y'$ unter Verwendung der folgenden Gleichungen berechnet werden:

$$t_y' = \frac{T_s\left[(s-1)t_y-\left(t_x+t_y\right)I_{int}\right]}{t_x+t_y+\left(s-1\right)T_s}$$

Für Sektor 1 oder

$$t_y' = \frac{T_s\left[\left((s-1)-I_{int}\right)\left(I'-I_{int}\right)-\left(II'-II_{int}\right)I_{int}\right]}{\left(II'-II_{int}\right)+\left(I'-I_{int}\right)+\left(s-1\right)}$$

$$t_x' = T_s - t_y'$$

$$t_y' = \frac{T_s\left[(s-1)t_y-\left(t_x+t_y\right)II_{int}\right]}{t_x+t_y+\left(s-1\right)T_s}$$

Für Sektor 2 oder

$$t_y' = \frac{T_s\left[\left((s-1)-II_{int}\right)\left(II'-II_{int}\right)-\left(III'-III_{int}\right)II_{int}\right]}{\left(III'-III_{int}\right)+\left(II'-II_{int}\right)+\left(s-1\right)}$$

$$t_x{}' = T_s - t_y{}'$$

$$t_y{}' = \frac{T_s\left[(s-1)t_y - \left(t_x + t_y\right)III_{int}\right]}{t_x + t_y + (s-1)T_s}$$

Für Sektor 3 oder

$$t_y{}' = \frac{T_s\left[\left((s-1) - III_{int}\right)\left(III' - III_{int}\right) - \left(I' - I_{int}\right)III_{int}\right]}{\left(I' - I_{int}\right) + \left(III' - III_{int}\right) + (s-1)}$$

$$t_x{}' = T_s - t_y{}'$$

$$t_y{}' = \frac{T_s\left[(s-1)t_y - \left(t_x + t_y\right)I_{int}\right]}{t_x + t_y + (s-1)T_s}$$

Für Sektor 4 oder

$$t_y{}' = \frac{T_s\left[\left((s-1) - I_{int}\right)\left(I' - I_{int}\right) - \left(II' - II_{int}\right)I_{int}\right]}{\left(II' - II_{int}\right) + \left(I' - I_{int}\right) + (s-1)}$$

$$t_x{}' = T_s - t_y{}'$$

$$t_y{}' = \frac{T_s\left[(s-1)t_y - \left(t_x + t_y\right)II_{int}\right]}{t_x + t_y + (s-1)T_s}$$

Für Sektor 5 oder

$$t_y{}' = \frac{T_s\left[\left((s-1) - II_{int}\right)\left(II' - II_{int}\right) - \left(III' - III_{int}\right)II_{int}\right]}{\left(III' - III_{int}\right) + \left(II' - II_{int}\right) + (s-1)}$$

$$t_x{}' = T_s - t_y{}'$$

$$t_y{}' = \frac{T_s\left[(s-1)t_y - \left(t_x + t_y\right)III_{int}\right]}{t_x + t_y + (s-1)T_s}$$

Für Sektor 6 oder

$$t_y{}' = \frac{T_s\left[\left((s-1) - III_{int}\right)\left(III' - III_{int}\right) - \left(I' - I_{int}\right)III_{int}\right]}{\left(I' - I_{int}\right) + \left(III' - III_{int}\right) + (s-1)}$$

$$t_x{'} = T_s - t_y{'}$$

- bei der Bestimmung des Dreiecks state 2 werden die $t_y$- und $t_x$-Perioden verglichen, und wenn $t_x$ größer als $t_y$ ist, wird das Dreieck 2.state.b ausgewählt,
- Wenn das Dreieck 2.state.b bestimmt ist, werden die $t_x{'}$- und $t_y{'}$-Perioden der Vektoren $V_x{'}$ und $V_y{'}$ unter Verwendung der folgenden Gleichungen berechnet:

$$t_y{'} = \frac{T_s\left[(s-1)(T_s+t_y)-(t_x+t_y)(I_{int}-1)\right]}{t_x+t_y+(s-1)T_s}$$

Für Sektor 1 oder

$$t_y{'} = \frac{T_s\left[(s-1)+(s-I_{int})(I'-I_{int})-(II'-II_{int})(I_{int}-1)\right]}{(II'-II_{int})+(I'-I_{int})+(s-1)}$$

$$t_x{'} = T_s - t_y{'}$$

$$t_y{'} = \frac{T_s\left[(s-1)(T_s+t_y)-(t_x+t_y)(II_{int}-1)\right]}{t_x+t_y+(s-1)T_s}$$

Für Sektor 2 oder

$$t_y{'} = \frac{T_s\left[(s-1)+(s-II_{int})(II'-II_{int})-(III'-III_{int})(II_{int}-1)\right]}{(III'-III_{int})+(II'-II_{int})+(s-1)}$$

$$t_x{'} = T_s - t_y{'}$$

$$t_y{'} = \frac{T_s\left[(s-1)(T_s+t_y)-(t_x+t_y)(III_{int}-1)\right]}{t_x+t_y+(s-1)T_s}$$

Für Sektor 3 oder

$$t_y{'} = \frac{T_s\left[(s-1)+(s-III_{int})(III'-III_{int})-(I'-I_{int})(III_{int}-1)\right]}{(I'-I_{int})+(III'-III_{int})+(s-1)}$$

$$t_x{'} = T_s - t_y{'}$$

$$t_y{'} = \frac{T_s\left[(s-1)(T_s+t_y)-(t_x+t_y)(I_{int}-1)\right]}{t_x+t_y+(s-1)T_s}$$

Für Sektor 4 oder

$$t_y' = \frac{T_s\left[(s-1)+(s-I_{int})(I'-I_{int})-(II'-II_{int})(I_{int}-1)\right]}{(II'-II_{int})+(I'-I_{int})+(s-1)}$$

$$t_x' = T_s - t_y'$$

$$t_y' = \frac{T_s\left[(s-1)(T_s+t_y)-(t_x+t_y)(II_{int}-1)\right]}{t_x+t_y+(s-1)T_s}$$

Für Sektor 5 oder

$$t_y' = \frac{T_s\left[(s-1)+(s-II_{int})(II'-II_{int})-(III'-III_{int})(II_{int}-1)\right]}{(III'-III_{int})+(II'-II_{int})+(s-1)}$$

$$t_x' = T_s - t_y'$$

$$t_y' = \frac{T_s\left[(s-1)(T_s+t_y)-(t_x+t_y)(III_{int}-1)\right]}{t_x+t_y+(s-1)T_s}$$

Für Sektor 6 oder

$$t_y' = \frac{T_s\left[(s-1)+(s-III_{int})(III'-III_{int})-(I'-I_{int})(III_{int}-1)\right]}{(I'-I_{int})+(III'-III_{int})+(s-1)}$$

$$t_x' = T_s - t_y'$$

- für den Zustand der Übermodulation ist $t_z$ gleich Null,
- je nach dem Sektor, in dem sich der Referenzvektor im Raumvektordiagramm befindet, und je nach dem Typ des unteren Dreiecks, in dem sich der Endpunkt des Referenzvektors befindet, werden die für die Bildung der Phasenspannungen erforderlichen Schlüsselelementperioden berechnet und an den Mehrebenen-Wandler (103) angelegt.

## Revendications

1. Une méthode mise en œuvre par un contrôleur de modulation vectorielle spatiale à plusieurs niveaux (100) d'un système comprenant un contrôleur de modulation vectorielle spatiale à plusieurs niveaux (100) en liaison avec un convertisseur à plusieurs niveaux (300) contrôlant ledit convertisseur à plusieurs niveaux (300) afin d'effectuer une modulation vectorielle spatiale en fonction de sa position dans un diagramme vectoriel spatial (500) comprenant six secteurs (15) sous la forme d'un hexagone équilatéral dont le centre coïncide avec l'origine d'un système de coordonnées $\alpha$-$\beta$ (alpha-bêta) et sous la forme de triangles équilatéraux et de triangles inférieurs (150) dans une structure triangulaire équilatérale prévue à l'intérieur desdits secteurs (15) du convertisseur à plusieurs niveaux (300) avec le nombre de niveau « s » prévu entre une extrémité AC et une extrémité DC, et un vecteur de tension de référence rotatif (522) dans un système de coordonnées triphasé à trois axes A, B, C, la méthode comprenant les étapes suivantes:

- chaque secteur (15) du diagramme vectoriel spatial (500) se voit attribuer un pointeur de référence et à un guide de secteur enregistrés dans une unité de mémoire,

- le nombre 1 est attribué pour chaque secteur (15) à un premier triangle inférieur (151) dont le coin est directement connecté à l'origine, et chaque triangle inférieur (150) reçoit des nombres de telle sorte que les autres triangles inférieurs (150) se voient attribuer des valeurs successives à partir dudit premier triangle inférieur (151), en suivant le nombre 1 dans une première direction parallèle à un premier bord directement connecté au premier triangle inférieur (151), et en augmentant les valeurs consécutives, et un guide de triangle inférieur enregistré dans ladite unité de mémoire est accessible,

- $V\alpha$ et $V\beta$ sont les composantes dudit vecteur de tension de référence (522) et $V_{dc}$ est la valeur de tension totale appliquée au convertisseur à plusieurs niveaux,

dans lequel

$$II_{sign} = (3V_\alpha - \sqrt{3}V_\beta)(s-1)\frac{1}{2}\frac{1}{V_{dc}},$$

$$III_{sign} = (3V_\alpha + \sqrt{3}V_\beta)(s-1)\frac{1}{2}\frac{1}{V_{dc}},$$

$$II' = \left| II_{sign} \right|,$$

$$III' = \left| III_{sign} \right|$$

- les valeurs II' et III' sont calculées à partir des équations ci-dessus et

- il est déterminé dans quel secteur (15) le vecteur de tension de référence (15) se trouve dans le diagramme vectoriel spatial, en tenant compte du fait que la valeur de la composante $V\beta$ et les valeurs II' et III' sont positives ou négatives,

$$I' = \left| (\sqrt{3}V_\beta)(s-1)\frac{1}{V_{dc}} \right|,$$

$$\left| 3V_\alpha \right| > \left| \sqrt{3}V_\beta \right| \Rightarrow I' = \left| III_{sign} - II_{sign} \right|$$

Pour le secteur I-III-IV-VI

$$\left| 3V_\alpha \right| < \left| \sqrt{3}V_\beta \right| \Rightarrow I' = \left| III_{sign} \right| + \left| II_{sign} \right|$$

Pour le secteur II - V,

- la valeur I' est déterminée à partir de l'une des équations,

- les composantes entières des valeurs I', II' et III' sont déterminées comme $I_{int}$, $II_{int}$, $III_{int}$,

- un first_triangle[x] se réfère à une séquence dans laquelle chaque ligne du secteur est ordonnée selon les nombres croissants des premiers triangles qui sont en contact direct avec ledit premier bord,

pour le secteur 1 et 4

nombre de triangle= first_triangle $[I_{int}]$+ $III_{int}$ + $II_{int}$ - $I_{int}$,

pour le secteur 2 et 5

**81**

$$\text{nombre de triangle= first\_triangle } [II_{int}]+ III_{int} + I_{int} - II_{int},$$

pour le secteur 3 et 6

$$\text{nombre de triangle= first\_triangle } [III_{int}]+ II_{int} + I_{int} - III_{int},$$

en utilisant les équations ci-dessus, le nombre attribué au triangle inférieur (150) dans lequel se trouve le vecteur de tension de référence (522) est déterminé;
comprenant en outre les étapes suivantes pour déterminer si l'onduleur fonctionne dans la zone de modulation linéaire ou dans la zone de surmodulation:

- il est déterminé si la valeur $I_{int}$ pour le secteur 1 et le secteur 4, la valeur $II_{int}$ pour le secteur 2 et le secteur 5, la valeur $III_{int}$ pour le secteur 3 et le secteur 6 sont égales ou non à la valeur (s-2),
- si égal, une valeur d'écart différente du nombre de first_triangle[$I_{int}$] pour le secteur 1 et 4, du nombre de first_triangle[$II_{int}$] pour le secteur 2 et 5, du nombre de first_triangle[$III_{int}$] pour le secteur 3 et 6 d'un nombre attribué au triangle inférieur déterminé est déterminée,
- si non égal, une valeur d'écart différente du nombre de first triangle[$I_{int}$+1]-1)] pour le secteur 1 et 4, du nombre de first_triangle[$II_{int}$+1]-1)] pour le secteur 2 et 5, du nombre de first_triangle[$III_{int}$+1]-1)] pour le secteur 3 et 6 du nombre attribué au triangle inférieur déterminé est déterminée,
- l'opération de surmodulation est déterminée si la valeur de l'écart est un nombre entier positif et l'opération de modulation linéaire est déterminée si la valeur de l'écart est zéro ou un nombre entier négatif;

et comprenant en outre les étapes suivantes:

- le type de triangle inférieur est déterminé comme étant de type 1 ou de type 2 selon que first_triangle [$I_{int}$], the first_triangle [$II_{int}$] et first_triangle [$III_{int}$] sont pairs ou impairs, respectivement, en fonction du secteur où se trouve le vecteur de tension de référence s'il y a une opération dans la zone de modulation linéaire,
- $T_s$ est la période totale tenant compte du secteur où se trouve la valeur de tension de référence dans le cas où le type de triangle inférieur est déterminé comme étant de type 1,

$$t_x = \left( II' - II_{int} \right) T_s$$

$$t_y = \left( I' - I_{int} \right) T_s$$

Pour le secteur 1

$$t_x = \left( III' - III_{int} \right) T_s$$

$$t_y = \left( II' - II_{int} \right) T_s$$

pour le Secteur 2

$$t_x = \left( I' - I_{int} \right) T_s$$

$$t_y = \left( III' - III_{int} \right) T_s$$

pour le Secteur 3

$$t_x = \left( II' - II_{int} \right) T_s$$

$$t_y = \left( I' - I_{int} \right) T_s$$

pour le Secteur 4

$$t_x = \left( III' - III_{int} \right) T_s$$

$$t_y = \left( II' - II_{int} \right) T_s$$

pour le Secteur 5

$$t_x = \left( I' - I_{int} \right) T_s$$

$$t_y = \left( III' - III_{int} \right) T_s$$

pour le Secteur 6

selon les formules ci-dessus, la période de transmission des éléments clés formant le convertisseur à plusieurs niveaux (300) est déterminée, les périodes vectorielles $t_x$ et $t_y$ des vecteurs $V_x$ et $V_y$, qui sont les vecteurs les plus proches du triangle inférieur où se trouve le vecteur de tension de référence, sont calculées.

2. Une méthode selon la revendication 1, comprenant les étapes suivantes:

- si le triangle "2.type" est sélectionné, le triangle "2.type", "2.type.a" ou "2.type.b" est déterminé,
- si le type du triangle inférieur est déterminé comme le 2.type.a, compte tenu du secteur dans lequel se trouve le vecteur tension de référence, $T_s$ est la période totale,

$$t_x = \left( III' - III_{int} \right) T_s$$

$$t_y = \left( II_{int} + 1 - II' \right) T_s$$

pour le secteur 1

$$t_x = \left( I' - I_{int} \right) T_s$$

$$t_y = \left( III_{int} + 1 - III' \right) T_s$$

pour le secteur 2

$$t_x = \left( II' - II_{int} \right) T_s$$

$$t_y = \left( I_{int} + 1 - I' \right) T_s$$

pour le secteur 3

$$t_x = \left( III' - III_{int} \right) T_s$$

$$t_y = \left( II_{int} + 1 - II' \right) T_s$$

pour le secteur 4

$$t_x = \left( I' - I_{int} \right) T_s$$

$$t_y = \left( III_{int} + 1 - III' \right) T_s$$

pour le secteur 5

$$t_x = \left( II' - II_{int} \right) T_s$$

$$t_y = \left( I_{int} + 1 - I' \right) T_s$$

pour le secteur 6

- selon les formules ci-dessus, la période de transmission des éléments clés est déterminée, les périodes vectorielles $t_x$ et $t_y$ des vecteurs $V_x$ et $V_y$, qui sont les vecteurs les plus proches du triangle inférieur où se trouve le vecteur de tension de référence, sont calculées,
- si le type du triangle inférieur est déterminé comme le 2.type.b, compte tenu du secteur dans lequel se trouve le vecteur tension de référence, $T_s$ est la période totale,

$$t_x = \left( I_{int} + 1 - I' \right) T_s$$

$$t_y = \left( III' - III_{int} \right) T_s$$

pour le secteur 1

$$t_x = \left( II_{int} + 1 - II' \right) T_s$$

$$t_y = \left( I' - I_{int} \right) T_s$$

pour le secteur 2

$$t_x = \left( III_{int} + 1 - III' \right) T_s$$

$$t_y = \left( II' - II_{int} \right) T_s$$

pour le secteur 3

$$t_x = \left( I_{int} + 1 - I' \right) T_s$$

$$t_y = \left( III' - III_{int} \right) T_s$$

pour le secteur 4

$$t_x = \left( II_{int} + 1 - II' \right) T_s$$

$$t_y = \left( I' - I_{int} \right) T_s$$

pour le secteur 5

$$t_x = \left( III_{int} + 1 - III' \right) T_s$$

$$t_y = \left( II' - II_{int} \right) T_s$$

pour le secteur 5

- selon les formules ci-dessus, la période de transmission des éléments clés est déterminée, les périodes vectorielles $t_x$ et $t_y$ des vecteurs $V_x$ et $V_y$, qui sont les vecteurs les plus proches du triangle inférieur où se trouve le vecteur de tension de référence, sont calculées
- pour l'état de modulation linéaire, une période vectorielle zéro est calculée comme $t_z = T_s - t_x - t_y$.

**3.** Une méthode selon la revendication 1, comprenant les étapes suivantes:

- lorsqu'une opération dans la zone de surmodulation est déterminée, le vecteur de référence est repositionné dans le diagramme vectoriel de manière à ce que la pointe d'extrémité du vecteur de référence se trouve à l'intérieur des limites du diagramme vectoriel spatial de l'orbite tournant autour de l'origine,
- si la valeur d'écart déterminée est impaire, le triangle state 1 est déterminé, si elle est double, le triangle state 2 est déterminé,
- en fonction de la position initiale du vecteur de référence, il est déterminé quel type de triangle inférieur "1.type" sera sélectionné pour placer l'extrémité du vecteur de tension de référence sur la nouvelle orbite,
- en cas de détermination du triangle state 1, les périodes $t_x$' et $t_y$' des vecteurs $V_x$' et $V_y$' sont calculées à l'aide des équations suivantes,

$$t_y' = \frac{T_s \left[ (s-1) t_y - \left( t_x + t_y - T_s \right) I_{int} \right]}{t_x + t_y + (s-2) T_s}$$

ou

$$t_y' = \frac{T_s \left[ \left( (s-1) - I_{int} \right) \left( I' - I_{int} \right) - \left( \left( II' - II_{int} \right) - 1 \right) I_{int} \right]}{\left( II' - II_{int} \right) + \left( I' - I_{int} \right) + (s-2)}$$

pour le secteur 1

$$t_x' = T_s - t_y'$$

$$t_y' = \frac{T_s \left[ (s-1) t_y - \left( t_x + t_y - T_s \right) II_{int} \right]}{t_x + t_y + (s-2) T_s}$$

ou

$$t_y' = \frac{T_s \left[ \left( (s-1) - II_{int} \right) \left( II' - II_{int} \right) - \left( \left( III' - III_{int} \right) - 1 \right) II_{int} \right]}{\left( III' - III_{int} \right) + \left( II' - II_{int} \right) + (s-2)}$$

pour le secteur 2

$$t_x' = T_s - t_y'$$

$$t_y' = \frac{T_s\left[(s-1)t_y - \left(t_x + t_y - T_s\right)III_{int}\right]}{t_x + t_y + (s-2)T_s}$$

ou

$$t_y' = \frac{T_s\left[\left((s-1)-III_{int}\right)\left(III'-III_{int}\right)-\left(\left(I'-I_{int}\right)-1\right)III_{int}\right]}{\left(I'-I_{int}\right)+\left(III'-III_{int}\right)+(s-2)}$$

pour le secteur 3

$$t_x' = T_s - t_y'$$

$$t_y' = \frac{T_s\left[(s-1)t_y - \left(t_x + t_y - T_s\right)I_{int}\right]}{t_x + t_y + (s-2)T_s}$$

ou

$$t_y' = \frac{T_s\left[\left((s-1)-I_{int}\right)\left(I'-I_{int}\right)-\left(\left(II'-II_{int}\right)-1\right)I_{int}\right]}{\left(II'-II_{int}\right)+\left(I'-I_{int}\right)+(s-2)}$$

pour le secteur 4

$$t_x' = T_s - t_y'$$

$$t_y' = \frac{T_s\left[(s-1)t_y - \left(t_x + t_y - T_s\right)II_{int}\right]}{t_x + t_y + (s-2)T_s}$$

ou

$$t_y' = \frac{T_s\left[\left((s-1)-II_{int}\right)\left(II'-II_{int}\right)-\left(\left(III'-III_{int}\right)-1\right)II_{int}\right]}{\left(III'-III_{int}\right)+\left(II'-II_{int}\right)+(s-2)}$$

pour le secteur 5

$$t_x' = T_s - t_y'$$

$$t_y' = \frac{T_s\left[(s-1)t_y - \left(t_x + t_y - T_s\right)III_{int}\right]}{t_x + t_y + (s-2)T_s}$$

ou

86

$$t_y' = \frac{T_s\left[\left((s-1)-III_{int}\right)\left(III'-III_{int}\right)-\left((I'-I_{int})-1\right)III_{int}\right]}{\left(I'-I_{int}\right)+\left(III'-III_{int}\right)+(s-2)}$$

pour le secteur 6

$$t_x' = T_s - t_y'$$

- en cas de détermination du triangle state 2, les périodes $t_x$ et $t_y$ sont comparées et si $t_y'$ est supérieur à $t_x'$, le triangle 2.state.a est sélectionné,
- en cas de détermination du triangle 2.state.a, les périodes $t_x'$ et $t_y'$ des vecteurs $V_x'$ et $V_y'$ sont calculées à l'aide des équations suivantes:

$$t_y' = \frac{T_s\left[(s-1)t_y-\left(t_x+t_y\right)I_{int}\right]}{t_x+t_y+(s-1)T_s}$$

ou

$$t_y' = \frac{T_s\left[\left((s-1)-I_{int}\right)\left(I'-I_{int}\right)-\left(II'-II_{int}\right)I_{int}\right]}{\left(II'-II_{int}\right)+\left(I'-I_{int}\right)+(s-1)}$$

pour le secteur 1

$$t_x' = T_s - t_y'$$

$$t_y' = \frac{T_s\left[(s-1)t_y-\left(t_x+t_y\right)II_{int}\right]}{t_x+t_y+(s-1)T_s}$$

ou

$$t_y' = \frac{T_s\left[\left((s-1)-II_{int}\right)\left(II'-II_{int}\right)-\left(III'-III_{int}\right)II_{int}\right]}{\left(III'-III_{int}\right)+\left(II'-II_{int}\right)+(s-1)}$$

pour le secteur 2

$$t_x' = T_s - t_y'$$

$$t_y' = \frac{T_s\left[(s-1)t_y-\left(t_x+t_y\right)III_{int}\right]}{t_x+t_y+(s-1)T_s}$$

ou

$$t_y' = \frac{T_s\left[\left((s-1)-III_{int}\right)\left(III'-III_{int}\right)-\left(I'-I_{int}\right)III_{int}\right]}{\left(I'-I_{int}\right)+\left(III'-III_{int}\right)+(s-1)}$$

pour le secteur 3

$$t_x' = T_s - t_y'$$

$$t_y' = \frac{T_s\left[(s-1)t_y - (t_x + t_y)I_{int}\right]}{t_x + t_y + (s-1)T_s}$$

ou

$$t_y' = \frac{T_s\left[((s-1)-I_{int})(I'-I_{int}) - (II'-II_{int})I_{int}\right]}{(II'-II_{int}) + (I'-I_{int}) + (s-1)}$$

pour le secteur 4

$$t_x' = T_s - t_y'$$

$$t_y' = \frac{T_s\left[(s-1)t_y - (t_x + t_y)II_{int}\right]}{t_x + t_y + (s-1)T_s}$$

ou

$$t_y' = \frac{T_s\left[((s-1)-II_{int})(II'-II_{int}) - (III'-III_{int})II_{int}\right]}{(III'-III_{int}) + (II'-II_{int}) + (s-1)}$$

pour le secteur 5

$$t_x' = T_s - t_y'$$

$$t_y' = \frac{T_s\left[(s-1)t_y - (t_x + t_y)III_{int}\right]}{t_x + t_y + (s-1)T_s}$$

ou

$$t_y' = \frac{T_s\left[((s-1)-III_{int})(III'-III_{int}) - (I'-I_{int})III_{int}\right]}{(I'-I_{int}) + (III'-III_{int}) + (s-1)}$$

pour le secteur 6

$$t_x' = T_s - t_y'$$

- en cas de détermination du triangle state 2, les périodes $t_y$ et $t_x$ sont comparées et si $t_x$ est supérieur à $t_y$, le triangle 2.state.b est sélectionné,
- si le triangle 2.state.b est déterminé, les périodes $t_x'$ et $t_y'$ des vecteurs $V_x'$ et $V_y'$ sont calculées à l'aide des équations suivantes:

$$t_y{}' = \frac{T_s\left[(s-1)(T_s+t_y)-(t_x+t_y)(I_{int}-1)\right]}{t_x+t_y+(s-1)T_s}$$

ou

$$t_y{}' = \frac{T_s\left[(s-1)+(s-I_{int})(I'-I_{int})-(II'-II_{int})(I_{int}-1)\right]}{(II'-II_{int})+(I'-I_{int})+(s-1)}$$

pour le secteur 1

$$t_x{}' = T_s - t_y{}'$$

$$t_y{}' = \frac{T_s\left[(s-1)(T_s+t_y)-(t_x+t_y)(II_{int}-1)\right]}{t_x+t_y+(s-1)T_s}$$

ou

$$t_y{}' = \frac{T_s\left[(s-1)+(s-II_{int})(II'-II_{int})-(III'-III_{int})(II_{int}-1)\right]}{(III'-III_{int})+(II'-II_{int})+(s-1)}$$

pour le secteur 2

$$t_x{}' = T_s - t_y{}'$$

$$t_y{}' = \frac{T_s\left[(s-1)(T_s+t_y)-(t_x+t_y)(III_{int}-1)\right]}{t_x+t_y+(s-1)T_s}$$

ou

$$t_y{}' = \frac{T_s\left[(s-1)+(s-III_{int})(III'-III_{int})-(I'-I_{int})(III_{int}-1)\right]}{(I'-I_{int})+(III'-III_{int})+(s-1)}$$

pour le secteur 3

$$t_x{}' = T_s - t_y{}'$$

$$t_y{}' = \frac{T_s\left[(s-1)(T_s+t_y)-(t_x+t_y)(I_{int}-1)\right]}{t_x+t_y+(s-1)T_s}$$

ou

$$t_{y}' = \frac{T_{s}\left[(s-1)+(s-I_{int})(I'-I_{int})-(II'-II_{int})(I_{int}-1)\right]}{(II'-II_{int})+(I'-I_{int})+(s-1)}$$

pour le secteur 4

$$t_{x}' = T_{s} - t_{y}'$$

$$t_{y}' = \frac{T_{s}\left[(s-1)(T_{s}+t_{y})-(t_{x}+t_{y})(II_{int}-1)\right]}{t_{x}+t_{y}+(s-1)T_{s}}$$

ou

$$t_{y}' = \frac{T_{s}\left[(s-1)+(s-II_{int})(II'-II_{int})-(III'-III_{int})(II_{int}-1)\right]}{(III'-III_{int})+(II'-II_{int})+(s-1)}$$

pour le secteur 5

$$t_{x}' = T_{s} - t_{y}'$$

$$t_{y}' = \frac{T_{s}\left[(s-1)(T_{s}+t_{y})-(t_{x}+t_{y})(III_{int}-1)\right]}{t_{x}+t_{y}+(s-1)T_{s}}$$

ou

$$t_{y}' = \frac{T_{s}\left[(s-1)+(s-III_{int})(III'-III_{int})-(I'-I_{int})(III_{int}-1)\right]}{(I'-I_{int})+(III'-III_{int})+(s-1)}$$

pour le secteur 6

$$t_{x}' = T_{s} - t_{y}'$$

- pour l'état de surmodulation, une période vectorielle zéro $t_{z}$ est égale à zéro,
- en fonction du secteur dans lequel le vecteur de référence est situé dans le diagramme vectoriel spatial et en fonction du type de triangle inférieur dans lequel le point final du vecteur de référence est situé, les périodes de l'élément clé nécessaires à la formation des tensions de phase sont calculées et appliquées au convertisseur à plusieurs niveaux (103).

4. Une méthode mise en œuvre par un contrôleur de modulation vectorielle spatiale à plusieurs niveaux (100) d'un système comprenant un contrôleur de modulation vectorielle spatiale à plusieurs niveaux (100) en liaison avec un convertisseur à plusieurs niveaux (300) contrôlant ledit convertisseur à plusieurs niveaux (300) afin d'effectuer une modulation vectorielle spatiale en fonction de sa position dans un diagramme vectoriel spatial (500) comprenant six secteurs (15) sous la forme d'un hexagone équilatéral dont le centre coïncide avec l'origine d'un système de coordonnées α-β (alpha-bêta) et sous la forme de triangles équilatéraux et de triangles inférieurs (150) dans une structure triangulaire équilatérale prévue à l'intérieur desdits secteurs (15) du convertisseur à plusieurs niveaux (300) avec le nombre de niveau « s » prévu entre une extrémité AC et une extrémité DC, et un vecteur de tension de référence rotatif (522) dans un système de coordonnées triphasé à trois axes A, B, C, la méthode comprenant les étapes suivantes:

- chaque secteur (15) du diagramme vectoriel spatial (500) se voit attribuer un pointeur de référence et à un guide de secteur enregistrés dans une unité de mémoire,
- le nombre 1 est attribué pour chaque secteur (15) à un premier triangle inférieur (151) dont le coin est directement connecté à l'origine, et chaque triangle inférieur (150) reçoit des nombres de telle sorte que les autres triangles inférieurs (150) se voient attribuer des valeurs successives à partir dudit premier triangle inférieur (151), en suivant le nombre 1 dans une première direction parallèle à un premier bord directement connecté au premier triangle inférieur (151), et en augmentant les valeurs consécutives, et un guide de triangle inférieur enregistré dans ladite unité de mémoire est accessible,
- V$\alpha$ et V$\beta$ sont les composantes dudit vecteur de tension de référence (522) et V$_{dc}$ est la valeur de tension totale appliquée au convertisseur à plusieurs niveaux, dans lequel

$$II_{sign} = (3V_\alpha - \sqrt{3}V_\beta)(s-1)\frac{1}{2}\frac{1}{V_{dc}},$$

$$III_{sign} = (3V_\alpha + \sqrt{3}V_\beta)(s-1)\frac{1}{2}\frac{1}{V_{dc}},$$

$$II' = \left| II_{sign} \right|,$$

$$III' = \left| III_{sign} \right|$$

- les valeurs II' et the III' sont calculées à partir des équations ci-dessus et
- il est déterminé dans quel secteur le vecteur de tension de référence se trouve dans le diagramme vectoriel spatial, en tenant compte du fait que la valeur de la composante V$\beta$ et les valeurs II' et III' sont positives ou négatives,

$$I' = \left| (\sqrt{3}V_\beta)(s-1)\frac{1}{V_{dc}} \right|,$$

$$\left| 3V_\alpha \right| > \left| \sqrt{3}V_\beta \right| \Rightarrow I' = \left| III_{sign} - II_{sign} \right|,$$

pour le secteur I-III-IV-VI

$$\left| 3V_\alpha \right| < \left| \sqrt{3}V_\beta \right| \Rightarrow I' = \left| III_{sign} \right| + \left| II_{sign} \right|$$

pour le secteur II - V,
- la valeur I' est déterminée à partir de l'une des équations.
- les composantes entières des valeurs I', II' et III' sont déterminées comme I$_{int}$, II$_{int}$, III$_{int}$,
- il se réfère à la séquence dans laquelle chaque ligne du secteur est ordonnée selon le nombre croissant des triangles qui sont en contact direct avec ledit premier bord

pour le secteur 1 et 4

nombre de triangle=first_triangle [II$_{int}$]+ III$_{int}$ + I$_{int}$ − II$_{int}$,

pour le secteur 2 et 5

$$\text{nombre de triangle} = \text{first\_triangle} [\text{III}_{int}] + \text{I}_{int} + \text{I}_{int} - \text{III}_{int},$$

pour le secteur 3 et 6

$$\text{nombre de triangle} = \text{first\_triangle} [\text{I}_{int}] + \text{II}_{int} + \text{I}_{int} - \text{I}_{int},$$

en utilisant les équations ci-dessus, le nombre attribué au triangle inférieur dans lequel se trouve l'extrémité du vecteur de tension de référence est déterminé; comprenant en outre les étapes suivantes pour déterminer si le convertisseur fonctionne dans la zone de modulation linéaire ou dans la zone de surmodulation:

- il est déterminé si la valeur $\text{II}_{int}$ pour le secteur 1 et le secteur 4, la valeur $\text{III}_{int}$ pour le secteur 2 et le secteur 5, la valeur $\text{I}_{int}$ pour le secteur 3 et le secteur 6 sont égales ou non à la valeur (s-2),
- si égal, une valeur d'écart différente du nombre de first_triangle[$\text{II}_{int}$] pour le secteur 1 et 4, du nombre de first_triangle[$\text{III}_{int}$] pour le secteur 2 et 5, du nombre de first_triangle[$\text{I}_{int}$] pour le secteur 3 et 6 d'un nombre attribué au triangle inférieur déterminé est déterminée,
- si non égal, une valeur d'écart différente du nombre de first_triangle[$\text{II}_{int}$+1]-1)] pour le secteur 1 et 4, du nombre de first_triangle [$\text{III}_{int}$+1]-1)] pour le secteur 2 et 5, du nombre de first_triangle[$\text{I}_{int}$+1]-1)] pour le secteur 3 et 6 du nombre attribué au triangle inférieur déterminé est déterminée,
- l'opération de surmodulation est déterminée si la valeur de l'écart est un nombre entier positif et l'opération de modulation linéaire est déterminée si la valeur de l'écart est zéro ou un nombre entier négatif;

et comprenant en outre les étapes suivantes:

- le type de triangle inférieur est déterminé comme étant de type 1 ou de type 2 selon que first_triangle [$\text{I}_{int}$], the first_triangle [$\text{II}_{int}$] et first_triangle [$\text{III}_{int}$] sont pairs ou impairs, respectivement, en fonction du secteur où se trouve le vecteur de tension de référence s'il y a une opération dans la zone de modulation linéaire,
- $T_s$ est la période totale tenant compte du secteur où se trouve la valeur de tension de référence dans le cas où le type de triangle inférieur est déterminé comme étant de type 1,

$$t_x = \left( II' - II_{int} \right) T_s$$

Pour le secteur 1

$$t_y = \left( I' - I_{int} \right) T_s$$

$$t_x = \left( III' - III_{int} \right) T_s$$

Pour le secteur 2

$$t_y = \left( II' - II_{int} \right) T_s$$

$$t_x = \left( I' - I_{int} \right) T_s$$

Pour le secteur 3

$$t_y = \left( III' - III_{int} \right) T_s$$

$$t_x = \left( II' - II_{int} \right) T_s$$

Pour le secteur 4

$$t_y = \left(I' - I_{int}\right)T_s$$

$$t_x = \left(III' - III_{int}\right)T_s$$

Pour le secteur 5

$$t_y = \left(II' - II_{int}\right)T_s$$

$$t_x = \left(I' - I_{int}\right)T_s$$

Pour le secteur 6

$$t_y = \left(III' - III_{int}\right)T_s$$

selon les formules ci-dessus, la période de transmission des éléments clés formant le convertisseur à plusieurs niveaux (300) est déterminée, les périodes vectorielles $t_x$ et $t_y$ des vecteurs $V_x$ et $V_y$, qui sont les vecteurs les plus proches du triangle inférieur où se trouve le vecteur de tension de référence, sont calculées.

5. Une méthode selon la revendication 4, comprenant les étapes suivantes:

- si le triangle "2.type" est sélectionné, le triangle "2.type", "2.type.a" ou "2.type.b" est déterminé,
- si le type du triangle inférieur est déterminé comme le 2.type.a, compte tenu du secteur dans lequel se trouve le vecteur tension de référence, $T_s$ est la période totale,

$$t_x = \left(III' - III_{int}\right)T_s$$

Pour le secteur 1

$$t_y = \left(II_{int} + 1 - II'\right)T_s$$

$$t_x = \left(I' - I_{int}\right)T_s$$

Pour le secteur 2

$$t_y = \left(III_{int} + 1 - III'\right)T_s$$

$$t_x = \left(II' - II_{int}\right)T_s$$

Pour le secteur 3

$$t_y = \left(I_{int} + 1 - I'\right)T_s$$

$$t_x = \left(III' - III_{int}\right)T_s$$

Pour le secteur 4

$$t_y = \left( II_{int} + 1 - II' \right) T_s$$

$$t_x = \left( I' - I_{int} \right) T_s$$

Pour le secteur 5

$$t_y = \left( III_{int} + 1 - III' \right) T_s$$

$$t_x = \left( II' - II_{int} \right) T_s$$

Pour le secteur 6

$$t_y = \left( I_{int} + 1 - I' \right) T_s$$

- selon les formules ci-dessus, la période de transmission des éléments clés est déterminée, les périodes vectorielles $t_x$ et $t_y$ de vecteur $V_x$ et $V_y$, qui sont les vecteurs les plus proches du triangle inférieur où se trouve le vecteur de tension de référence, sont calculées,
- si le type du triangle inférieur est déterminé comme le 2.type.b, compte tenu du secteur dans lequel se trouve le vecteur tension de référence, $T_s$ est la période totale,

$$t_x = \left( I_{int} + 1 - I' \right) T_s$$

$$t_y = \left( III' - III_{int} \right) T_s$$

pour le secteur 1

$$t_x = \left( II_{int} + 1 - II' \right) T_s$$

$$t_y = \left( I' - I_{int} \right) T_s$$

pour le secteur 2

$$t_x = \left( III_{int} + 1 - III' \right) T_s$$

$$t_y = \left( II' - II_{int} \right) T_s$$

pour le secteur 3

$$t_x = \left( I_{tam} + 1 - I' \right) T_s$$

$$t_y = \left( III' - III_{int} \right) T_s$$

pour le secteur 4

$$t_x = \left( II_{int} + 1 - II' \right) T_s$$

$$t_y = \left( I' - I_{int} \right) T_s$$

pour le secteur 5

$$t_x = \left( III_{int} + 1 - III' \right) T_s$$

$$t_y = \left( II' - III_{int} \right) T_s$$

pour le secteur 6

- selon les formules ci-dessus, la période de transmission des éléments clés est déterminée, les périodes $t_x$ et $t_y$ des vecteurs $V_x$ et $V_y$, qui sont les vecteurs les plus proches du triangle inférieur où se trouve le vecteur de tension de référence, sont calculées,
- pour l'état de modulation linéaire, elle est calculée comme $t_z = T_s - t_x - t_y$.

6. Une méthode selon la revendication 4, comprenant les étapes suivantes:

- lorsqu'une opération dans la zone de surmodulation est déterminée, le vecteur de référence est repositionné dans le diagramme vectoriel de manière à ce que l'extrémité du vecteur de référence se trouve à l'intérieur des limites du diagramme vectoriel spatial de l'orbite tournant autour de l'origine,
- si la valeur d'écart déterminée est impaire, le triangle state 1 est déterminé, si elle est double, le triangle state 2 est déterminé,
- en fonction de la position initiale du vecteur de référence, il est déterminé quel type de triangle inférieur "1.type" sera sélectionné pour placer l'extrémité du vecteur de tension de référence sur la nouvelle orbite,
- en cas de détermination du triangle state 1, les périodes $t_x'$ et $t_y'$ des vecteurs $V_x'$ et $V_y'$ sont calculées à l'aide des équations suivantes,

$$t_y' = \frac{T_s \left[ (s-1)t_y - \left( t_x + t_y - T_s \right) I_{int} \right]}{t_x + t_y + (s-2)T_s}$$

Pour le secteur 1 ou

$$t_y' = \frac{T_s \left[ \left( (s-1) - I_{int} \right)\left( I' - I_{int} \right) - \left( \left( II' - II_{int} \right) - 1 \right) I_{int} \right]}{\left( II' - II_{int} \right) + \left( I' - I_{int} \right) + (s-2)}$$

$$t_x' = T_s - t_y'$$

$$t_y' = \frac{T_s \left[ (s-1)t_y - \left( t_x + t_y - T_s \right) II_{int} \right]}{t_x + t_y + (s-2)T_s}$$

Pour le secteur 2 ou

$$t_y' = \frac{T_s \left[ \left( (s-1) - II_{int} \right)\left( II' - II_{int} \right) - \left( \left( III' - III_{int} \right) - 1 \right) II_{int} \right]}{\left( III' - III_{int} \right) + \left( II' - II_{int} \right) + (s-2)}$$

$$t_x' = T_s - t_y'$$

$$t_y{}' = \frac{T_s\left[(s-1)t_y - \left(t_x + t_y - T_s\right)III_{int}\right]}{t_x + t_y + (s-2)T_s}$$

Pour le secteur 3 ou

$$t_y{}' = \frac{T_s\left[\left((s-1)-III_{int}\right)\left(III'-III_{int}\right) - \left((I'-I_{int})-1\right)III_{int}\right]}{(I'-I_{int}) + (III'-III_{int}) + (s-2)}$$

$$t_x{}' = T_s - t_y{}'$$

$$t_y{}' = \frac{T_s\left[(s-1)t_y - \left(t_x + t_y - T_s\right)I_{int}\right]}{t_x + t_y + (s-2)T_s}$$

Pour le secteur 4 ou

$$t_y{}' = \frac{T_s\left[\left((s-1)-I_{int}\right)\left(I'-I_{int}\right) - \left((II'-II_{int})-1\right)I_{int}\right]}{(II'-II_{int}) + (I'-I_{int}) + (s-2)}$$

$$t_x{}' = T_s - t_y{}'$$

$$t_y{}' = \frac{T_s\left[(s-1)t_y - \left(t_x + t_y - T_s\right)II_{int}\right]}{t_x + t_y + (s-2)T_s}$$

Pour le secteur 5 ou

$$t_y{}' = \frac{T_s\left[\left((s-1)-II_{int}\right)\left(II'-II_{int}\right) - \left((III'-III_{int})-1\right)II_{int}\right]}{(III'-III_{int}) + (II'-II_{int}) + (s-2)}$$

$$t_x{}' = T_s - t_y{}'$$

$$t_y{}' = \frac{T_s\left[(s-1)t_y - \left(t_x + t_y - T_s\right)III_{int}\right]}{t_x + t_y + (s-2)T_s}$$

Pour le secteur 6 ou

$$t_y{}' = \frac{T_s\left[\left((s-1)-III_{int}\right)\left(III'-III_{int}\right) - \left((I'-I_{int})-1\right)III_{int}\right]}{(I'-I_{int}) + (III'-III_{int}) + (s-2)}$$

$$t_x{}' = T_s - t_y{}'$$

- en cas de détermination du triangle state 2, les périodes $t_x$ et $t_y$ sont comparées et si $t_y$' est supérieur à $t_x$', le triangle 2.state.a est sélectionné,
- en cas de détermination du triangle 2.state.a, les périodes $t_x$' et $t_y$' des vecteurs $V_x$' et $V_y$' sont calculées à l'aide des équations suivantes:

$$t_y' = \frac{T_s\left[(s-1)t_y - (t_x + t_y)I_{int}\right]}{t_x + t_y + (s-1)T_s}$$

Pour le secteur 1 ou

$$t_y' = \frac{T_s\left[((s-1) - I_{int})(I' - I_{int}) - (II' - II_{int})I_{int}\right]}{(II' - II_{int}) + (I' - I_{int}) + (s-1)}$$

$$t_x' = T_s - t_y'$$

$$t_y' = \frac{T_s\left[(s-1)t_y - (t_x + t_y)II_{int}\right]}{t_x + t_y + (s-1)T_s}$$

Pour le secteur 2 ou

$$t_y' = \frac{T_s\left[((s-1) - II_{int})(II' - II_{int}) - (III' - III_{int})II_{int}\right]}{(III' - III_{int}) + (II' - II_{int}) + (s-1)}$$

$$t_x' = T_s - t_y'$$

$$t_y' = \frac{T_s\left[(s-1)t_y - (t_x + t_y)III_{int}\right]}{t_x + t_y + (s-1)T_s}$$

Pour le secteur 3 ou

$$t_y' = \frac{T_s\left[((s-1) - III_{int})(III' - III_{int}) - (I' - I_{int})III_{int}\right]}{(I' - I_{int}) + (III' - III_{int}) + (s-1)}$$

$$t_x' = T_s - t_y'$$

$$t_y' = \frac{T_s\left[(s-1)t_y - (t_x + t_y)I_{int}\right]}{t_x + t_y + (s-1)T_s}$$

Pour le secteur 4 ou

$$t_y' = \frac{T_s\left[\left((s-1)-I_{int}\right)\left(I'-I_{int}\right)-\left(II'-II_{int}\right)I_{int}\right]}{\left(II'-II_{int}\right)+\left(I'-I_{int}\right)+(s-1)}$$

$$t_x' = T_s - t_y'$$

$$t_y' = \frac{T_s\left[(s-1)t_y-\left(t_x+t_y\right)II_{int}\right]}{t_x+t_y+(s-1)T_s}$$

Pour le secteur 5 ou

$$t_y' = \frac{T_s\left[\left((s-1)-II_{int}\right)\left(II'-II_{int}\right)-\left(III'-III_{int}\right)II_{int}\right]}{\left(III'-III_{int}\right)+\left(II'-II_{int}\right)+(s-1)}$$

$$t_x' = T_s - t_y'$$

$$t_y' = \frac{T_s\left[(s-1)t_y-\left(t_x+t_y\right)III_{int}\right]}{t_x+t_y+(s-1)T_s}$$

Pour le secteur 6 ou

$$t_y' = \frac{T_s\left[\left((s-1)-III_{int}\right)\left(III'-III_{int}\right)-\left(I'-I_{int}\right)III_{int}\right]}{\left(I'-I_{int}\right)+\left(III'-III_{int}\right)+(s-1)}$$

$$t_x' = T_s - t_y'$$

- en cas de détermination du triangle state 2, les périodes $t_y$ et $t_x$ sont comparées et si $t_x$ est supérieur à $t_y$, le triangle 2.state.b est sélectionné,
- si le triangle 2.state.b est déterminé, les périodes $t_x'$ et $t_y'$ des vecteurs $V_x'$ et $V_y'$ sont calculées à l'aide des équations suivantes:

$$t_y' = \frac{T_s\left[(s-1)\left(T_s+t_y\right)-\left(t_x+t_y\right)\left(I_{int}-1\right)\right]}{t_x+t_y+(s-1)T_s}$$

Pour le secteur 1 ou

$$t_y' = \frac{T_s\left[(s-1)+\left(s-I_{int}\right)\left(I'-I_{int}\right)-\left(II'-II_{int}\right)\left(I_{int}-1\right)\right]}{\left(II'-II_{int}\right)+\left(I'-I_{int}\right)+(s-1)}$$

$$t_x' = T_s - t_y'$$

$$t_y{}' = \frac{T_s\left[(s-1)(T_s+t_y)-(t_x+t_y)(II_{int}-1)\right]}{t_x+t_y+(s-1)T_s}$$

Pour le secteur 2 ou

$$t_y{}' = \frac{T_s\left[(s-1)+(s-II_{int})(II'-II_{int})-(III'-III_{int})(II_{int}-1)\right]}{(III'-III_{int})+(II'-II_{int})+(s-1)}$$

$$t_x{}' = T_s - t_y{}'$$

$$t_y{}' = \frac{T_s\left[(s-1)(T_s+t_y)-(t_x+t_y)(III_{int}-1)\right]}{t_x+t_y+(s-1)T_s}$$

Pour le secteur 3 ou

$$t_y{}' = \frac{T_s\left[(s-1)+(s-III_{int})(III'-III_{int})-(I'-I_{int})(III_{int}-1)\right]}{(I'-I_{int})+(III'-III_{int})+(s-1)}$$

$$t_x{}' = T_s - t_y{}'$$

$$t_y{}' = \frac{T_s\left[(s-1)(T_s+t_y)-(t_x+t_y)(I_{int}-1)\right]}{t_x+t_y+(s-1)T_s}$$

Pour le secteur 4 ou

$$t_y{}' = \frac{T_s\left[(s-1)+(s-I_{int})(I'-I_{int})-(II'-II_{int})(I_{int}-1)\right]}{(II'-II_{int})+(I'-I_{int})+(s-1)}$$

$$t_x{}' = T_s - t_y{}'$$

$$t_y{}' = \frac{T_s\left[(s-1)(T_s+t_y)-(t_x+t_y)(II_{int}-1)\right]}{t_x+t_y+(s-1)T_s}$$

Pour le secteur 5 ou

$$t_y{}' = \frac{T_s\left[(s-1)+(s-II_{int})(II'-II_{int})-(III'-III_{int})(II_{int}-1)\right]}{(III'-III_{int})+(II'-II_{int})+(s-1)}$$

$$t_x{}' = T_s - t_y{}'$$

$$t_y\,' = \frac{T_s\left[(s-1)(T_s+t_y)-(t_x+t_y)(III_{int}-1)\right]}{t_x+t_y+(s-1)T_s}$$

Pour le secteur 6 ou

$$t_y\,' = \frac{T_s\left[(s-1)+(s-III_{int})(III'-III_{int})-(I'-I_{int})(III_{int}-1)\right]}{(I'-I_{int})+(III'-III_{int})+(s-1)}$$

$$t_x\,' = T_s - t_y\,'$$

- pour l'état de surmodulation, $t_z$ est égale à zéro,
- en fonction du secteur dans lequel le vecteur de référence est situé dans le diagramme vectoriel spatial et en fonction du type de triangle inférieur dans lequel le point final du vecteur de référence est situé, les périodes de l'élément clé nécessaires à la formation des tensions de phase sont calculées et appliquées au convertisseur à plusieurs niveaux (103).

FIGURE 1

FIGURE 1.2

FIGURE 2

102

FIGURE 3

FIGURE 4

FIGURE 5

FIGURE 5.2

FIGURE 5.3

FIGURE 6

FIGURE 7

FIGURE 8

FIGURE 9

FIGURE 10

FIGURE 11

FIGURE 12

FIGURE 13

FIGURE 14/27

FIGURE 15

EP 4 118 492 B1

FIGURE 16

FIGURE 17

FIGURE 18

FIGURE 19

FIGURE 20

FIGURE 21

FIGURE 22

FIGURE 23

FIGURE 24

EP 4 118 492 B1

FIGURE 25

FIGURE 26

FIGURE 27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7558089 B
- US 8976556 B
- US 9559610 B
- CN 101291118

### Non-patent literature cited in the description

- **SEO, J.H.** ; **CHOI, C.H.** ; **HYUN, D.S.** A New Simplified Space-Vector PWM Method for Three-level Inverters. *IEEE Transactions on Power Electronics*, 2001, vol. 4 (16), 545-550
- **HAN, Y.** ; **FAN, X.** ; **ZHAO, Z.** A New Flux Observer Based on Voltage Reconstruction for Three-Level DTC Inverter. *Power Electronics and Drive Systems (PEDS)*, 2011, 72-76
- **HU, L.** ; **WANG, H.** ; **DENG Y.** ; **HE, X.N.** A Simple SVPWM Algorithm for Multilevel Inverters. *IEEE 35th Annual Power Electronics Specialists Conference (PESC 04)*, 2004, 3476-3480
- **SONG, Q.** ; **LIU, W.** ; **YAN, G.** ; **CHEN, Y.** DSP-Based Universal Space Vector Modulator for Multilevel Voltage-source Inverters. *The 29th Annual Conference of the IEEE Industrial Electronics Society (IECON'03)*, 2003, 1727-1732
- **WAN, Y.** ; **JIANG J.** The Study of FPGA-based Three-Level SVM NPC Inverter. *IEEE 6th International Power Electronics and Motion Control Conference IPEMC '09*, 2009, 1470-1474
- **SHU, Z.** ; **TANG, J.** ; **LIAN, J.** An Efficient SVPWM Algorithm with Low Computational Overhead for Three-Phase Inverters. *IEEE Transactions on Power Electronics*, 2007, vol. 22 (5), 1797-1805
- **YANG, R.** ; **WANG, G.** ; **YU, Y.** A Fast Generalized Multilevel Voltage SVPWM Algorithm Based on Voltage Decomposition. *5th IEEE Conference on Industrial Electronics and Applications (ICIEA)*, 2010, 1220-1224
- **SHU, Z.** ; **DING, N.** ; **CHEN, J.** ; **ZHU, H.** ; **HE, X.** Multilevel SVPWM with DC-Link Capacitor voltage Balancing Control for Diode-Clamped Multilevel Converter Based STATCOM. *IEEE Transactions on Industrial Electronics*, 2013, vol. 5 (60), 1884-1896
- **TRABELSI, M.** ; **BEN-BRAHMIN, L.** ; **YOKOYAMA, T.** ; **KAWAMURA, A.** ; **KUROSAWA, R.** ; **YOSHINO T.** An Improved SVPWM Method for Multilevel Inverters. *15th International Power Electronics and Motion Control Conference (EPE/PEMC)*, 2012
- **GUPTA, A.K.** ; **KHAMBADKONE, A.M.** A Space Vector PWM Scheme for Multilevel Inverters Based on Two-Level Vector PWM. *IEEE Transactions on Industrial Applications*, 2006, vol. 53 (5), 1631-1639
- **ZHU, R.** ; **WU, X.** ; **TANG, Y.** Duty Cycle-Based Three-Level Space-Vector Pulse-Width-Modulation with Over modulation and Neutral-Point Balancing Capabilities for Three-Phase Neutral-Point Clamped Inverters. *IET Power Electronics*, 2015, vol. 10 (8), 1931-1940
- **HOLTZ, J.** ; **HOLTGEN, M.** ; **KRAH, J.O.** A Space Vector Modulator for the High-Switching Frequency Control of Three-Level SiC Inverters. *IEEE Transactions on Power Electronics*, 2013, vol. 29 (5), 2618-2626
- **SHINY, G.** ; **BAIJU,M.R.** A fractal based space vector PWM scheme for general n- level inverters. *The 2010 International Power Electronics Conference - ECCE ASIA*, 2010, 847-854
- A novel general space vector modulation algorithm for multilevel inverter based on imaginary coordination. **HOU,X.** ; **LI,Y.** ; **LIU,L.** The Fifth International Conference on Power Electronics and Drive Systems. PEDS, 2003, 392-396
- **MOHAMED,A.S.A.** ; **GOPINATH, A** ; **BAIJU,M.R.** A Simple Space Vector PWM Formation Scheme for Any General n-Level Inverter. *IEEE Transactions on Industrial Electronics*, 2009, vol. 56 (5), 1649-1656
- A simplified space vector pulse width modulation algorithm for five level diode clamping inverter. **LALILI,D.** ; **LOURCI,N.** ; **BERKOUK,E.M.** ; **BOUDJEMA,F.** ; **PETZOLDT,J.** ; **DALI,M.Y.** International Symposium on Power Electronics, Electrical Drives, Automation and Motion. SPEEDAM, 2006
- **SABAH,V.S.** ; **BABY,T.C.** ; **LALL,K.P.** ; **BALAMURUNGAN,M.** ; **SAHOO,S.K.** ; **CHITRA,A.** ; **KARTHIKEYAN,P.** ; **RAGLEND,I.J.** A simplified space vector pulse width modulation technique for multilevel inverter fed induction motor drive. *2015 International Conference on Circuits, Power and Computing Technologies*, 2015

- **ALONSO, O.** ; **MARROYO, L.** ; **SANCHIS, P.** A Generalized Methodology to Calculate Switching Periods and Regions in SVPWM Modulation of Multilevel Converters. *European Power Electron. and Drives Assoc.*, 2001
- **CELANOVIC, N.** ; **BOROYEVICH, D.** A Fast Space-Vector Modulation Algorithm for Multilevel Three Phase Converters. *IEEE Transactions on Industry Applications*, 2001, vol. 37 (2), 637-641
- **LAUTTAMUS,P.** ; **TUUSA,H.** Unified Space-Vector Modulation Scheme for Multilevel Inverters. *2007 Power Conversion Conference - Nagoya*, 2007, 1464-1471
- **YAO,W.** ; **HU,H.** ; **LU,Z.** Comparisons of Space-Vector Modulation and Carrier-Based Modulation of Multilevel Inverter. *IEEE Transactions on Power Electronics*, 2008, vol. 23 (1), 45-51
- **WEI,S.** ; **WU,B.** ; **LI, F.** ; **LIU,C.** A general space vector PWM control algorithm for multilevel inverters. *Eighteenth Annual IEEE Applied Power Electronics Conference and Exposition*, 09 February 2003, 562-568
- **WEI,S.** ; **WU,B.** ; **CHEUNG,R.** A novel SVM algorithm for reducing oscillations in cascaded H-bridge multi-level inverters. *IECON'03. 29th Annual Conference of the IEEE Industrial Electronics Society (IEEE Cat. No.03CH37468)*, 02 November 2003
- **CHAMARTHI PHANIKUMAR** ; **CHHETRI PAWAN** ; **AGARWAL VIVEK**. *Simplified Implementation Scheme for Space Vector Pulse Width Modulation of n-Level Inverter With Online Computation of Optimal Switching Pulse Durations*
- **A.M. MASSOUD** ; **S.J. FINNEY** ; **B.W. WILLIAMS**. *Systematic analytical-based generalised algorithm for multilevel space vector modulation with a fixed execution time*
- **KARTICK CHANDRA JANA** ; **SUJIT KUMAR BISWAS** ; **PARASURAM THAKURA**. *A Simple and Generalized Space Vector PWM Control of Cascaded H-Bridge Multilevel Inverters*
- **OVALLE ANDRES** ; **HERNANDEZ MIGUEL E** ; **RAMOS GUSTAVO A**. *A Flexible Nonorthogonal-Reference-Frame-Based SVPWM Framework for Multilevel Inverters*